# EUROPEAN PATENT APPLICATION

(11) **EP 4 474 427 A1**
(43) Date of publication of application: **11.12.2024**
(21) Application number: 23749710.2
(22) Date of filing: 30.01.2023
(51) Int. Cl.: C08L 79/04, B32B 27/42, C08G 73/06

(54) **POLYMER, COMPOSITION, CURED PRODUCT, LAMINATED BODY, AND ELECTRONIC COMPONENT**

(30) Priority: 01.02.2022 JP 2022013985
(71) Applicant: JSR Corporation, Tokyo 105-8640 (JP)
(72) Inventor: KADOTA Toshiaki, Tokyo 105-8640 (JP); IIZUKA Shunsuke, Tokyo 105-8640 (JP); OKAMOTO Koichi, Tokyo 105-8640 (JP); NISHINO Kenta, Tokyo 105-8640 (JP)
(74) Representative: TBK
(86) International application number: PCT/JP2023/002850
(87) International publication number: WO 2023/149394

(57) **Abstract**

One embodiment of the present invention relates to a polymer, a composition, a cured product, a laminated body, or an electronic component, wherein the composition including a polymer containing a repeating unit represented by Formula (1) set forth below. 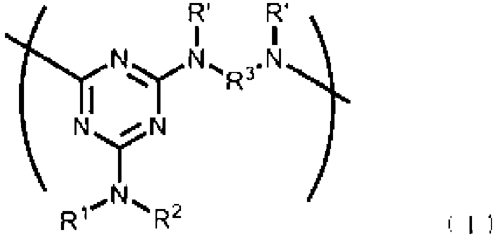 [In Formula (1), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, and -NR¹R² may be a nitrogen-containing heterocyclic group which has 5 to 20 ring-constituting atoms and in which R¹ and R² are bonded to each other.]

## Description

### Technical Field

One embodiment of the present invention relates to a polymer, a composition, a cured product, a laminated body, or an electronic component.

### Background Art

Along with the pursuit of, for example, miniaturization, multi-functionality, and high-speed communication of electronic devices, in recent years, there has been a demand for flexible printed wiring boards to be thinner and more flexible. For this reason, a technique of laminating resin films to form multilayer printed wiring boards is gaining attention as a manufacturing method of multilayer printed wiring boards. The multilayer printed wiring board formed by laminating resin films is known to have a weakness in mechanical strength, heat resistance, flame retardancy, and thermal conductivity as compared with a case of using a prepreg produced using a material such as glass cloth, and hence a technique for improving this weakness has been reported in recent years (e.g., refer to Patent Literature 1 to 3).

### Citation List

### Patent Literature

Patent Literature 1: JP H11-129399 A
Patent Literature 2: WO 2001/097582 A
Patent Literature 3: WO 2005/025857 A

### Summary of Invention

The addition of a curing agent such as an epoxy compound, a cyanate compound, or an acrylic compound, and/or an inorganic filler such as silica or alumina has been attempted for improving the mechanical strength, heat resistance, flame retardancy, and thermal conductivity, but the effect of the improvement has not been sufficient even by the addition of these.

Moreover, in the step of producing multilayer printed wiring boards, there may be a case where electronic component materials are required to be bonded together by using (a composition containing) a polymer, and in this case, it is also required that a polymer or a composition containing a polymer can be uniformly applied to a substrate (excellent in applicability), and that a layer obtained from the polymer or from the composition containing a polymer is required to have a high adhesion to a substrate.

However, conventional polymers such as the polymers described in the patent literature had insufficient solubility in a general-purpose solvent, these polymers or compositions containing these polymers were not able to be uniformly applied to a substrate (poor in applicability), and/or layers obtained from these polymers or from the compositions containing these polymers had insufficient adhesion to a substrate (hereinafter, it is also simply referred to as "adhesion to a substrate".)

One embodiment of the present invention provides a polymer which is excellent in heat resistance, is soluble in a general-purpose solvent, and also is excellent in applicability and adhesion to a substrate, and also provides a composition which is capable of forming a cured product (cured product layer) that is excellent in heat resistance and excellent in applicability and adhesion to a substrate.

### Solution to Problem

The present inventor has found that the problem can be solved by the following configuration example.

A configuration example of the present invention is as follows.
[1] A composition including a polymer containing a repeating unit represented by Formula (1) set forth below. 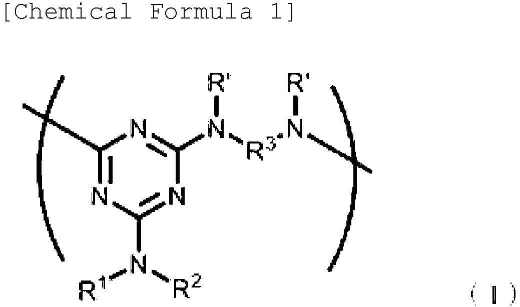 [In Formula (1), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, and -NR¹R² may be a nitrogen-containing heterocyclic group which has 5 to 20 ring-constituting atoms and in which R¹ and R² are bonded to each other.]
[2] The composition according to [1], wherein the polymer further contains a repeating unit represented by Formula (2) set forth below. 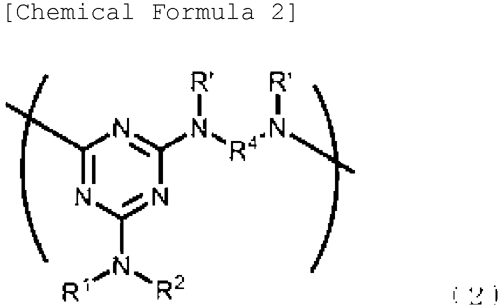 [In Formula (2), R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, R⁴ is a divalent aromatic hydrocarbon group having 6 to 30 carbon atoms, a divalent alicyclic hydrocarbon group having 5 to 20 carbon atoms, a divalent chain hydrocarbon group having 1 to 20 carbon atoms, a divalent group represented by -(R⁴¹-O)ₘ-, a divalent silicon-containing group, a group in which two or more groups selected from these groups are combined, a group in which at least a part of these groups is substituted with at least one selected from an oxygen atom, a nitrogen atom and a sulfur atom, or a group in which a part of these groups is substituted with a substituent, R⁴¹ is independently an alkylene having 2 to 4 carbon atoms, m is an integer in the range from 1 to 70, - NR¹R² may be a nitrogen-containing heterocyclic group which has 5 to 20 ring-constituting atoms and in which R¹ and R² are bonded to each other, -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.]
[3] The composition according to [1] or [2], further containing a curable compound (C).
[4] The composition according to any one of [1] to [3], further containing a curing aid (D).
[5] The composition according to any one of [1] to [4], further containing a solvent.
[6] The composition according to [3], wherein the curable compound (C) is at least one selected from the group consisting of epoxy compounds, cyanate ester compounds, vinyl compounds, silicone compounds, oxazine compounds, maleimide compounds, allyl compounds, oxetane compounds, methylol compounds, (meth)acrylic compounds, oxazoline compounds, and propargyl compounds.
[7] A cured product obtained by curing the composition according to any one of [1] to [6].
[8] A laminated body including a substrate and a cured product layer formed by using the composition according to any one of [1] to [6].
[9] An electronic component including the laminated body according to [8].
[10] A polymer containing a repeating unit represented by Formula (1) set forth below and a repeating unit represented by Formula (2) set forth below. 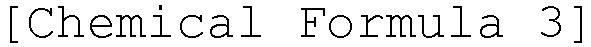 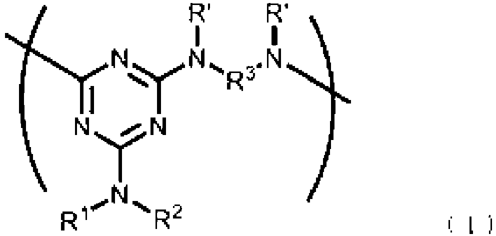 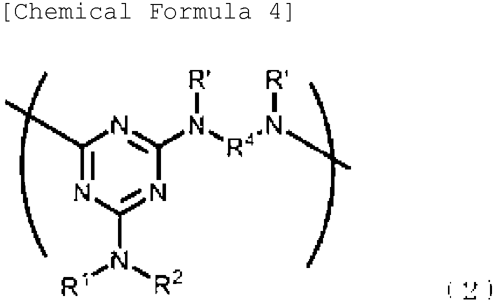 [In Formulae (1) and (2), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, R⁴ is a divalent aromatic hydrocarbon group having 6 to 30 carbon atoms, a divalent alicyclic hydrocarbon group having 5 to 20 carbon atoms, a divalent chain hydrocarbon group having 1 to 20 carbon atoms, a divalent group represented by -(R⁴¹-O)ₘ-, a divalent silicon-containing group, a group in which two or more groups selected from these groups are combined, a group in which at least a part of these groups is substituted with at least one selected from an oxygen atom, a nitrogen atom and a sulfur atom, or a group in which a part of these groups is substituted with a substituent, R⁴¹ is independently an alkylene having 2 to 4 carbon atoms, m is an integer in the range from 1 to 70, - NR¹R² may be a nitrogen-containing heterocyclic group which has 5 to 20 ring-constituting atoms and in which R¹ and R² are bonded to each other, -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.]
[11] A molded body obtained by molding the polymer according to [10].
[12] A laminated body including a substrate and a layer formed by using the polymer according to [10].
[13] An electronic component including the laminated body according to [12].
[14] A polymer containing a repeating unit represented by Formula (1) set forth below, or a polymer that contains a repeating unit represented by Formula (1) set forth below and a repeating unit represented by Formula (2) set forth below, and
   includes, at a terminal, at least one group selected from a phenolic hydroxyl group, an allyl group, a vinyl group, a (meth)acryloyl group, a maleimide group, a propargyl group, an ethynyl group, an aromatic hydrocarbon group, an aliphatic hydrocarbon group, or a heterocyclic group. 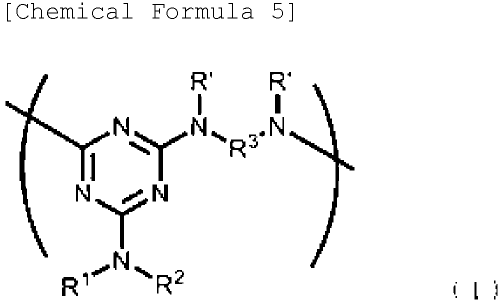 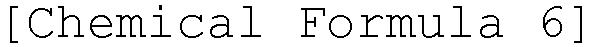 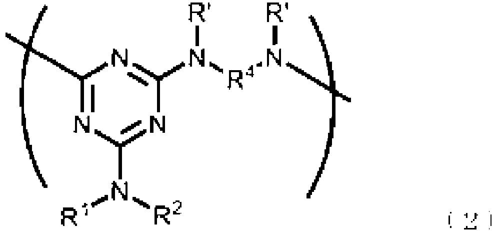
[In Formulae (1) and (2), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, R⁴ is a divalent aromatic hydrocarbon group having 6 to 30 carbon atoms, a divalent alicyclic hydrocarbon group having 5 to 20 carbon atoms, a divalent chain hydrocarbon group having 1 to 20 carbon atoms, a divalent group represented by -(R⁴¹-O)ₘ-, a divalent silicon-containing group, a group in which two or more groups selected from these groups are combined, a group in which at least a part of these groups is substituted with at least one selected from an oxygen atom, a nitrogen atom and a sulfur atom, or a group in which a part of these groups is substituted with a substituent, R⁴¹ is independently an alkylene having 2 to 4 carbon atoms, m is an integer in the range from 1 to 70, - NR¹R² may be a nitrogen-containing heterocyclic group which has 5 to 20 ring-constituting atoms and in which R¹ and R² are bonded to each other, -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.]

### Advantageous Effects of Invention

According to one embodiment of the present invention, it is possible to provide a polymer which is excellent in heat resistance, is soluble in a general-purpose solvent, and is excellent in applicability and adhesion to a substrate such as a copper substrate and/or a gold substrate.

Moreover, according to one embodiment of the present invention, it is possible to provide a composition which is capable of forming a cured product (cured product layer) that is excellent in heat resistance and excellent in applicability and adhesion to a substrate such as a copper substrate and/or a gold substrate.

### Brief Description of Drawings

Fig. 1 is a ¹H-NMR spectrum of a polymer obtained in Example 2.
Fig. 2 is a ¹H-NMR spectrum of a polymer obtained in Example 5.
Fig. 3 is a ¹H-NMR spectrum of a polymer obtained in Example 6.
Fig. 4 is a ¹H-NMR spectrum of a polymer obtained in Example 8.
Fig. 5 is a ¹H-NMR spectrum of a polymer obtained in Example 9.
Fig. 6 is a ¹H-NMR spectrum of a polymer obtained in Example 10.

### Description of Embodiments

Hereinafter, preferred embodiments according to the present invention will be described in detail. It should be understood that the present invention is not limited only to the embodiments described below, but also includes various modifications performed without alternating the gist of the present invention.

In the present specification, a numerical range described using "to" means including numerical values described before and after "to" as a lower limit value and an upper limit value.

### 1. Polymers and Compositions

A composition (hereinafter, it is also referred to as the "present composition".) according to an embodiment of the present invention contains a polymer (hereinafter, it is also referred to as "polymer (1)".) having a repeating unit represented by Formula (1) set forth below.

The polymer (1) contained in the present composition may be one kind or two or more kinds.

A polymer (hereinafter, it is also referred to as "polymer (2)".) according to an embodiment of the present invention contains a repeating unit represented by Formula (1) set forth below and a repeating unit represented by Formula (2) set forth below.

The polymer (2) may include another structural unit other than the repeating unit represented by Formula (1) and repeating unit represented by Formula (2) set forth below.

A polymer according to an embodiment of the present invention (hereinafter, it is also referred to as "polymer (3)".) is a polymer including, at a terminal of the polymer (1) or of the polymer (2), at least one group (hereinafter, also referred to as a "terminal group") selected from a phenolic hydroxyl group, an allyl group, a vinyl group, a (meth)acryloyl group, a maleimide group, a propargyl group, an ethynyl group, an aromatic hydrocarbon group, an aliphatic hydrocarbon group, or a heterocyclic group.

The polymer (3) may include another structural unit other than the repeating unit represented by Formula (1), the repeating unit represented by Formula (2) set forth below and the terminal group.

Note that, in the present invention, the term "terminal" refers to at least one terminal of the main chain (the longest chain) of the polymer, and for example, -NR¹R² in Formula (1) set forth below is not referred to as a terminal.

Hereinafter, the polymers (1) to (3) are also collectively referred to as "the present polymer".

The repeating unit represented by Formula (1) set forth below is bonded to, for example, another structural unit set forth below or a terminal structure. Examples of the terminal structure include a structure derived from a raw material (e.g., a compound represented by Formula (A) or (B) set forth below) forming a repeating unit represented by Formula (1) set forth below or a structure derived from an end-capping agent set forth below, and the terminal structure is preferably the terminal group.

The repeating unit represented by Formula (2) set forth below is bonded to, for example, the repeating unit represented by Formula (1) set forth below or the terminal structure. Examples of the terminal structure include a structure derived from a raw material (e.g., a compound represented by Formula (A) or (C) set forth below) forming a repeating unit represented by Formula (2) set forth below or a structure derived from an end-capping agent set forth below, and the terminal structure is preferably the terminal group.

### <<Present polymer>>

The present polymer is a polymer having a repeating unit represented by Formula (1) set forth below. Because of that the present polymer has a repeating unit represented by Formula (1) set forth below, it is possible to obtain a polymer that is excellent in solubility in a solvent, and an applicability to a substrate, for example, can be improved.

Two or more kinds of the present polymer can be used for the purpose of adjusting solubility in the undermentioned solvents, solubility with other components, and various physical properties of various compositions. 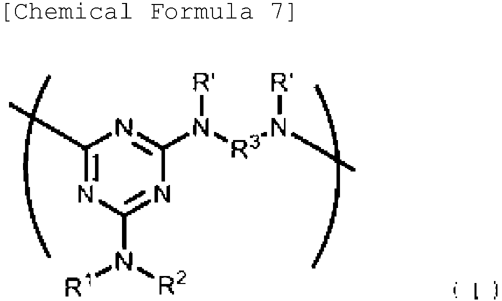 [In Formula (1), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, and -NR¹R² may be a nitrogen-containing heterocyclic group which has 5 to 20 ring-constituting atoms and in which R¹ and R² are bonded to each other.]

Examples of the structure derived from a dimer diamine which is unsubstituted or substituted with a substituent include a divalent dimer acid type diamine residue derived from a dimer acid type diamine or group in which at least a part of the divalent dimer acid type diamine residue is substituted with a substituent.

The dimer acid type diamine refers to a diamine obtained by substituting two terminal carboxylic acid groups (-COOH) of a dimer acid (cyclic and acyclic dimer acids (containing 36 carbon atoms as main components) obtained as dimers of unsaturated fatty acids (18 carbon atoms)) with, for example, a primary aminomethyl group (-CH₂-NH₂) or an amino group (-NH₂).

The dimer acid type diamine is a compound derived from a dimer acid which is a dimer of an unsaturated fatty acid such as oleic acid (see, for example, JP H09-12712 A), and various known dimer diamines can be used without particular limitation.

A dimer acid is a known dibasic acid obtained by an intermolecular polymerization reaction of an unsaturated fatty acid, the industrial production process thereof is almost standardized in the industry, and the dimer acid is usually obtained by dimerizing an unsaturated fatty acid having 11 to 22 carbon atoms with, for example, a clay catalyst. The dimer acid industrially obtained usually contain a dibasic acid having 36 carbon atoms obtained by dimerizing an unsaturated fatty acid having 18 carbon atoms such as oleic acid or linoleic acid as main component, and contains a predetermined amount of a monomer acid (18 carbon atoms), a trimer acid (54 carbon atoms), or another polymerized fatty acid having 20 to 54 carbon atoms depending on the degree of purification. In an embodiment of the present invention, it is preferable to use a dimer acid in which a dimer acid content has been increased to 90% by weight or more by molecular distillation. In addition, in a case where a double bond remains after the dimerization reaction, in an embodiment of the present invention, one obtained by reducing the degree of unsaturation by subjecting to a hydrogenation reaction is also included in the dimer acid.

When the present polymer has a structure derived from a dimer acid type diamine, characteristics derived from a skeleton of the dimer acid, specifically, the following characteristics can be imparted to the present polymer. Since the dimer acid type diamine is an aliphatic compound including a plurality of isomeric structures of macromolecules having a molecular weight of about 500 to 620, a molar volume of the present polymer can be increased, and the amount of polar groups in the present polymer can be relatively reduced. It is considered that such characteristics of the dimer acid type diamine contribute to improving dielectric properties while suppressing decrease in heat resistance of the present polymer. In addition, in a case where the dimer acid type diamine has two freely moving hydrophobic chains having 4 to 9 carbon atoms and two chain aliphatic amino groups having a length close to that of 8 to 10 carbon atoms, a structure derived from the dimer acid type diamine not only imparts flexibility to the present polymer, but also allows the present polymer to have a non-objective chemical structure and/or a non-planar chemical structure. Therefore, it is considered that the solubility of the present polymer can be improved.

Hereinafter, a non-limiting structural formula of the dimer diamine will be shown. In the following formulas, m + n = 6 to 17, p + q = 8 to 19, and a wavy line part means a carbon-carbon single bond or a carbon-carbon double bond.

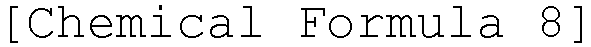

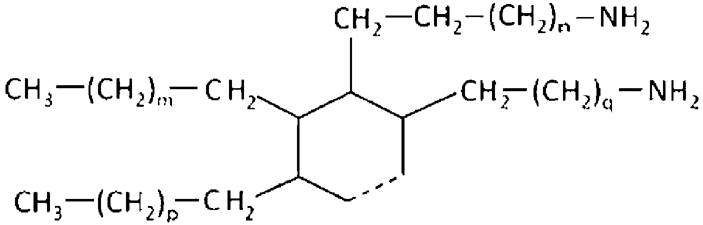

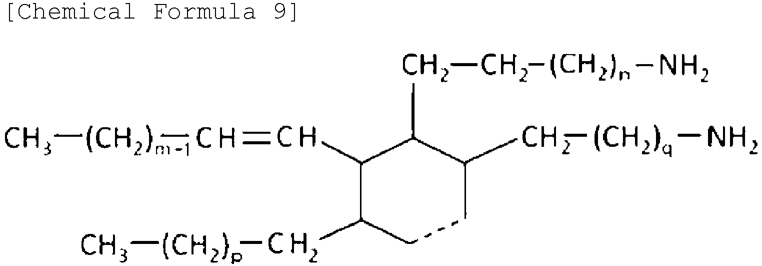

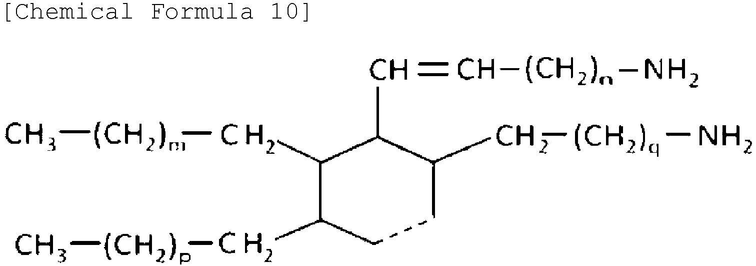

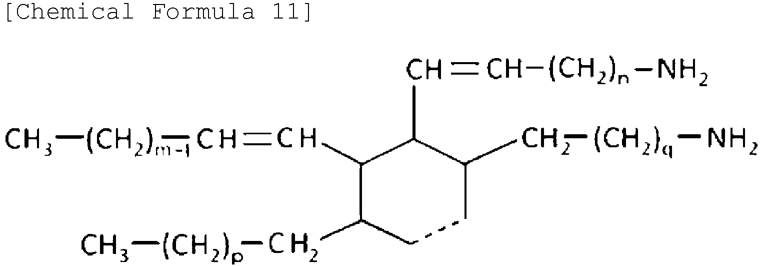

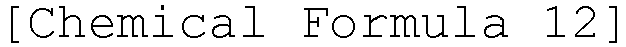

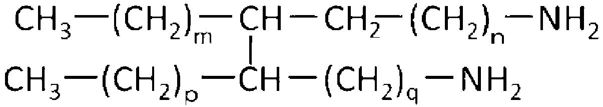

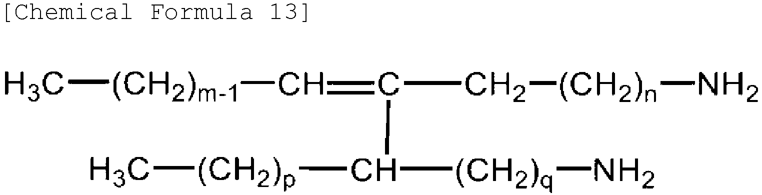

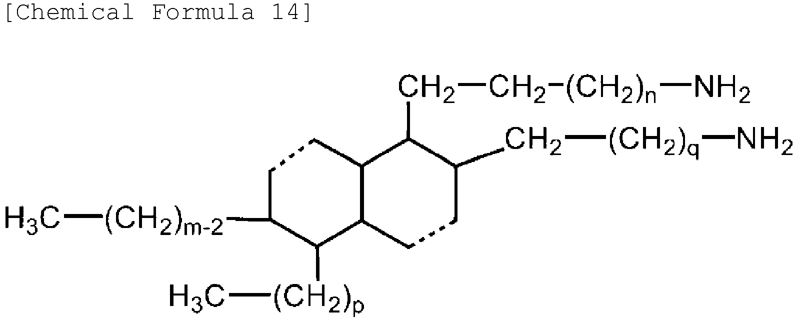

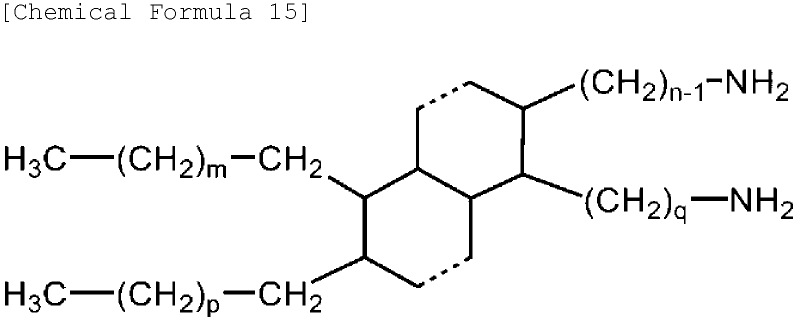

The dimer diamine is preferably a compound having an active hydrogen equivalent ranging from 130 to 140 and an amine value ranging from 180 to 220.

Examples of commercially available products of the dimer acid type diamine include Versamine 551 (manufactured by BASF Japan Ltd.) and Versamine 552 (manufactured by Cognis Japan Ltd.; a hydrogenated product of Versamine 551), Priamine 1075 and Priamine 1074 (both are manufactured by Croda Japan K.K.)

Examples of the halogen atom in R', R¹, and R² include a fluorine atom, a chlorine atom, a bromine atom, and an iodine atom.

Examples of the hydrocarbon group having 1 to 20 carbon atoms in R', R¹, and R² include a monovalent chain hydrocarbon group, a monovalent alicyclic hydrocarbon group, a monovalent aromatic hydrocarbon group, or a group obtained by combining these groups. Examples of the heterocyclic aliphatic group having 3 to 20 carbon atoms in R', R¹, and R² include a monovalent heterocyclic aliphatic group. Examples of the heterocyclic aromatic group having 3 to 20 carbon atoms in R', R¹, and R² include a monovalent heterocyclic aromatic group. These hydrocarbon group, the heterocyclic aliphatic group, and the heterocyclic aromatic group may be substituted with a substituent.

Examples of the monovalent chain hydrocarbon group include alkyl groups such as a methyl group, an ethyl group, an n-propyl group, an isopropyl group, an n-butyl group, an isobutyl group, a sec-butyl group, a tert-butyl group, and an n-pentyl group; alkenyl groups such as an ethenyl group, a propenyl group, a butenyl group, and a pentenyl group; and alkynyl groups such as an ethynyl group, a propynyl group, a butynyl group, and a pentynyl group.

Examples of the monovalent alicyclic hydrocarbon group include monocyclic cycloalkyl groups such as a cyclopropyl group, a cyclobutyl group, a cyclopentyl group, and a cyclohexyl group; polycyclic cycloalkyl groups such as a norbornyl group and an adamantyl group; monocyclic cycloalkenyl groups such as a cyclopropenyl group, a cyclobutenyl group, a cyclopentenyl group, and a cyclohexenyl group; and polycyclic cycloalkenyl groups such as a norbornenyl group.

Examples of the monovalent aromatic hydrocarbon group include aryl groups such as a phenyl group, a tolyl group, a xylyl group, a naphthyl group, and an anthryl group.

Examples of the group obtained by combining these groups include aralkyl groups such as a benzyl group, a phenethyl group, a phenylpropyl group, and a naphthylmethyl group.

Examples of the monovalent heterocyclic aliphatic group include monovalent heterocyclic aliphatic groups derived from heterocyclic rings such as aziridine, oxirane, thiirane, azetidine, oxetane, thietane, pyrrolidine, pyrroline, piperidine, piperideine, pyrazolidine, imidazolidine, imidazoline, tetrahydrofuran, dioxolane, tetrahydrothiophene, piperazine, tetrahydropyran, dioxane, and morpholine.

Examples of the monovalent heterocyclic aromatic group include monovalent heterocyclic aromatic groups derived from heterocyclic rings such as thiophene, benzothiophene, pyrrole, imidazole, pyrazole, pyridine, pyrazine, pyrimidine, pyridazine, triazine, indole, isoindole, benzimidazole, purine, indazole, quinoline, isoquinoline, quinoxaline, quinazoline, cinnoline, furan, benzofuran (1-benzofuran), isobenzofuran (2-benzofuran), oxazole, isoxazole, thiazole, benzoxazole, benzisoxazole, and benzothiazole.

The substituent in the structure derived from the dimer diamine and the substituents in the hydrocarbon group having 1 to 20 carbon atoms and the heterocyclic aromatic group having 3 to 20 carbon atoms in R', R¹, and R² are not particularly limited, and examples thereof include an allyl group, a halogen atom, a monovalent hydrocarbon group having 1 to 20 carbon atoms, a monovalent halogenated hydrocarbon group having 1 to 20 carbon atoms, an alkoxy group having 1 to 20 carbon atoms, an alkoxycarbonyl group having 1 to 20 carbon atoms, an alkylthio group having 1 to 20 carbon atoms, a nitro group, a cyano group, a carboxy group, a sulfonic acid group, a phosphonic acid group, a phosphoric acid group, a hydroxy group, primary to tertiary amino groups, a salt of a carboxy group, a salt of a sulfonic acid group, a salt of a phosphonic acid group, a salt of a phosphoric acid group, a salt of a hydroxy group, and salts of primary to tertiary amino groups.

R' is preferably a hydrogen atom.

In a case where R¹ or R² is a hydrogen atom, an interaction occurs due to a hydrogen bond between the hydrogen atom and a heteroatom site or a triazine ring site other than a nitrogen atom to which the hydrogen atom is bonded, and the polymer tends to have relatively excellent adhesion to the base material, which is preferable.

Regarding the repeating unit represented by Formula (1), the number of repeating units is not particularly limited, and is, for example, 2 to 10,000, preferably 3 to 8,000, and more preferably 3 to 5,000.

The lower limit of the content ratio of the repeating unit represented by Formula (1) set forth above in the present polymer is preferably 5% by mole, more preferably 150 by mole, still more preferably 25% by mole, and particularly preferably 40% by mole. The upper limit of the content ratio is preferably 95% by mole, more preferably 90% by mole, still more preferably 85% by mole, and particularly preferably 80% by mole.

The present polymer in which the content ratio of the repeating unit represented by Formula (1) set forth above is within the abovementioned range is excellent in solubility in a solvent and excellent in applicability to a substrate, for example.

The polymer (1) may contain another structural unit other than the repeating unit represented by Formula (1) set forth above.

The other structural unit is not particularly limited as long as the effect of the present invention is not impaired, but it is preferable to contain a repeating unit particularly represented by Formula (2) set forth below.

Moreover, the polymer (2) contains a repeating unit represented by the Formula (1) set forth above and a repeating unit represented by Formula (2) set forth below. 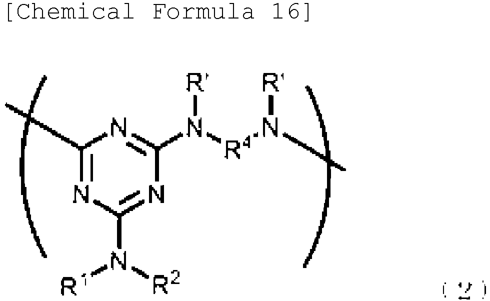 [In Formula (2), R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, R⁴ is a divalent aromatic hydrocarbon group having 6 to 30 carbon atoms, a divalent alicyclic hydrocarbon group having 5 to 20 carbon atoms, a divalent chain hydrocarbon group having 1 to 20 carbon atoms, a divalent group represented by -(R⁴¹-O)ₘ-, a divalent silicon-containing group, a group in which two or more groups selected from these groups are combined, a group in which at least a part of these groups is substituted with at least one selected from an oxygen atom, a nitrogen atom and a sulfur atom, or a group in which a part of these groups is substituted with a substituent, R⁴¹ is independently an alkylene having 2 to 4 carbon atoms, m is an integer in the range from 1 to 70, - NR¹R² may be a nitrogen-containing heterocyclic group which has 5 to 20 ring-constituting atoms and in which R¹ and R² are bonded to each other, -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.]

Specific examples of R', R¹, and R² in Formula (2) are the same as the specific examples of R', R¹, and R² in Formula (1) set forth above.

In a case where R⁴ is a divalent aromatic hydrocarbon group having 6 to 30 carbon atoms, a group in which the aromatic hydrocarbon group and one or more other groups are combined, a group in which at least a part of these groups is substituted with at least one selected from an oxygen atom, a nitrogen atom and a sulfur atom, or a group in which a part of these groups is substituted with a substituent, examples of the structure of the -NR'-R⁴-NR'- moiety in Formula (2) include structures derived from the following compounds. 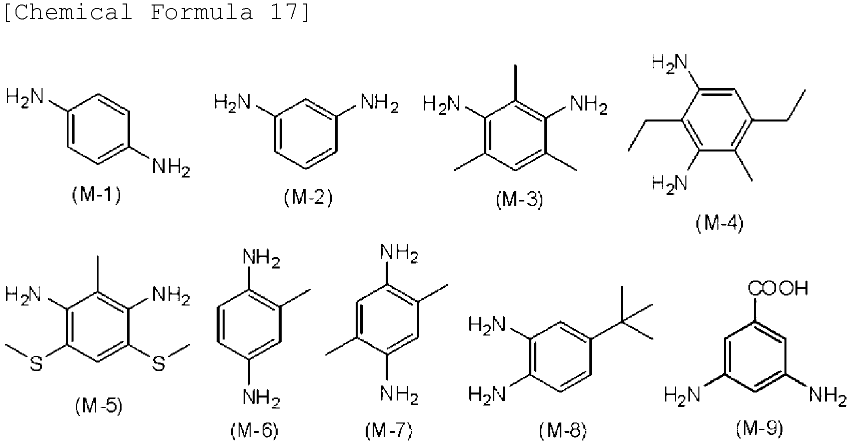 [A line "-" of which no bond destination is written out in the formula represents a methyl group.] 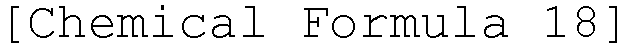 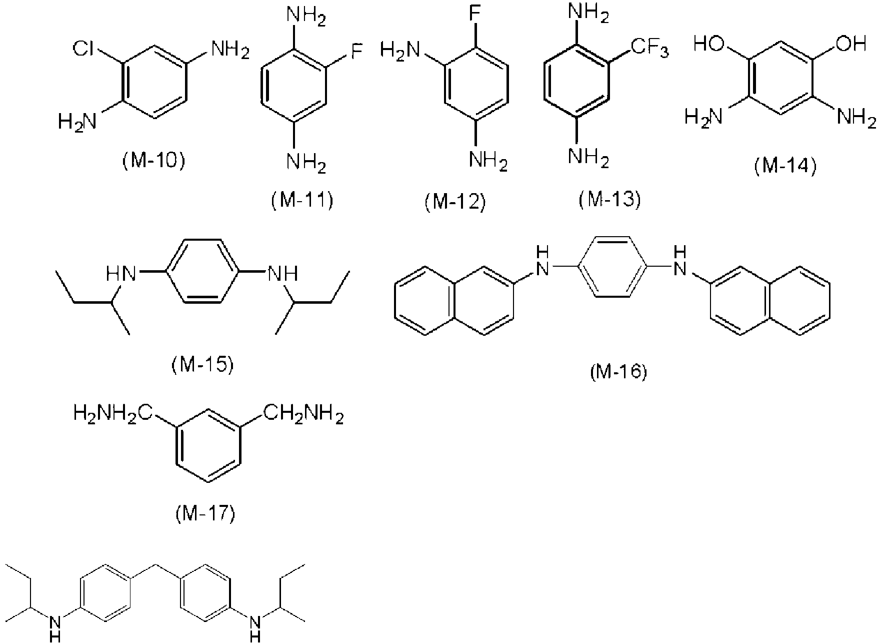 [A line "-" of which no bond destination is written out in the formula represents a methyl group.] 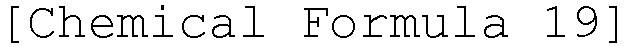 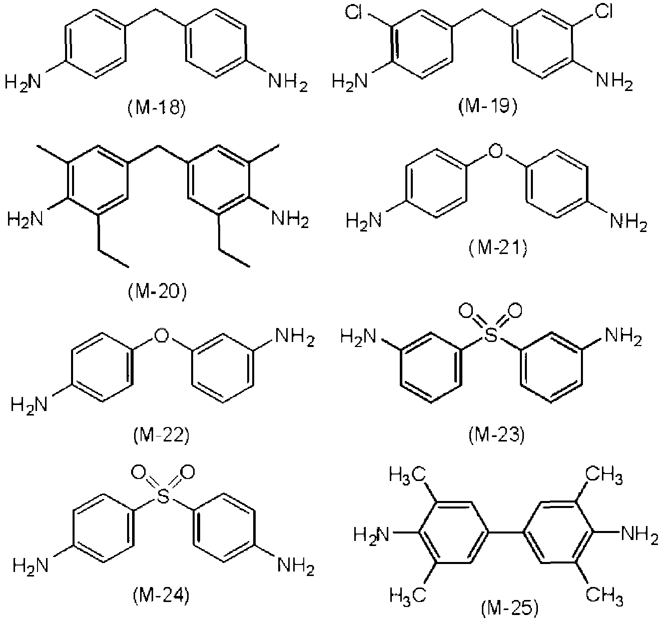 [A line "-" of which no bond destination is written out in the formula represents a methyl group.] 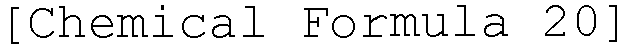 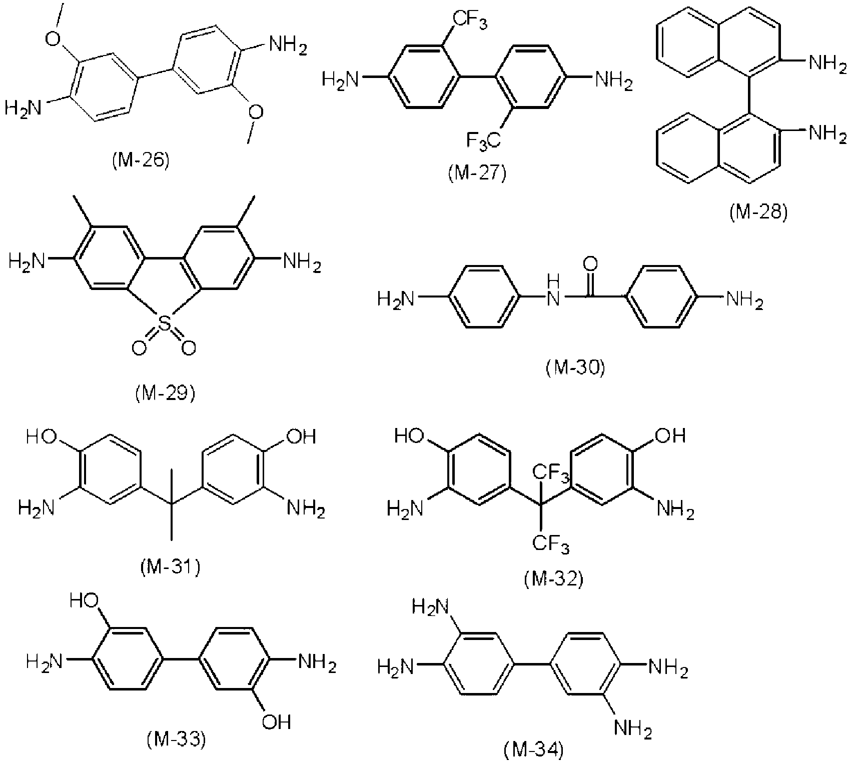 [A line "-" of which no bond destination is written out in the formula represents a methyl group.] 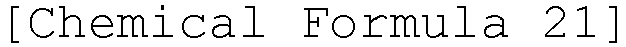 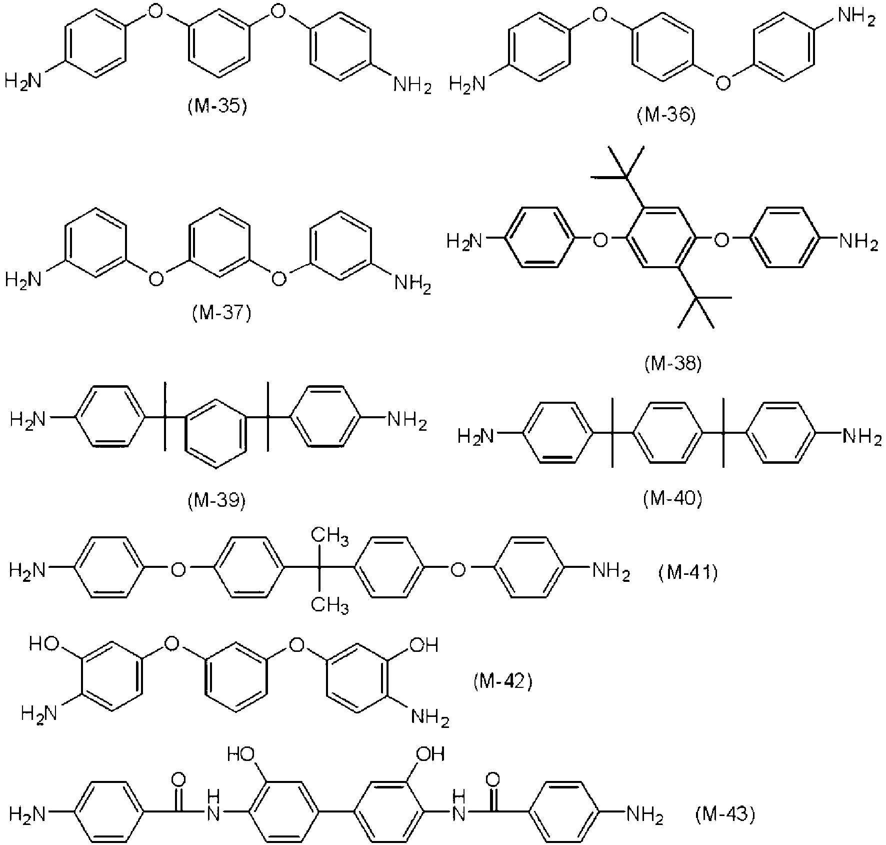 [A line "-" of which no bond destination is written out in the formula represents a methyl group.] 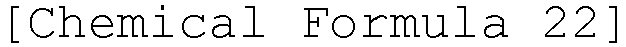 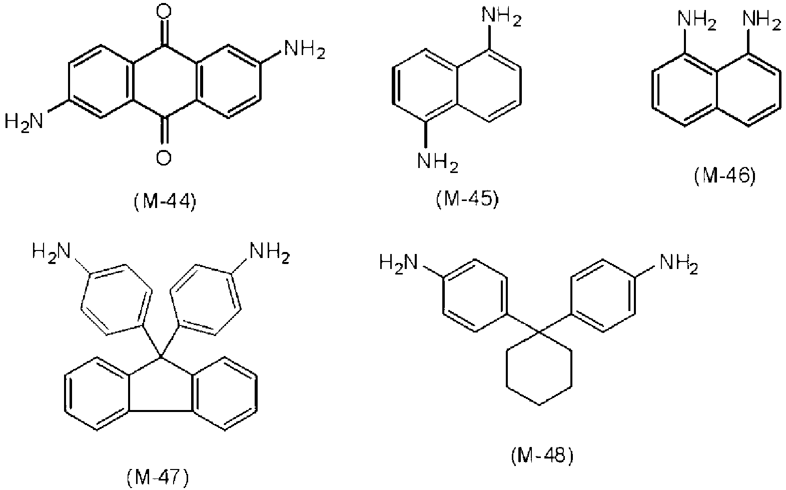 [A line "-" of which no bond destination is written out in the formula represents a methyl group.] 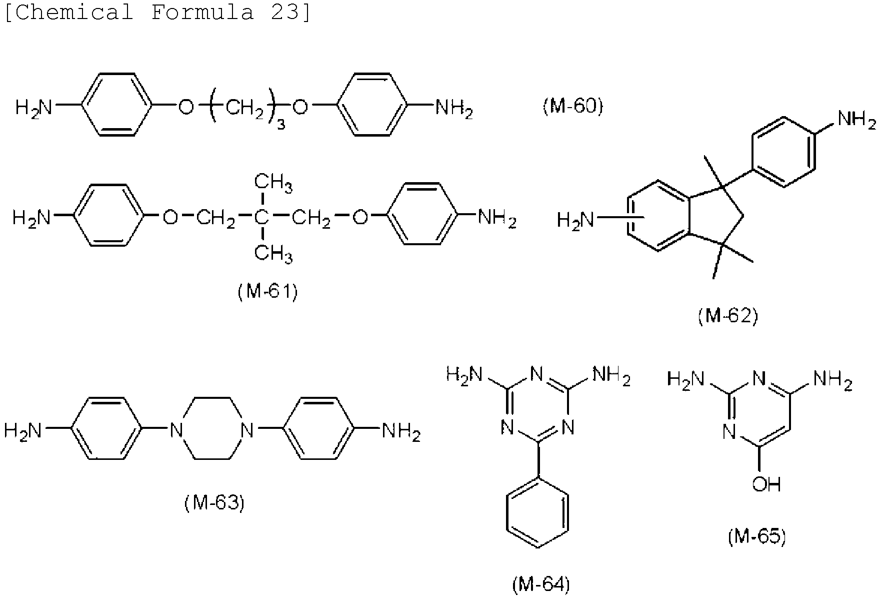 [A line "-" of which no bond destination is written out in the formula represents a methyl group.]

In a case where R⁴ is a divalent alicyclic hydrocarbon group having 5 to 20 carbon atoms, a group in which the alicyclic hydrocarbon group is combined with one or more other groups, a group in which at least a part of these groups is substituted with at least one selected from an oxygen atom, a nitrogen atom and a sulfur atom, or a group in which a part of these groups is substituted with a substituent, examples of the structure of the -NR'-R⁴-NR'-moiety in Formula (2) include the following structures.

Note that, the dotted line in the undermentioned structures represents a bond, which is bonded to a group different from R⁴ and R', of the nitrogen atom in -NR' in Formula (2).

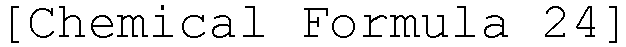

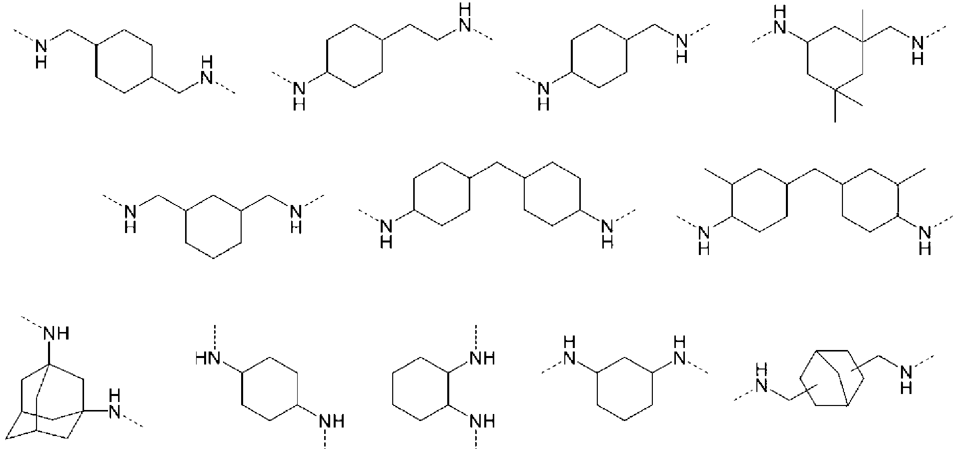

Examples of the divalent chain hydrocarbon group having 1 to 20 carbon atoms in R⁴ include a divalent group obtained by removing one hydrogen atom from the abovementioned monovalent chain hydrocarbon group.

In a case where R⁴ is a divalent chain hydrocarbon group having 1 to 20 carbon atoms, a group in which the chain hydrocarbon group and one or more other groups are combined, a group in which at least a part of these groups is substituted with at least one selected from an oxygen atom, a nitrogen atom and a sulfur atom, or a group in which a part of these groups is substituted with a substituent, examples of the structure of the -NR'-R⁴-NR'- moiety in Formula (2) include the following structures.

Note that, the dotted line in the undermentioned structures represents a bond, which is bonded to a group different from R⁴ and R', of the nitrogen atom in -NR' in Formula (2). 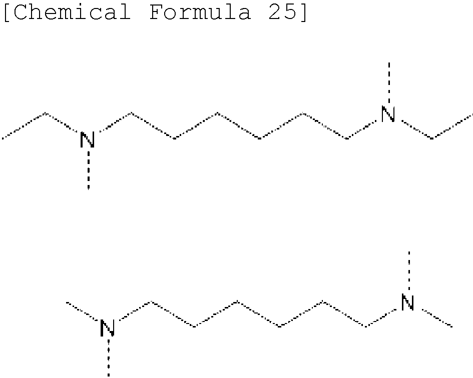 [A line "-" of which no bond destination is written out in the formula represents a methyl group.] 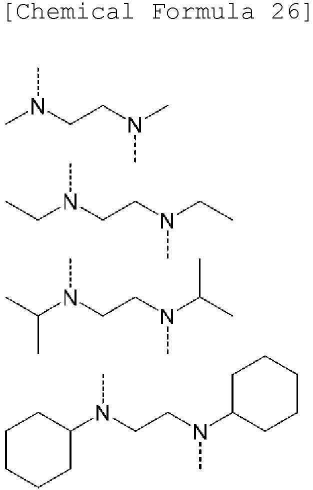 [A line "-" of which no bond destination is written out in the formula represents a methyl group.] 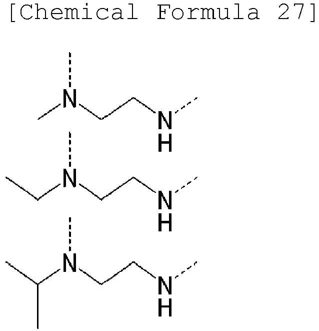 [A line "-" of which no bond destination is written out in the formula represents a methyl group.] 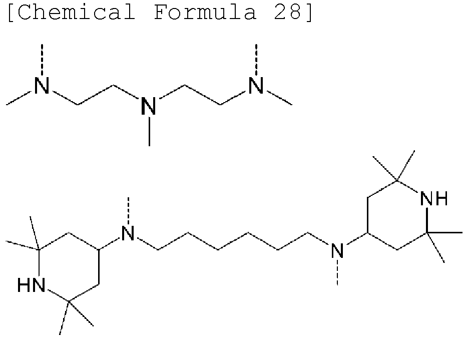 [A line "-" of which no bond destination is written out in the formula represents a methyl group.]

In the divalent group represented by -(R⁴¹-O)ₘ-, R⁴¹ is independently an alkylene having 2 to 4 carbon atoms, m is an integer in the range from 1 to 70, and preferably an integer in the range from 1 to 40.

In a case where R⁴ is a divalent silicon-containing group, examples of the structure of the -NR'-R⁴-NR'- moiety in Formula (2) include structures derived from KF-8010, X-22-161A, X-22-161B, KF-8012, KF-8008, X-22-1660B-3, and X-22-9409 manufactured by Shin-Etsu Chemical Co., Ltd.

In a case where R⁴ is a divalent silicon-containing group, the structure of the -NR'-R⁴-NR'- moiety in Formula (2) is preferably the following structures, for example.

Note that, the dotted line in the undermentioned structures represents a bond, which is bonded to a group different from R⁴ and R', of the nitrogen atom in -NR' in Formula (2). 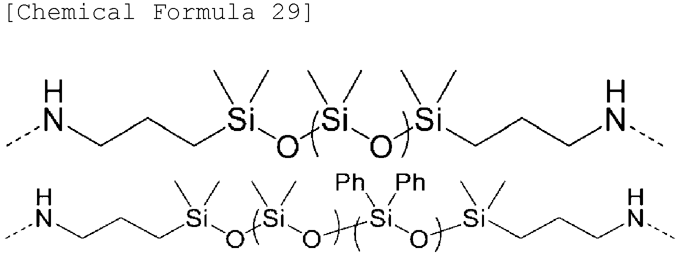 [A line "-" of which no bond destination is written out in the formula represents a methyl group.]

As commercial products available as monomers that give the silicon-containing group represented by the abovementioned formula, examples thereof include X-22-161A, X-22-161B, KF-8010, X-22-1660B-3, and KF-8012 (all of which are manufactured by Shin-Etsu Chemical Co., Ltd.)

As the group in which at least a part of the divalent aromatic hydrocarbon group having 6 to 30 carbon atoms, of the divalent alicyclic hydrocarbon group having 5 to 20 carbon atoms, of the divalent chain hydrocarbon group having 1 to 20 carbon atoms, of the divalent group represented by - (R⁴¹-O)ₘ-, of the divalent silicon-containing group, or of the group in which two or more groups selected from these groups are combined is substituted with at least one selected from an oxygen atom, a nitrogen atom and a sulfur atom, specific examples thereof include groups in which at least a part of the abovementioned aromatic hydrocarbon group, of the alicyclic hydrocarbon group, of the chain hydrocarbon group, of an oxyalkylene group, or of the silicon-containing group is substituted with a substituent such as -O-, -OO-, -C(=O)-, -C(=O)-O-, -S-, -SS-, -SO₂-, =N-, -N-C(=O)-, and a tertiary amino group.

In a case where R⁴ is a group in which a part of a divalent chain hydrocarbon group having 1 to 20 carbon atoms is substituted with -O-, or in a case where R⁴ is a divalent group represented by -(R⁴¹-O)ₘ-, examples of the structure of the -NR'-R⁴-NR'- moiety in Formula (2) include structures derived from polyoxyalkylene amines such as JEFFAMINE-D series, JEFFAMINE-ED series, JEFFAMINE-EDR series, and JEFFAMINE-RT series manufactured by Huntsman Corporation.

In a case where R⁴ is a group in which a part of the divalent chain hydrocarbon group having 1 to 20 carbon atoms is substituted with -O-, or in a case where R⁴ is a divalent group represented by -(R⁴¹-O)ₘ-, the structure of the -NR'-R⁴-NR'- moiety in Formula (2) is preferably the following structure, for example.

Note that, the dotted line in the undermentioned structures represents a bond, which is bonded to a group different from R⁴ and R', of the nitrogen atom in -NR' in Formula (2). 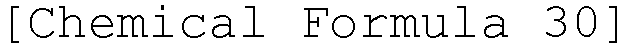 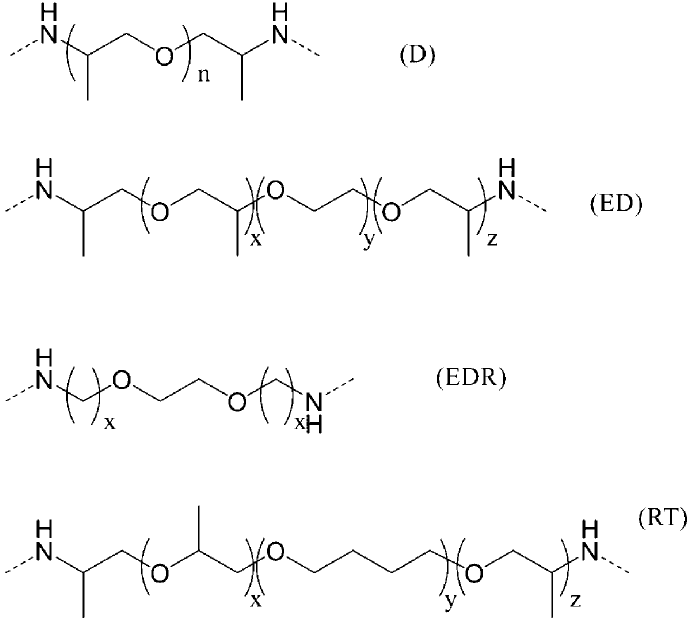 [A line "-" of which no bond destination is written out in the formula represents a methyl group.]

As the monomer that provides a group in which a part of the divalent chain hydrocarbon group having 1 to 20 carbon atoms is substituted with -O- or a divalent group represented by -(R⁴¹-O)ₘ- represented by the abovementioned formula, examples thereof include JEFFAMINE D-230 (n = -2.5, Mw = 230), D-400 (n = -6.1, Mw = 430), D-2000 (n = -33, Mw = 2000), D-4000 (n = -68, Mw = 4000), ED-600 (y = ~9.0, x + z = -3.6, Mw = 600), ED-900 (y = ~12.5, x + z = ~6.0, Mw = 900), ED-2003 (y = ~39, x + z = ~6.0, Mw = 2000), EDR-148 (x = ~2.0, Mw = 148), and RT-1000 (Mw = 1000), which are manufactured by Huntsman Corporation, and among them, JEFFAMINE D-230, D-400, D-2000, and D-4000 represented by Formula (D) set forth above are preferable.

The substituent in the group in which at least a part of the divalent aromatic hydrocarbon group having 6 to 30 carbon atoms, of the divalent alicyclic hydrocarbon group having 5 to 20 carbon atoms, of the divalent chain hydrocarbon group having 1 to 20 carbon atoms, of the divalent group represented by -(R⁴¹-O)ₘ-, of the divalent silicon-containing group, of the group in which two or more selected from these groups are combined, or of a group in which at least a part of these groups is substituted with at least one selected from an oxygen atom, a nitrogen atom and a sulfur atom is substituted with a substituent is not particularly limited, but examples of the substituent include an allyl group, a halogen atom, a monovalent hydrocarbon group having 1 to 20 carbon atoms, a monovalent halogenated hydrocarbon group having 1 to 20 carbon atoms, an alkoxy group having 1 to 20 carbon atoms, an alkoxycarbonyl group having 1 to 20 carbon atoms, an alkylthio group having 1 to 20 carbon atoms, a nitro group, a cyano group, a carboxy group, a sulfonic acid group, a phosphonic acid group, a phosphoric acid group, a hydroxy group, an oxo group, a primary to tertiary amino group, a salt of a carboxy group, a salt of a sulfonic acid group, a salt of a phosphonic acid group, a salt of a phosphoric acid group, a salt of a hydroxy group, and a salt of a primary to tertiary amino group.

In Formula (2), -N(R')-R⁴- may be a divalent monocyclic nitrogen-containing heterocyclic group which has 5 to 8 ring-constituting atoms and in which R' and R⁴ are bonded to each other, and in a case of -N(R')-R⁴- being such a monocyclic nitrogen-containing heterocyclic group, examples of the structure of the -NR'-R⁴-NR'- moiety in Formula (2) include the following structures.

Note that, the dotted line in the undermentioned structures represents a bond, which is bonded to a group different from R⁴ and R', of the nitrogen atom in -NR' in Formula (2).

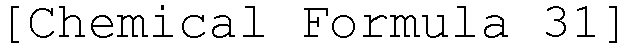

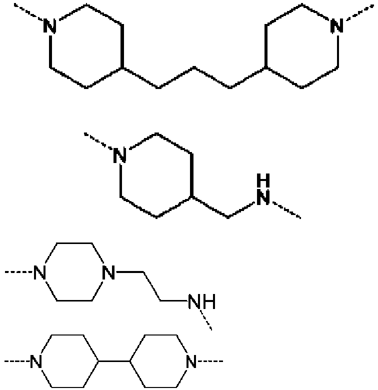

In Formula (2), -N(R')-R⁴-N(R')- may be a divalent monocyclic nitrogen-containing heterocyclic group which has 5 to 20 ring-constituting atoms and in which two R' are bonded to each other, and in this case, examples of the structure of the -NR'-R⁴-NR'- moiety in Formula (2) include the following structures.

Note that, the dotted line in the undermentioned structures represents a bond, which is bonded to a group different from R⁴ and R', of the nitrogen atom in -NR' in Formula (2).

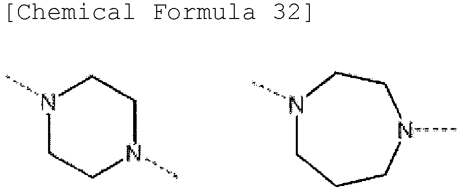

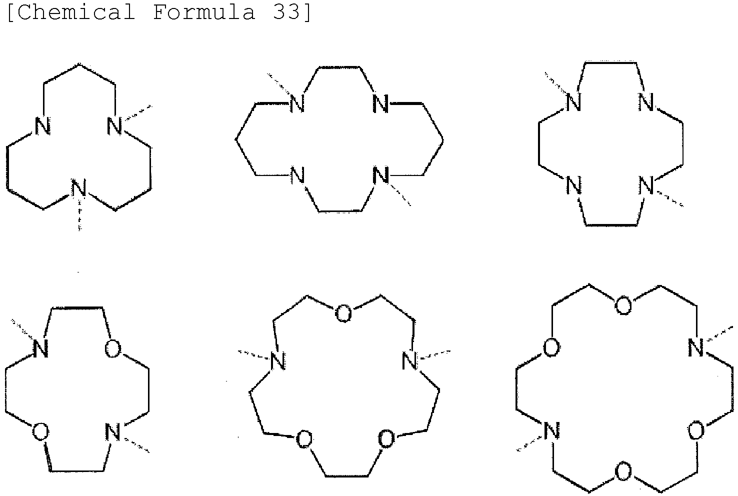

The number of repeating units of the repeating unit represented by Formula (2) set forth above is not particularly limited, and is, for example, from 2 to 10,000, preferably from 3 to 8,000, and more preferably from 3 to 5,000.

The lower limit of the content ratio of the repeating unit represented by Formula (2) set forth above in the present polymer is preferably 5% by mole, more preferably 150 by mole, still more preferably 25% by mole, and particularly preferably 40% by mole. The upper limit of the content ratio is preferably 95% by mole, more preferably 85% by mole, still more preferably 80% by mole, and particularly preferably 75% by mole.

The present polymer having the content ratio of the repeating unit represented by Formula (2) set forth above within the abovementioned range is enabled to control solubility in various solvents and compatibility with another component such as a curable compound described later.

The polymers (1) and (2) may contain another structural unit other than the repeating unit represented by Formula (1) set forth above and the repeating unit represented by Formula (2) set forth above.

The other structural unit is not particularly limited as long as the effect of the present invention is not impaired, and examples thereof include the terminal group.

Moreover, the polymer (3) includes the terminal group at the terminal of the polymer (1) or of the polymer (2).

Examples of the terminal group include a reactive group selected from a phenolic hydroxyl group, an allyl group, a vinyl group, a (meth)acryloyl group, a maleimide group, a propargyl group, and an ethynyl group, an aromatic hydrocarbon group, an aliphatic hydrocarbon group, and a heterocyclic group.

The two groups at the main chain terminal in the present polymer may be the same as or different from each other.

Examples of the terminal group include groups derived from end-capping agents shown below.

Examples of the end-capping agent include: aminophenol compounds such as 4-(2-aminoethyl)phenol and aminophenol; allyl compounds such as allylamine, diallylamine, and 4-allylphenol; vinyl compounds such as chloromethylstyrene, 4-aminostyrene, 4-vinylphenol, and 4-isopropenylphenol; (meth)acrylic compounds such as (meth)acryloyl chloride and anhydrous (meth)acrylic acid; maleimide compounds such as 4-hydroxyphenylmaleimide; propargyl compounds such as propargylamine; ethynyl compounds such as 4-ethynylaniline; aromatic hydrocarbon group-containing compounds (e.g., monophenol compounds such as 2-phenylphenol, aromatic monoamino compounds such as aniline and 4-tert-butylaniline), aliphatic hydrocarbon group-containing compounds (e.g., aliphatic monoamino compounds such as 2-ethylhexylamine and di(2-ethylhexyl)amine), and heterocyclic group-containing compounds (e.g., cyclic amine compounds such as 4-methylpiperidine, 1-methylpiperazine and morpholine).

The terminal group is preferably a reactive group derived from an end-capping agent selected from an aminophenol compound, an allyl compound, a vinyl compound, and a (meth)acrylic compound in terms of, for example, enabling to easily obtain a thermosetting composition that is capable of reacting with an epoxy resin, for example.

Moreover, the terminal group is preferably a group derived from an end-capping agent selected from a monophenol compound, an aromatic monoamino compound, an aliphatic monoamino compound, and a cyclic amine compound in terms of, for example, using as a thermoplastic material.

### <Physical properties and others of the present polymer>

The present polymer has a weight average molecular weight (Mw) in terms of polystyrene of preferably in the range from 1,000 to 400,000, more preferably from 3,000 to 200,000, and a molecular weight distribution (Mw/Mn) of preferably in the range from 1.5 to 12.0, more preferably from 1.7 to 9.0 in terms of, for example, obtaining a polymer excellent in heat resistance.

The Mw can be measured specifically by the method described in Examples set forth below.

The glass transition temperature (Tg) of the present polymer measured with a differential scanning calorimeter (DSC) is preferably in the range from -50 to 200°C, and more preferably from -50°C to 150°C.

The Tg can be measured specifically by the method described in Examples set forth below.

The 5% mass loss temperature (Td5) of the present polymer measured by thermogravimetric analysis (TGA) is preferably in the range from 200 to 600°C, and more preferably from 250 to 600°C.

The present polymer having Td5 in the abovementioned range can be said to be a polymer being excellent in heat resistance.

The Td5 can be measured specifically by the method described in Examples set forth below.

The present polymer is soluble in a general-purpose solvent and has excellent solubility in a general-purpose solvent.

Here, examples of the general-purpose solvent include solvents having a boiling point of 180°C or lower at atmospheric pressure, and specific examples thereof include cyclohexanone and cyclopentanone.

Note that, it can be said that the present polymer is soluble in a general-purpose solvent in a case where 1 g or more of the present polymer is dissolved in 100 g of the general-purpose solvent at 25°C. Whether the present polymer dissolves can be determined by the presence or absence of a precipitate.

When the present polymer is soluble in a general-purpose solvent, there can be obtained a solution of the present polymer dissolved in the general-purpose solvent, and the solution is preferable because it is excellent in applicability and drying properties.

The dielectric loss tangent (tan 6) of the present polymer is preferably 0.0060 or less, more preferably 0.0050 or less in terms of, for example, enabling to reduce the transmission loss of a composition containing the present polymer, and the lower limit thereof is not particularly limited, but is preferably 0.0005 or more.

The dielectric loss tangent can be measured specifically by the method described in Examples set forth below.

### <Synthesis method of present polymer>

The present polymer can be produced, for example, by using a condensation reaction between a conventionally known dihalogenated triazine compound and a compound having a nucleophilic functional group as typified by a diamine compound. Specific method is as described in Examples, and an example thereof will be described below.

The polymer (1) can be synthesized by, for example, heating and polymerizing a compound represented by Formula (A) set forth below and a dimer diamine represented by Formula (B) set forth below in an appropriate organic solvent such as cyclohexanone, N-methyl-2-pyrrolidone (NMP) or N,N-dimethylacetamide (DMAc) in the presence of an alkali metal compound such as potassium carbonate.

The polymer (2) can be synthesized by, for example, heating and polymerizing a compound represented by Formula (A) set forth below, a compound represented by Formula (B) set forth below, and a compound represented by Formula (C) set forth below in an appropriate organic solvent such as cyclohexanone, N-methyl-2-pyrrolidone (NMP), or N,N-dimethylacetamide (DMAc) in the presence of an alkali metal compound such as potassium carbonate.

Moreover, in the synthesis of these, the reaction may be carried out in the presence of the end-capping agent, and the polymer (3) can be synthesized by using the end-capping agent in the synthesis of these. 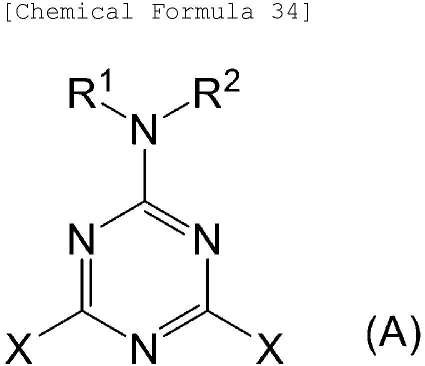 [In Formula (A), R¹ and R² each are independently synonymous with R¹ and R² in Formula (1), and X is a halogen atom. -NR¹R² may be a nitrogen-containing heterocyclic group which has 5 to 20 ring-constituting atoms and in which R¹ and R² are bonded to each other.] 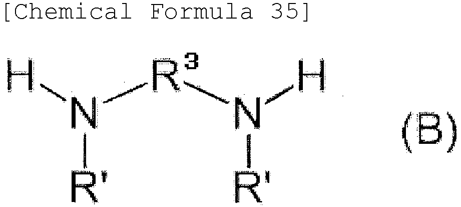 [In Formula (B), -N(R')-R³-N(R')- is a structure derived from a dimer diamine that is unsubstituted or substituted with a substituent, and R' is independently synonymous with R' in Formula (1).] 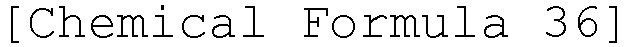 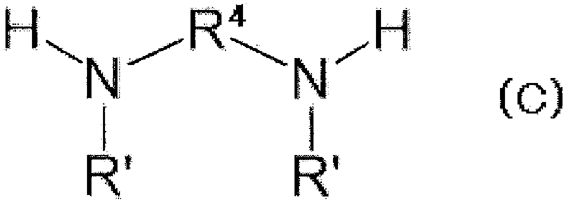 [In Formula (C), R⁴ and R' are each independently synonymous with R⁴ and R' in Formula (2), -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.]

The heating conditions are not particularly limited as long as the polymerization reaction proceeds, but the heating temperature is preferably in the range from 0 to 150°C, more preferably from 10 to 130°C, and the heating time is preferably in the range from 0.5 to 100 hours, more preferably from 1 to 24 hours in terms of, for example, suppressing side reactions.

In particular, the heating temperature is preferably in the range from about 40 to 110°C and the heating time is in the range from 4 to 24 hours in terms of, for example, enabling to obtain the present polymer having less coloration, and furthermore the heating temperature is more preferably in the range from 50 to 100°C in terms of, for example, enabling to obtain the present polymer with a high molecular weight containing less low molecular weight components.

The usage ratio of the compound represented by Formula (A) set forth above and the total of the compounds represented by Formulae (B) and (C) set forth above is such that the compound represented by Formula (A) is preferably 30% by mole or more and 70% by mole or less, more preferably 35% by mole or more and 60% by mole or less, still more preferably 35% by mole or more and 55% by mole or less, and the compounds represented by Formulae (B) and (C) are preferably 30% by mole or more and 70% by mole or less, more preferably 40% by mole or more and 65% by mole or less, still more preferably 40% by mole or more and less than 65% by mole when the total of the compound represented by Formula (A), the compounds represented by Formula (B) and the compound represented by Formula (C) is 100% by mole.

The compound represented by Formula (A) set forth above may be used singly or two or more kinds thereof. Moreover, the compound represented by Formula (B) set forth above may also be used singly or two or more kinds thereof, and the compound represented by Formula (C) set forth above may also be used singly or two or more kinds thereof.

Examples of the alkali metal compound include alkali metals such as lithium, potassium, and sodium; alkali metal hydrides such as lithium hydride, potassium hydride, and sodium hydride; alkali metal hydroxides such as lithium hydroxide, potassium hydroxide, and sodium hydroxide; alkali metal carbonates such as lithium carbonate, potassium carbonate, and sodium carbonate; alkali metal hydrogen carbonates such as lithium hydrogen carbonate, potassium hydrogen carbonate, and sodium hydrogen carbonate; alkali metal alkoxides such as sodium ethoxide; alkali metal acetates such as sodium acetate and potassium acetate; alkali metal oxide such as lithium oxide; alkali metal phosphates such as trilithium phosphate, trisodium phosphate, and tripotassium phosphate; and alkali metal fluorides such as cesium fluoride. Among these, for example, potassium carbonate, potassium hydroxide, sodium carbonate, sodium hydroxide, sodium hydrogen carbonate, sodium ethoxide, sodium acetate, lithium carbonate, lithium hydroxide, lithium oxide, potassium acetate, trilithium phosphate, trisodium phosphate, tripotassium phosphate, and cesium fluoride are preferable.

The alkali metal compound may be used singly or two or more kinds thereof may be used.

In addition, when the reaction is performed, an organic base may be used, and specific examples thereof include ammonia, trimethylamine, triethylamine, diisopropylmethylamine, diisopropylethylamine, N-methylpiperidine, 2,2,6,6-tetramethyl-N-methylpiperidine, pyridine, 4-dimethylaminopyridine, and N-methylmorpholine.

The organic base may be used singly or two or more kinds thereof may be used.

As for a use amount of the alkali metal compound, the amount of the alkali metal atom in the alkali metal compound is usually 1 to 3 times equivalent, preferably 1 to 2.5 times equivalent, and more preferably 1.1 to 2.0 times equivalent to one -NH-R' in the compound represented by Formulae (B) and (C) .

### <<Another component>>

The present composition may further contain another component other than the polymer (1) as long as the effects of the present invention are not impaired.

Examples of the other component include a curable compound (C), a curing aid (D), a reactive diluent, a solvent, a filler, an antioxidant, a reinforcing agent, a lubricant, a flame retardant, an antibacterial agent, a coloring agent, a release agent, a foaming agent, and other polymers (e.g., known polymers such as polyimide, polyarylene, an ester resin, a phenoxy resin, a phenol resin, a (meth)acrylic acid ester resin, a polystyrene resin, and a rubber-like resin such as a hydrogenated styrene butadiene styrene copolymer and a hydrogenated styrene isoprene styrene copolymer) other than the polymer (1) and the curable compound (C).

These other components may be used singly or two or more kinds thereof.

### <Curable compound (C)>

The present composition may contain the curable compound (C) (hereinafter, it is also referred to as "compound (C)".), and preferably contains the compound (C) in terms of, for example, enabling to easily form a cured product excellent in chemical resistance. Note that, the compound (C) is a compound other than the present polymer.

The present polymer is excellent in compatibility with the compound (C), and hence the present composition without precipitation or phase separation can be easily obtained.

In a case where the present composition contains the compound (C), the compound (C) contained in the present composition may be one kind or two or more kinds.

The curable compound (C) is a compound that is cured by heating or irradiating with light (e.g., visible light, ultraviolet light, near infrared light, far infrared light, electron beam), and may be a compound in need of a curing aid (D) described later. Examples of such compound (C) include an epoxy compound, a cyanate ester compound, a vinyl compound, a silicone compound, an oxazine compound, a maleimide compound, an allyl compound, an oxetane compound, a methylol compound, a (meth)acrylic compound, an oxazoline compound, a urethane compound, and a propargyl compound. Among them, the compound (C) is preferably at least one particularly selected from the group consisting of epoxy compounds, cyanate ester compounds, vinyl compounds, silicone compounds, oxazine compounds, maleimide compounds, allyl compounds, oxetane compounds, methylol compounds, (meth)acrylic compounds, oxazoline compounds, and propargyl compounds in terms of characteristics such as compatibility with the polymer (1) and heat resistance.

Note that, the (meth)acrylic compound refers to an acrylic compound and/or a methacrylic compound.

Examples of the epoxy compound include a compound having an epoxy group, which is a polyfunctional epoxy compound having two or more epoxy groups, or a polyfunctional epoxy compound having two or more functional groups including epoxy groups and other reactive groups in total of two or more, and specific examples thereof include epoxy compounds represented by Formulae (c1-1) to (c1-9) set forth below. Examples of the other reactive group include an alkoxysilyl group, a propargyl group, and a (meth)acrylic group.

Note that, as the compound represented by Formula (c1-6) set forth below, examples thereof include epoxy group-containing NBR particles "XER-81" manufactured by JSR Corporation.

Examples of the epoxy compound further include a polyglycidyl ether of a dicyclopentadiene-phenol polymer, a phenol novolac type liquid epoxy compound, a cresol novolac type epoxy compound, an epoxidized product of a styrene-butadiene block copolymer, and 3',4'-epoxycyclohexylmethyl-3,4-epoxycyclohexanecarboxylate. 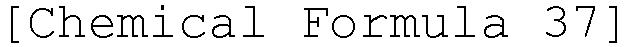 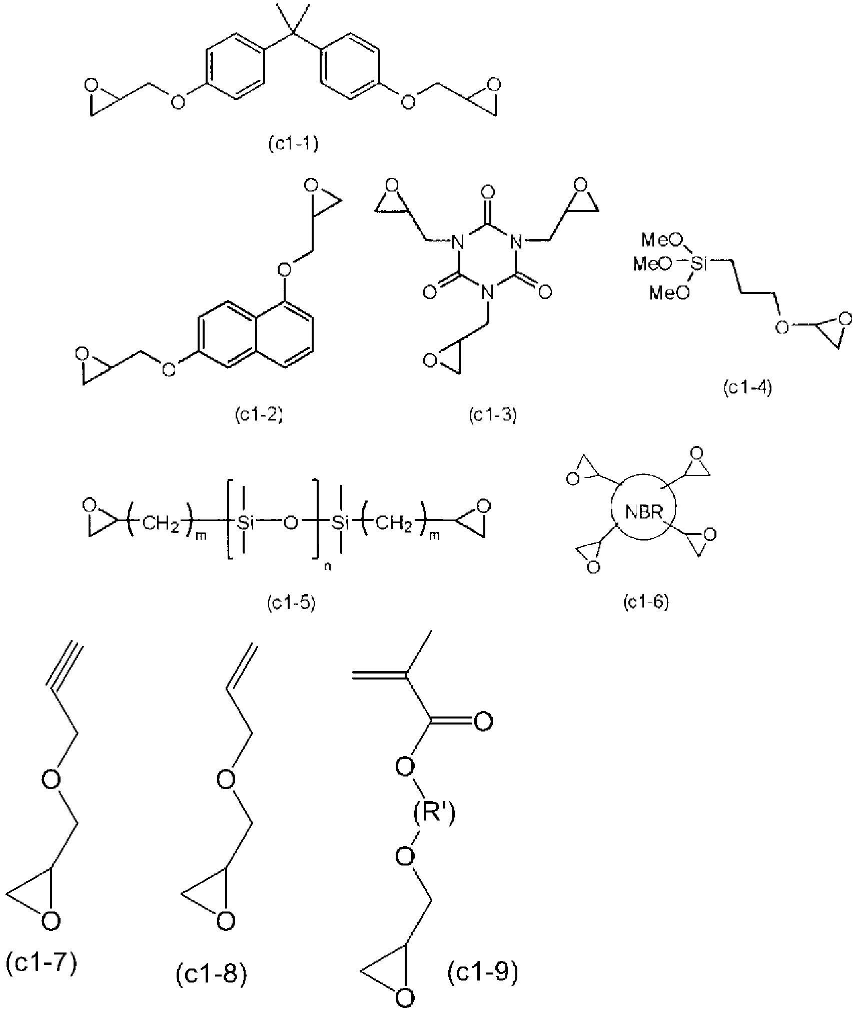 [In Formula (c1-5), n is in the range from 0 to 5000, and m is independently in the range from 0 to 5000. In Formula (c1-9), R' is an alkylene group having 2 to 10 carbon atoms.]

Examples of the cyanate ester compound include compounds represented by Formulae (c2-1) to (c2-7) set forth below. 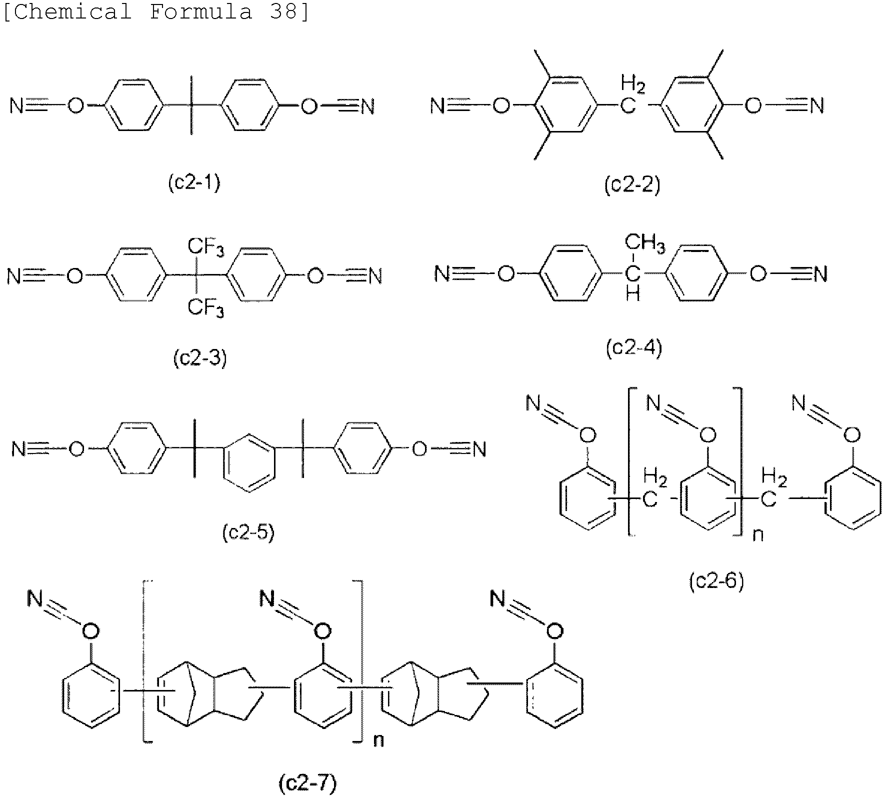 [In Formulae (c2-6) and (c2-7), n is independently from 0 to 30.]

Examples of the vinyl compound include compounds represented by Formulae (b-1-1) to (b-1-5) set forth below.

Examples of the vinyl compound further include styrene thermoplastic elastomers such as a styrene-butadiene styrene copolymer (SBS), a styrene-isoprene-styrene copolymer (SIS), a styrene-butadiene elastomer (SBR), compounds containing a vinyl group such as tert-butyl styrene, and 2-vinyl-4,6-diamino-1,3,5-triazine, TA100 (manufactured by Mitsubishi Gas Chemical Company, Inc.), and ULL-950S (manufactured by LONZA). 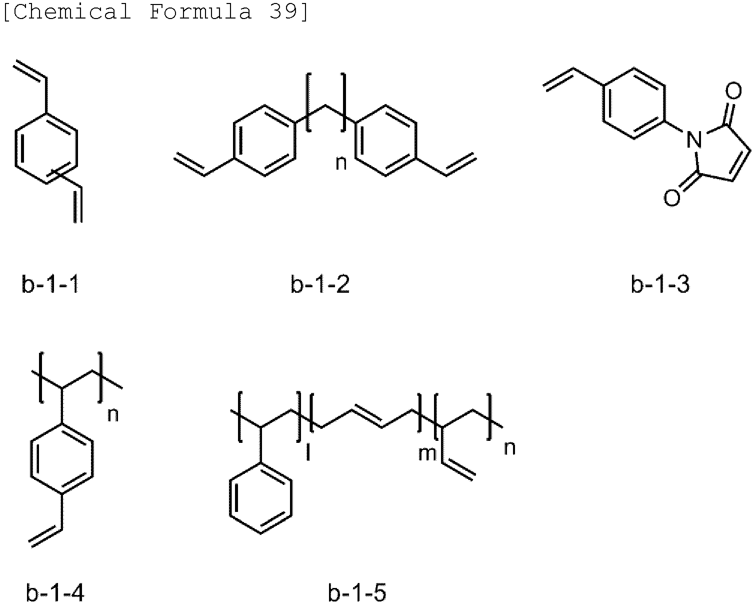 [In Formulae (b-1-2) and (b-1-4), n is independently from 1 to 5000. In Formula (b-1-5), l, m and n are each independently from 1 to 5000.]

Examples of the silicone compound include compounds represented by Formulae (c4-1) to (c4-16) set forth below. It should be noted that any one of the following is selected as R in Formula (c4-1), and in a case where a group having an acryloyl group is selected, it can be used as the acrylic compound, in a case where a group having a methacryloyl group is selected, it can be used as the methacrylic compound, and in a case where a group having an oxetane group is selected, it can be used as the oxetane compound. Moreover, in Formulae (c4-2) to (c4-16), R is each independently represent an organic group selected from an alkyl group, an alicyclic saturated hydrocarbon group, an aryl group and an alkenyl group, and n represents an integer in the range from 0 to 1000 (preferably an integer in the range from 0 to 100). Examples each of the alkyl group, the alicyclic saturated hydrocarbon group, the aryl group, and the alkenyl group include groups similar to the groups exemplified in the description of R', R¹, and R² of Formula (1) set forth above.

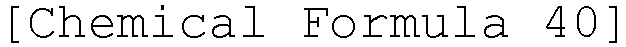

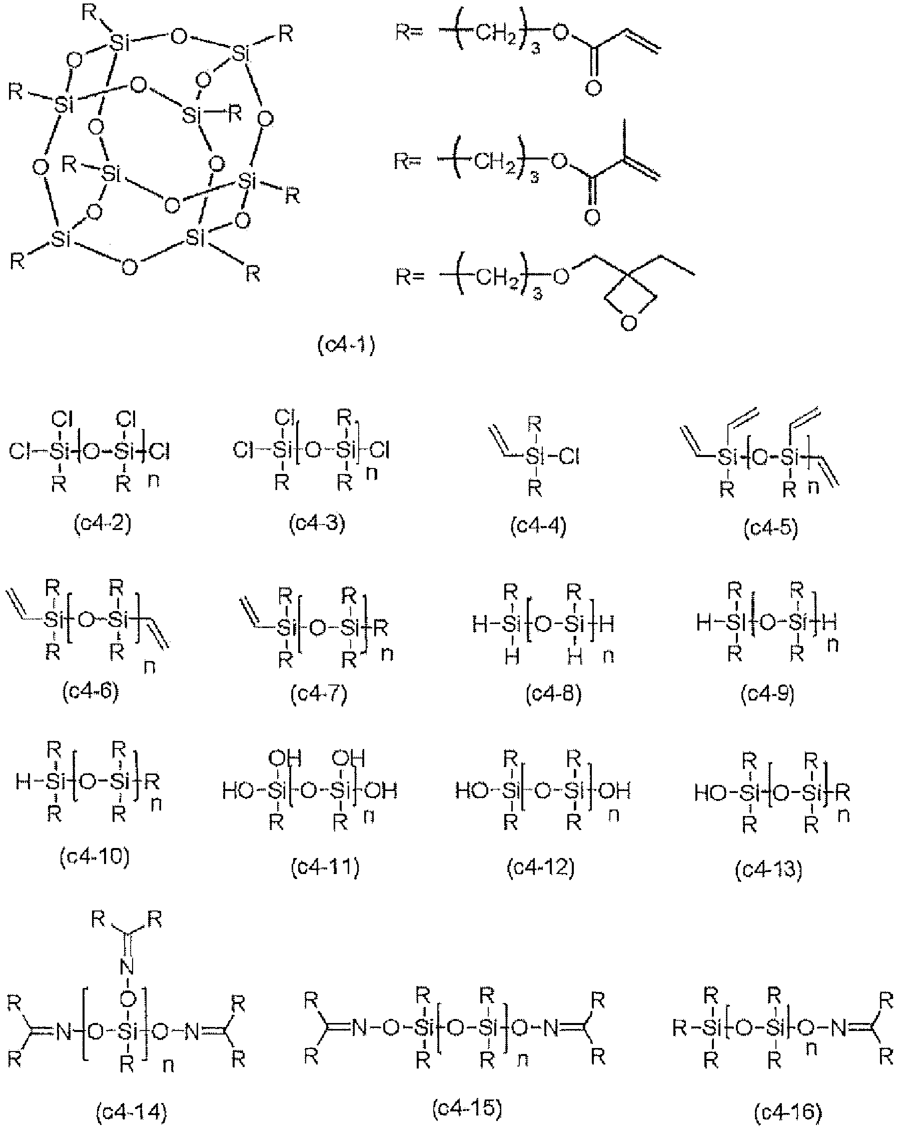

Examples of the oxazine compound include compounds represented by Formulae (c5-1) to (c5-5) set forth below and 2,2-bis(3,4-dihydro-3-methyl-2H-1,3-benzoxazine)propane.

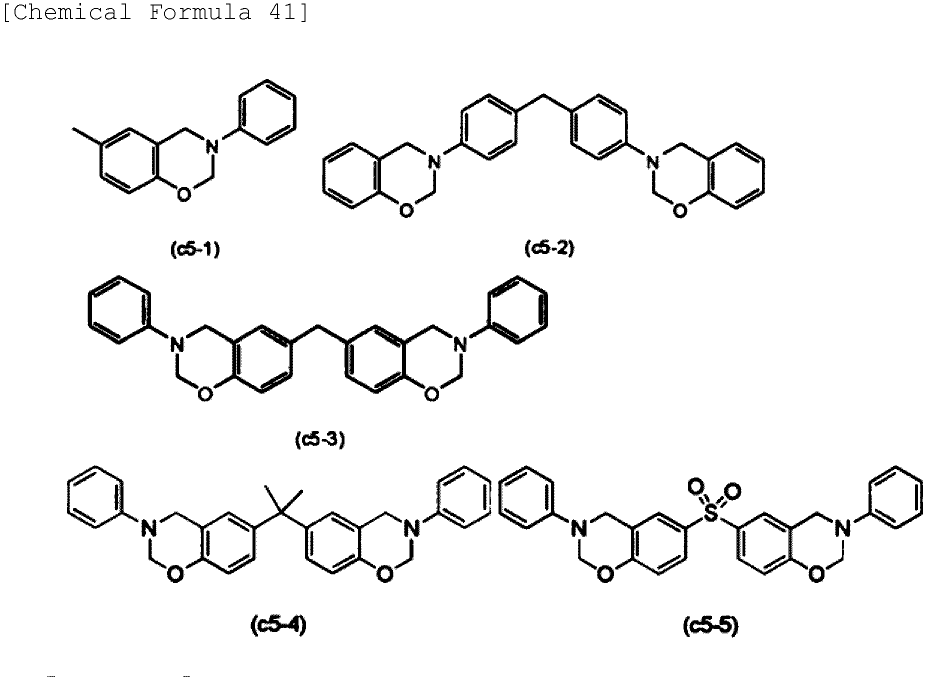

Examples of the maleimide compound include compounds represented by Formulae (c6-1) to (c6-5) set forth below.

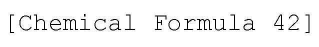

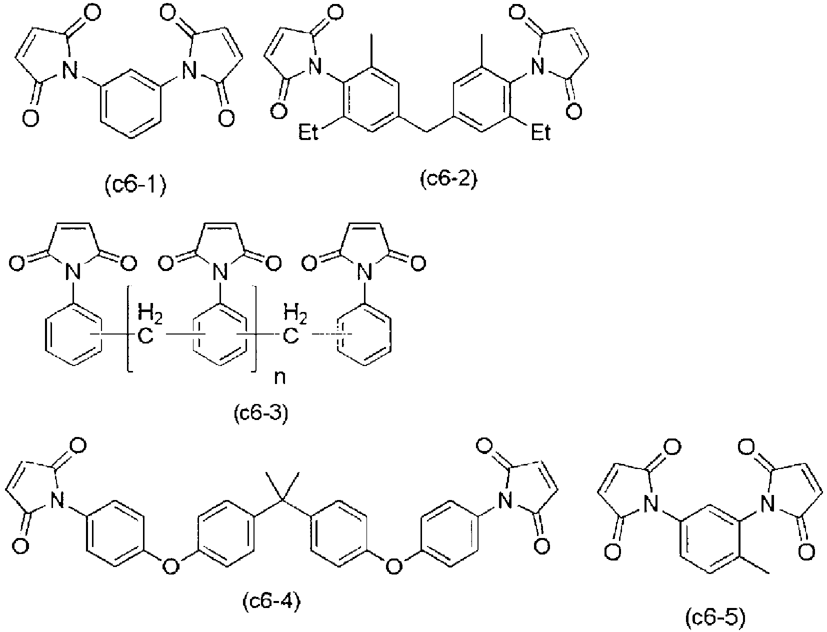

[In Formula (c6-2), Et represents an ethyl group, and in Formula (c6-3), n is in the range from 0 to 30.]

Examples of the allyl compound include compounds represented by Formulae (c7-1) to (c7-6) set forth below. In particular, this allyl compound is preferably a compound having two or more (in particular from 2 to 6, or furthermore from 2 to 3) allyl groups.

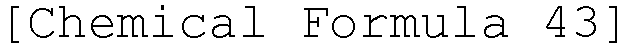

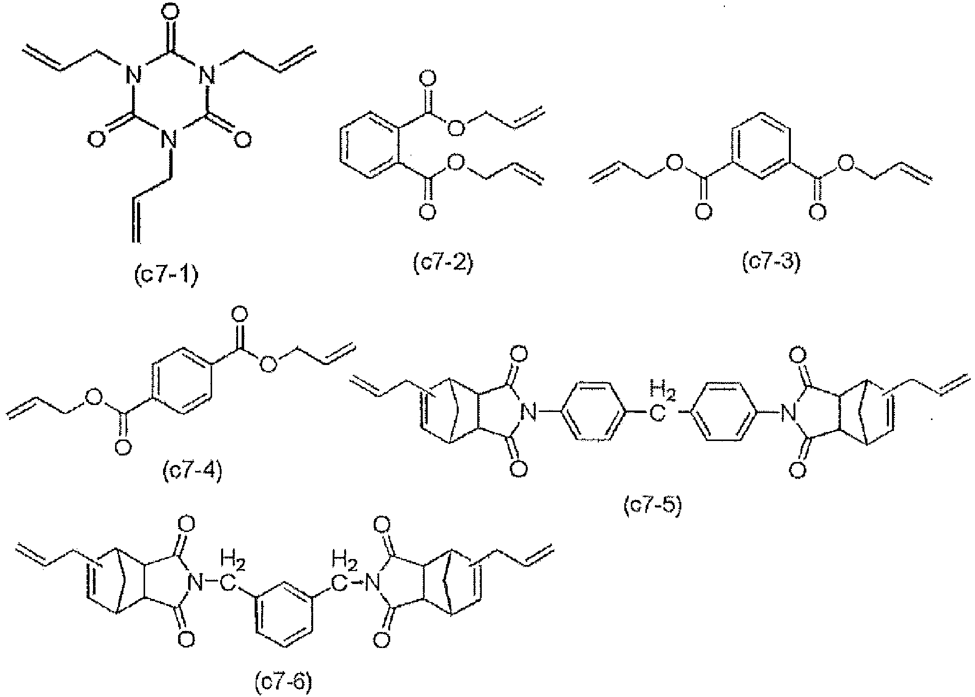

Examples of the oxetane compound include compounds represented by Formulae (c8-1) to (c8-3) set forth below and (3-ethyloxetane-3-yl)methyl methacrylate. 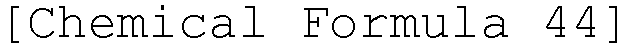 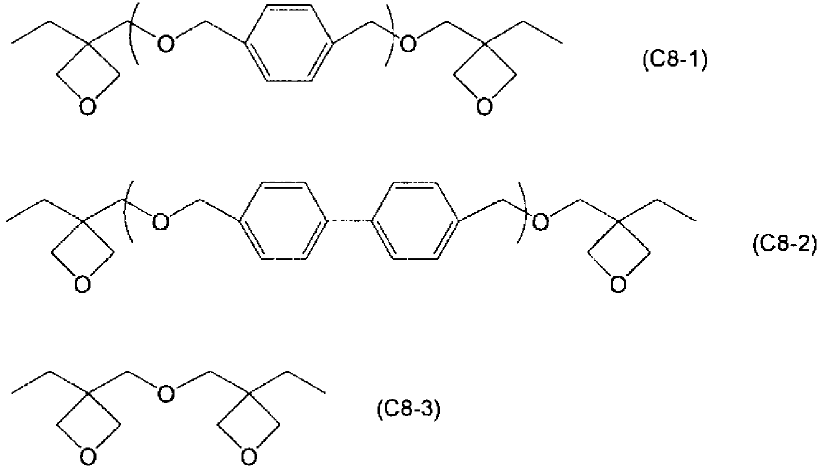 [In Formulae (c8-1) and (c8-2), the numbers of repeating units enclosed by parentheses each are independently from 0 to 30.]

Examples of the methylol compound include methylol compounds described in JP 2006-178059 A and JP 2012-226297 A. Specific examples thereof include melamine methylol compounds such as polymethylolated melamine, 2,4,6-tris[bis(methoxymethyl)amino]-1,3,5-triazine, hexaethoxymethylmelamine, hexapropoxymethylmelamine, and hexabutoxymethylmelamine; glycoluril methylol compounds such as polymethylolated glycoluril, tetramethoxymethylglycoluril, and tetrabutoxymethylglycoluril; and guanamine methylol compounds such as methylolated compounds of guanamine, such as 3,9-bis[2-(3,5-diamino-2,4,6-triazaphenyl)ethyl]-2,4,8,10-tetraoxospiro[5.5]undecane and 3,9-bis[2-(3,5-diamino-2,4,6-triazaphenyl)propyl]-2,4,8,10-tetraoxospiro[5.5]undecane, and compounds in which all or a part of active methylol groups in the compounds are alkyl-etherified.

Examples of the (meth)acrylic compound include trimethylolpropane di(meth)acrylate, trimethylolpropane tri(meth)acrylate, trimethylolpropane PO (propylene oxide) modified tri(meth)acrylate, tetramethylolpropane tetra(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, propylene glycol di(meth)acrylate, butylene glycol di(meth)acrylate, neopentyl glycol di(meth)acrylate, tris(2-hydroxyethyl)isocyanurate di(meth)acrylate, tris(2-hydroxyethyl)isocyanurate tri(meth)acrylate, tricyclodecane dimethanol di(meth)acrylate, epoxy (meth)acrylate obtained by adding (meth)acrylic acid to diglycidyl ether of bisphenol A, bisphenol A di(meth)acryloyloxyethyl ether, bisphenol A di(meth)acryloyloxymethylethyl ether, bisphenol A di(meth)acryloyloxyethyloxyethyl ether, pentaerythritol tri(meth)acrylate, pentaerythritol tetra(meth)acrylate, dipentaerythritol penta(meth)acrylate, dipentaerythritol hexa(meth)acrylate, 1,9-bis((meth)acryloyloxy)nonane, and polyester (meth)acrylate (with three or more functional groups).

Examples of the oxazoline compound include 2,2'-bis(2-oxazoline), 1,4-bis(4,5-dihydro-2-oxazolyl)benzene, and 1,3-bis(4,5-dihydro-2-oxazolyl)benzene.

Examples of the propargyl compound include compounds represented by Formulae (c9-1) to (c9-2) set forth below.

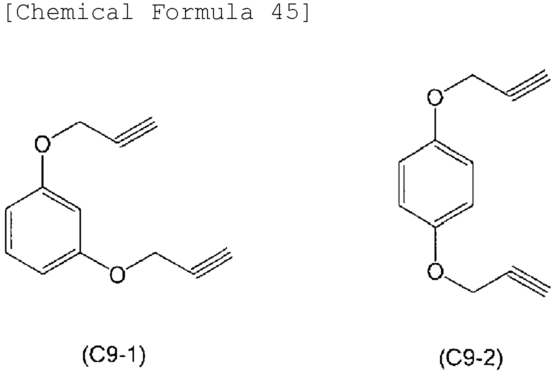

In a case where the present composition contains the compound (C), the content ratio of the compound (C) is preferably 1% by mass or more, more preferably 5% by mass or more, still more preferably 10% by mass or more, and preferably 99% by mass or less, more preferably 95% by mass or less, still more preferably 90% by mass or less with respect to 100% by mass of the total of the compound (C) and the present polymer.

The content ratio of the compound (C) within the abovementioned range is preferable in terms of, for example, enabling to further improve, for example, the toughness, heat resistance, and chemical resistance of the cured product of the present composition.

### <Curing aid (D)>

The present composition may contain a curing aid (D) as necessary.

Examples of the curing aid (D) include polymerization initiators such as a curing agent, a thermal reaction initiator (e.g., thermal radical generator, thermal acid generator, thermal base generator), and a photoreaction initiator (e.g., photo radical generator, photo acid generator, photo base generator).

The curing aid (D) may be used singly, or two or more kinds thereof may be used.

In a case of using an epoxy compound as the compound (C), examples of the curing aid (D) include curing agents such as amine curing agents, acid or acid anhydride curing agents, basic active hydrogen compounds, imidazoles, polymercaptan curing agents, phenol resins, urea resins, melamine resins, isocyanate curing agents, and Lewis acids.

Examples of the amine curing agent include polyamines such as ethylenediamine, diethylenetriamine, triethylenetetramine, tetraethylenepentamine, hexamethylenediamine, iminobispropylamine, bis(hexamethylene)triamine, and 1,3,6-trisaminomethylhexane; cyclic aliphatic polyamines such as mensendiamine (MDA), isophoronediamine (IPDA), bis(4-amino-3-methylcyclohexyl)methane, diaminodicyclohexylmethane, bisaminomethylcyclohexane, 3,9-bis(3-aminopropyl)-2,4,8,10-tetraoxaspiro[5.5]undecane, and diamines having a norbornane skeleton as typified by NBDA manufactured by Mitsui Chemicals, Inc.; aliphatic polyamines including an aromatic ring, such as meta-xylylenediamine (MXDA); aromatic polyamines such as meta-phenylenediamine, diaminodiphenylmethane, diaminodiphenylsulfone, and diaminodiethyldiphenylmethane, and derivatives thereof.

Furthermore, examples of another amine curing agent include Mannich-modified amines obtained by reacting an aldehyde and/or phenols with a polyamine; ketimine which is a reaction product of ketone and amine adduct (polyamine epoxy resin adduct), polyamine-ethylene oxide adduct, polyaminepropylene oxide adduct, cyanoethylated polyamine, or aliphatic polyamine; secondary amines or tertiary amines, such as tetramethylguanidine, triethanolamine, piperidine, pyridine, 4-dimethylaminopyridine, benzyldimethylamine, picoline, 2-(dimethylaminomethyl)phenol, dimethylcyclohexylamine, dimethylbenzylamine, dimethylhexylamine, dimethylaminophenol, dimethylamino-p-cresol, N,N'-dimethylpiperazine, 1,4-diazabicyclo[2.2.2]octane, 2,4,6-tris(dimethylaminomethyl)phenol, and 1,8-diazabicyclo[5.4.0]-7-undecene; and liquid polyamides obtained by reacting a dimer acid with a polyamine such as diethylenetriamine or triethylenetetramine.

Examples of the acid or acid anhydride curing agent include polycarboxylic acids such as adipic acid, azelaic acid, and decanedicarboxylic acid; aromatic acid anhydrides such as phthalic anhydride, trimellitic anhydride, ethylene glycol bis(anhydrotrimellitate), glycerol tris(anhydrotrimellitate), pyromellitic anhydride, and 3,3',4,4'-benzophenone tetracarboxylic anhydride; cycloaliphatic acid anhydrides such as maleic anhydride, succinic anhydride, tetrahydrophthalic anhydride, methyltetrahydrophthalic anhydride, methylnadic anhydride, alkenyl succinic anhydride, hexahydrophthalic anhydride, methylhexahydrophthalic anhydride, methylcyclohexene tetracarboxylic anhydride, methylhymic anhydride, trialkyltetrahydrophthalic anhydride, and poly(phenylhexadecanedioic acid) anhydride; aliphatic acid anhydrides such as polyadipic anhydride, polyazelaic anhydride, polysebacic anhydride, dodecenyl succinic anhydride, and poly(ethyloctadecanedioic acid) anhydride; and halogenated acid anhydrides such as chlorendic anhydride and tetrabromophthalic anhydride.

Examples of the basic active hydrogen compound include dicyandiamide and organic acid dihydrazide.

Examples of the imidazoles include 2-methylimidazole, 2-ethyl-4-methylimidazole, 2-undecylimidazole, 2-heptadecylimidazole, 2-phenylimidazole, 1-benzyl-2-methylimidazole, 1-cyanoethyl-2-methylimidazole, 1-cyanoethyl-2-ethyl-4-methylimidazole, 2-methylimidazolium isocyanurate, 2,4-diamino-6-[2-methylimidazolin-(1)]-ethyl-S-triazine, and 2,4-diamino-6-[2-ethyl-4-methylimidazolin-(1)]-ethyl-S-triazine.

Examples of the polymercaptan curing agent include a partial epoxy adduct of 2,2'-bismercaptoethyl ether; esters of thioglycolic acid such as pentaerythritol tetrathioglycolate, dipentaerythritol hexathioglycolate, and trimethylolpropane tristhioglycolate; and compounds containing a mercapto group, such as polysulfide rubber having a mercapto group at the terminal.

Examples of the isocyanate curing agent include isocyanate compounds such as toluene diisocyanate, hexamethylene diisocyanate, and xylene diisocyanate; blocked isocyanate compounds obtained by masking an isocyanate group by reacting the isocyanate group with a blocking agent such as phenol, an alcohol, or caprolactam.

Examples of the Lewis acid include a diaryliodonium salt and a triarylsulfonium salt.

Moreover, as the curing aid (D) in a case of using an epoxy compound as the compound (C), there can be used photoacid generators such as organic halides or disulfone can also be used besides onium salt compounds, sulfone compounds, sulfonic acid ester compounds, sulfonimide compounds, disulfonyl diazomethane compounds, disulfonyl methane compounds, oxime sulfonate compounds, hydrazine sulfonate compounds, triazine compounds, and nitrobenzyl compounds.

Furthermore, as the curing aid (D) in a case of using an epoxy compound as the compound (C), there can also be used photobase generators such as (Z)-{[bis(dimethylamino)methylidene]amino}-N-cyclohexyl(cyclohexylamino)methanimium=tetrakis (3-fluorophenyl)borate, 1,2-dicyclohexyl-4,4,5,5-tetramethylbiguanidium=n-butyltriphenylborate, 9-anthrylmethyl=N,N-diethylcarbamate, (E)-1-[3-(2-hydroxyphenyl)-2-propenoyl]piperidine, 1-(anthraquinone-2-yl)ethyl imidazole carboxylate, 2-nitrophenylmethyl-4-methacryloyloxypiperidine-1-carboxylate, and 1,2-diisopropyl-3-[bis(dimethylamino)methylene]guanidium=2-(3-benzoylphenyl)propionate, for example.

As the curing aid (D) in a case of using a cyanate ester compound as the compound (C), examples that can be used include organometallic salts such as zinc octylate, zinc naphthenate, cobalt naphthenate, copper naphthenate, iron acetylacetone, nickel octylate and manganese octylate, phenol compounds such as phenol, xylenol, cresol, resorcin, catechol, octylphenol and nonylphenol, alcohols such as 1-butanol and 2-ethylhexanol, imidazoles such as 2-methylimidazole, 2-ethyl-4-methylimidazole, 2-phenylimidazole, 1-benzyl-2-methylimidazole, 1-cyanoethyl-2-phenylimidazole, 1-cyanoethyl-2-ethyl-4-methylimidazole, 2-phenyl-4,5-dihydroxymethylimidazole, and 2-phenyl-4-methyl-5-hydroxymethylimidazole, and derivatives of these imidazoles such as carboxylic acid adducts or acid anhydride adducts, amines such as benzyldimethylamine and 4-methyl-N,N-dimethylbenzylamine, and phosphorus compounds such as phosphine compounds and phosphine oxide compounds.

Furthermore, there can also be used the photoacid generators and the photobase generators described as the curing aid (D) in the case of using the epoxy compound.

In the case of using a vinyl compound as the compound (C), examples of the curing aid (D) include compounds (polymerization agents) that generate a cation or a radical active species by heat or light. Examples of the cationic polymerization agent include diaryliodonium salts and triarylsulfonium salts. Examples of the radical polymerization agent include benzoin compounds such as benzoin acetophenone, acetophenone compounds such as 2,2-dimethoxy-2-phenylacetophenone, sulfur compounds such as 2,4-diethylthioxanthone, azo compounds such as azobisisobutyronitrile, and organic peroxides such as 2,5-dimethyl-2,5-di(t-butylperoxy)hexane and dicumyl peroxide.

Moreover, as the curing aid (D) in a case of using a vinyl compound as the compound (C), examples that can be used include photoradical generators such as acetophenone, propiophenone, benzophenone, xanthol, benzaldehyde, anthraquinone, triphenylamine, carbazole, 3-methylacetophenone, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl)ketone, benzyl methoxyketal, and 2-chlorothioxanthone.

As the curing aid (D) in a case of using a silicone compound as the compound (C), examples that can be used include platinum group metal catalysts such as platinum catalysts such as platinum black, platinum(IV) chloride, chloroplatinic acid, reaction products of chloroplatinic acid and monohydric alcohol, complexes of chloroplatinic acid and olefins, and platinum bisacetoacetate; palladium catalyst; and rhodium catalyst; zinc benzoate and zinc octylate.

Moreover, as the curing aid (D) in a case of using a silicone compound as the compound (C), examples that can be used include photoreaction initiators such as acetophenone, propiophenone, benzophenone, xanthol, benzaldehyde, anthraquinone, triphenylamine, carbazole, 3-methylacetophenone, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 2,2'-diethoxyacetophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl)ketone, benzyl methoxyketal, 2-chlorothioxanthone, diethylacetophenone, 1-hydroxycyclohexyl phenyl ketone, 2-methyl-1-{4-(methylthio)phenyl}-2-morpholino-1-one, 2-benzyl-2-dimethylamino-1-(4-morpholinophenyl)-butanone-1-one, 1-{4-(2-hydroxyethoxy)-phenyl}-2-methyl-1-propane-1-one, 2,2-dimethoxy-2-phenylacetophenone, 2-hydroxy-2-methyl-1-phenylpropane-1-one, and cyclohexyl phenyl ketone.

As the curing aid (D) in a case of using an oxazine compound as the compound (C), examples that can be used include Bronsted acids such as phenol and derivatives thereof, cyanate ester and p-toluenesulfonic acid, adipic acid, p-toluenesulfonic acid ester, aromatic amine compounds such as 4,4'-diaminodiphenylsulfone and melamine, bases such as 2-ethyl-4-methylimidazole, and curing agents such as boron trifluoride and Lewis acid.

Furthermore, there can also be used the photoacid generators and the photobase generators described as the curing aid (D) in the case of using the epoxy compound.

As the curing aid (D) in a case of using a maleimide compound as the compound (C), examples that can be used include bases such as imidazole, 1-methylimidazole, 1-benzyl-2-methylimidazole, 2-methylimidazoline, N,N-diisopropylethylamine, 1,4-dimethylpiperazine, quinoline, triazole, benzotriazole, and DBU, phosphorus compounds such as triphenylphosphine, curing agents such as azobisisobutyronitrile, and organic peroxides such as 2,5-dimethyl-2,5-di(t-butylperoxy)hexane and dicumyl peroxide.

Furthermore, there can also be used the photoacid generators and the photobase generators described as the curing aid (D) in the case of using the epoxy compound.

As the curing aid (D) in a case of using an allyl compound or a propargyl compound as the compound (C), examples that can be used include azo initiators such as azobisisobutyronitrile and dimethyl 2,2'-azobisisobutyrate, peroxides such as ketone peroxide, peroxyketal, hydroperoxide, dialkyl peroxide, diacyl peroxide, peroxydicarbonate, peroxyester, 2,5-dimethyl-2,5-di(t-butylperoxy)hexane, and dicumyl peroxide, curing agents such as acetophenone compounds (such as 2-methyl-1-[4-(methylthio)phenyl]-2-morpholinopropane-1,1'-hydroxycyclohexylphenyl ketone), benzoin compounds (such as benzoin and benzoin ethyl ether), benzophenone compounds (such as benzophenone), phosphorus compounds (such as acylphosphine oxide), sulfur compounds (such as thioxanthone), benzyl compounds (such as benzyl and 9,10-phenanthrene quinone), and peroxycarbonate-based compounds.

Furthermore, there can also be used the photoacid generators and the photobase generators described as the curing aid (D) in the case of using the epoxy compound.

As the curing aid (D) in a case of using an oxetane compound or a methylol compound as the compound (C), a light or thermal cation generator, for example, can be used.

Examples of the photocation generator include an onium salt compound, a halogen-containing compound, a sulfone compound, a sulfonic acid compound, a sulfonimide compound, and a diazomethane compound.

Specific examples of the onium salt compound, the halogen-containing compound, the sulfone compound, the sulfonic acid compound, the sulfonimide compound, and the diazomethane compound include compounds described in paragraphs [0074] to [0079] of JP 2014-186300 A.

Specific examples of the halogen-containing compound include a haloalkyl group-containing hydrocarbon compound and a haloalkyl group-containing heterocyclic compound. Specific examples of preferred halogen-containing compounds include 1,10-dibromo-n-decane, 1,1-bis(4-chlorophenyl)-2,2,2-trichloroethane; s-triazine derivatives such as phenylbis(trichloromethyl)-s-triazine, 4-methoxyphenylbis(trichloromethyl)-s-triazine, styryl-bis(trichloromethyl)-s-triazine, naphthyl-bis(trichloromethyl)-s-triazine, and 2-[2-(5-methylfuran-2-yl)ethenyl]-4,6-bis-(trichloromethyl)-1,3,5-triazine.

Examples of the thermal cation generator include benzyl(4-hydroxyphenyl)(methyl)sulfonium=tetrakis(pentafluorophenyl)bo rate, (4-hydroxyphenyl)(dimethyl)sulfonium=tetrakis(pentafluorophenyl) borate, 4-acetoxyphenyl(dimethyl)sulfonium=tetrakis(pentafluorophenyl)b orate, (4-hydroxyphenyl)methyl(4-methylbenzyl)sulfonium=tetrakis(pentafluorophenyl)borate, and benzyl(4-hydroxyphenyl)(methyl)sulfonium=hexafluorophosphate.

In a case where the present composition contains the curing aid (D), the content ratio of the curing aid (D) is preferably within a range where the present composition is favorably cured to give a cured product. Specifically, the content ratio of the curing aid (D) is usually 0.1 parts by mass or more and 30 parts by mass or less, preferably 0.1 parts by mass or more and 20 parts by mass or less, and more preferably 0.1 parts by mass or more and 15 parts by mass or less, with respect to total 100 parts by mass of the present polymer and the compound (C).

### <Solvent>

The present composition may contain a solvent as necessary.

Examples of the solvent include amide solvents such as N,N-dimethylacetamide, N,N-dimethylformamide, N-methyl-2-pyrrolidone, N-ethyl-2-pyrrolidone, and 1,3-dimethyl-2-imidazolidinone; ester solvents such as γ-butyrolactone and butyl acetate; ketone solvents such as cyclopentanone, cyclohexanone, methyl ethyl ketone, and benzophenone, ether solvents such as 1,2-methoxyethane, diphenyl ether, tetrahydrofuran, 4-methyltetrahydropyran, and dioxane, and polyfunctional solvents such as 1-methoxy-2-propanol and propylene glycol methyl ether acetate; sulfone solvents such as sulfolane, dimethylsulfoxide, diethylsulfoxide, dimethylsulfone, diethylsulfone, diisopropylsulfone, and diphenylsulfone; methylene chloride, benzene, toluene, xylene, dialkoxybenzene (the number of carbon atoms of alkoxy group; 1 to 4), and trialkoxybenzene (the number of carbon atoms of alkoxy group; 1 to 4).

These solvents may be used singly or two or more kinds thereof.

The content ratio of the solvent in the present composition is not particularly limited, but is, for example, preferably 0 parts by mass or more and 2000 parts by mass or less, and more preferably 0 parts by mass or more and 1000 parts by mass or less, with respect to total 100 parts by mass of the present polymer and the compound (C).

### <Filler>

The present composition may contain a filler as necessary.

The present polymer contained in the present composition has a triazine ring structure and hence has a planar structure with a strong pi-electron interaction. As a result of this, the present polymer is considered to have a high ability to coordinate to, for example, a filler. Moreover, the present polymer includes a structure derived from dimer diamine in a part of the main chain and therefore the flexible long main chain is considered to be able to follow the surface and gaps of particles such as fillers, hence, in a case where the present composition contains a filler, it is considered that a composition excellent in dispersibility of the filler can be easily obtained. As described above, the present polymer is considered to be excellent in coordination ability and dispersibility, and also excellent in dispersion stability, and therefore it is considered that the present polymer also functions as a good dispersant.

As the filler, a conventionally known filler can be used, and the filler may be appropriately selected from conventionally known fillers according to the usage of the present composition.

The filler may be used singly or two or more kinds thereof.

Examples of the filler include at least one selected from the group consisting of metals, carbon, metal carbides, metal oxides, and metal nitrides, and a metal oxide and a metal nitride are preferable.

Examples of the metal oxide include magnesium oxide, aluminum oxide (alumina), silicon oxide (solid silica, hollow silica), calcium oxide, zinc oxide, yttrium oxide, zirconium oxide, cerium oxide, ytterbium oxide, and sialon (ceramics including silicon, aluminum, oxygen, and nitrogen).

Examples of the metal nitride include boron nitride, aluminum nitride, and silicon nitride.

The shape of the filler is not particularly limited, and the filler may be in the form of particles, whiskers, fibers, plates, or aggregates thereof.

Examples of commercial products of the filler include silica having a silanol group (-SiOH) at the terminal such as ADMAFINE SC2500-SQ manufactured by ADMATECHS COMPANY LIMITED, silica having an aminophenyl group such as ADMAFINE SC2500-SXJ manufactured by ADMATECHS COMPANY LIMITED, silica having a phenyl group such as ADMAFINE SC2500-SPJ manufactured by ADMATECHS COMPANY LIMITED, boron nitride powder such as XGP, SGP and MGP manufactured by Denka Company Limited, boron nitride powder such as UHP-1K and UHP-2K manufactured by Showa Denko K.K., spherical alumina powder such as DAW-01, DAW-01DC, DAW-03 and DAW-05 manufactured by Denka Company Limited, and spherical alumina powder such as CB-P02, CB-P05 and CB-P07 manufactured by Showa Denko K.K., and among them, ADMAFINE SC2500-SQ and ADMAFINE SC2500-SPJ can be preferably used.

In a case where the present composition contains a filler, the content ratio of the filler is appropriately selected according to the usage of the present composition, and is preferably from 0.1 to 10000 parts by mass and more preferably from 10 to 9000 parts by mass with respect to 100 parts by mass of the present polymer.

### <Reactive diluent>

The present composition may contain a reactive diluent as necessary. The reactive diluent is preferably a liquid compound that reacts with the curable compound (C), and dissolves other components or is homogeneously mixed with other components when included into a composition. For such reactive diluent is appropriately selected from conventionally known reactive diluents according to the type of the curable compound (C) of the present composition.

The reactive diluent may be used singly or two or more kinds thereof.

Examples of the reactive diluent that can be used include a monofunctional liquid epoxy compound and a liquid acid anhydride that can easily react with epoxy, as long as the curable compound (C) is an epoxy compound.

In a case where the present composition contains a reactive diluent, the content ratio of the reactive diluent is appropriately selected according to the usage of the present composition, and is preferably from 20 to 150 parts by mass and more preferably from 50 to 120 parts by mass with respect to 100 parts by mass of the curable compound (C).

### <Antioxidant>

Examples of the antioxidant include hindered phenolic compounds, phosphorus compounds, sulfur compounds, metal compounds, and hindered amine compounds. Among them, a hindered phenolic compound is preferable.

The antioxidant may be used singly or two or more kinds thereof.

The hindered phenolic compound is preferably a compound having a molecular weight of 500 or more. Examples of the hindered phenolic compound having a molecular weight of 500 or more include triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,4-bis-(n-octylthio)-6-(4-hydroxy-3,5-di-t-butylanilino)-3,5-triazine, pentaerythritol tetrakis[3-(3,5-t-butyl-4-hydroxyphenyl)propionate], 1,1,3-tris[2-methyl-4-[3-(3,5-dit-butyl-4-hydroxyphenyl)propionyloxy]-5-t-butylphenyl]butane, 2,2-thio-diethylenebis[3-(3,5-di-t-butyl-4-hydroxyphenyl)propionate], octadecyl-3-(3,5-di-t-butyl-4-hydroxyphenyl)propionate, N,N-hexamethylene bis(3,5-di-t-butyl-4-hydroxy-hydrocinnamamide), 1,3,5-trimethyl-2,4,6-tris(3,5-di-t-butyl-4-hydroxybenzyl)benzene, tris-(3,5-di-t-butyl-4-hydroxybenzyl)-isocyanurate, and 3,9-bis[2-[3-(3-t-butyl-4-hydroxy-5-methylphenyl)propionyloxyJ-1,1-dimethylethyl]-2,4,8,10-tetraoxaspiro[5.5]undecane.

In a case where the present composition contains an antioxidant, the content ratio of the antioxidant is, for example, preferably 0.01 parts by mass or more and 10 parts by mass or less with respect to 100 parts by mass of the total of the present polymer and the compound (C).

### <<Method for preparing present composition>>

The method for preparing the present composition is not particularly limited, but for example, the present composition can be prepared by uniformly mixing the polymer (1) and, if necessary, the other components. Moreover, the present composition can be made into a form such as a liquid form or a paste form. In particular, the present polymer is excellent in compatibility with the compound (C), therefore, the present polymer is dissolved in a liquid compound (C) and thereby a solvent-free composition can be obtained.

### 2. Cured product

The cured product according to one embodiment of the present invention is a cured product of the present composition described above, and is obtained by curing the present composition described above.

The shape of the cured product is not particularly limited, and the cured product is formed into an appropriate shape according to the usage or purpose, for example.

The method for curing the present composition is not particularly limited, but usually, there is used a method of thermally curing the composition by heating or a method of photocuring the composition by irradiation with light. Note that, these methods can also be used in combination.

In the case of thermal curing, the heating temperature is preferably in the range from 50 to 350°C, more preferably from 100 to 300°C, and still more preferably from 100 to 280°C. The heating time is preferably in the range from 0.5 to 36 hours, and more preferably from 0.5 to 24 hours.

In the case of photocuring, as the light to be irradiated, examples thereof include visible light, ultraviolet rays, near infrared rays, far infrared rays, and electron beams.

One embodiment of the cured product includes, for example, a film. The film can be obtained as a film-shaped cured product by, for example, melt-molding or cast molding the present composition.

The usage of the film is not particularly limited, but the film can be suitably used as an optical film, and specific examples that can be suitably used include a liquid crystal display element substrate, a light guide plate, a polarizing film, and a retardation film.

The thickness of the film is not particularly limited, and is appropriately selected according to a desired usage, but is, for example, in the range from 0.5 um to 3 mm, preferably from 1 um to 1 mm.

### 3. Molded body

The molded body according to one embodiment of the present invention is formed by molding the polymer (2).

As one embodiment of the molded body, examples thereof include a film. The film can be obtained as a film-shaped molded body by, for example, melt-molding or cast molding the polymer (2).

The usage and thickness of the film are the same as those in the column of the cured product.

### 4. Laminated body

A laminated body according to one embodiment of the present invention includes a substrate and a cured product layer formed by using the present composition; or includes a substrate and a layer formed by using the polymer (2) (hereinafter, this layer is also referred to as a "polymer layer"). The laminated body may include two or more layers of substrates, may include two or more cured product layers or polymer layers, and may include a layer such as another conventionally known layer other than the substrate, the cured product layer and the polymer layer. In a case where the laminated body includes two or more layers of the substrates, the cured product layers, polymer layers and/or another layers, these layers may be the same layers (plates) as each other or different layers (plates) from each other.

Examples of the substrate include a metal substrate, an inorganic substrate (substrate other than the metal substrate), and a resin substrate in terms of adhesiveness and practical use.

Examples of the metal substrate include a metal substrate that contains a component such as copper, aluminum, gold, silver, nickel, or palladium.

Examples of the inorganic substrate include an inorganic substrate that contains a component such as silicon, silicon carbide, silicon nitride, alumina, glass, or gallium nitride.

Examples of the resin substrate include a resin substrate that contains a component such as a liquid crystal polymer, polyimide, polyphenylene sulfide, polyamide (nylon), polyethylene terephthalate, polyethylene naphthalate, or polyolefin.

The cured product layer can be formed by, for example, applying the present composition onto a substrate and then thermally curing and/or photocuring the composition.

The polymer layer can be formed by, for example, disposing a polymer (2) onto a substrate and then melting the polymer (2).

The thicknesses of the cured product layer and the polymer layer are not particularly limited, and are, for example, in the range from 1 um to 3 mm.

### <Usage>

The present polymer, the present composition, the cured product, the molded body, and the laminated body can be suitably used as a structural material used in a transport machine industry such as an aircraft industry or an automobile industry, an electrical and electronic material used in an electrical and electronic industry, for example. Specific examples they can be suitably used for include sealing materials for electrical and electronic components, interlayer insulating films, various primers such as for stress relaxation/tacky adhesion/adhesion/and insulation; laminated plates (e.g., printed wiring boards, interlayer adhesives, solder resists, solder pastes); adhesives (e.g., thermally conductive adhesive, adhesive sheet); tacky adhesives (e.g., insulating tape, conductive tape); structural adhesives/prepregs used for various structural materials; various coating agents; optical components (e.g., optical films such as wave plates and retardation plates, various special lenses such as conical lenses, spherical lenses, and cylindrical lenses, and lens arrays);and insulating films for printed wiring boards, for example.

### 5. Electronic component

An electronic component according to one embodiment of the present invention includes the above-described laminated body. The electronic component may include two or more laminated bodies. In the case of including two or more laminated bodies, these laminated bodies may each be the same as each other or different from each other.

Examples of the electronic component include circuit boards, semiconductor packages, or display boards.

The cured product layer and the polymer layer in the laminated body can be used as a surface protective film, a rewiring layer, or a planarization film of these electronic components. The cured product layer and the polymer layer can maintain insulation even under high temperature and high humidity, and hence the electronic component is configured such that its circuit pattern can be protected from an external environment such as dust, heat, and moisture, is excellent in the insulation reliability between circuit patterns and can be stably operated for many years.

For example, a metal is filled in between patterns of the cured product layer or the polymer layer by, for example, plating, the cured product layer and/or the polymer layer is further layered as necessary, and metal filling is repeated thereby enabling to form a rewiring layer, as a result of this, an electronic component with a substrate and a rewiring layer that includes a metal wiring and an insulating film can be manufactured.

### Examples

Hereinafter, one embodiment of the present invention will be specifically described with reference to Examples, but the present invention is not limited to the following Examples.

### [1] Synthesis of polymer

### (Example 1)

2-Phenylamino-4,6-dichloro-s-triazine (AnDCT) (19.0 g), dimer diamine (Priamine 1075 (manufactured by Croda Japan K.K.)) (21.1 g), 1,3-bisaminomethylcyclohexane (5.6 g), and potassium carbonate (12.0 g) were weighed and put into a four-neck separable flask equipped with a stirrer, thereto were added cyclohexanone (74.7 g) and water (32.0 g), and this mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (10) represented by Formula (10) set forth below and having a solid content of 30% by mass.

Note that, since the dimer diamine is not a single substance as described above, the structure derived from the dimer diamine represented by the following formula represents a typical structure thereof. The same applies to the formulae described in Examples set forth below.

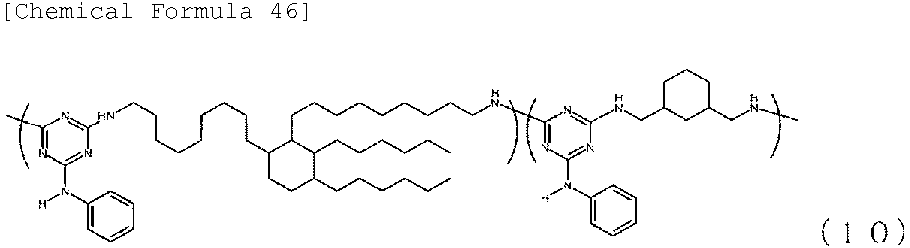

### (Example 2)

A solution of a desired polymer (11) having a solid content of 30% by mass was obtained in the same manner as in Example 1 except that the components used in Example 1 were changed as follows.

2-phenylamino-4,6-dichloro-s-triazine (24.8 g), Priamine 1075 (11.0 g), 1,3-bisaminomethylcyclohexane (11.7 g), potassium carbonate (15.6 g), cyclohexanone (88.7 g), water (22.1 g)

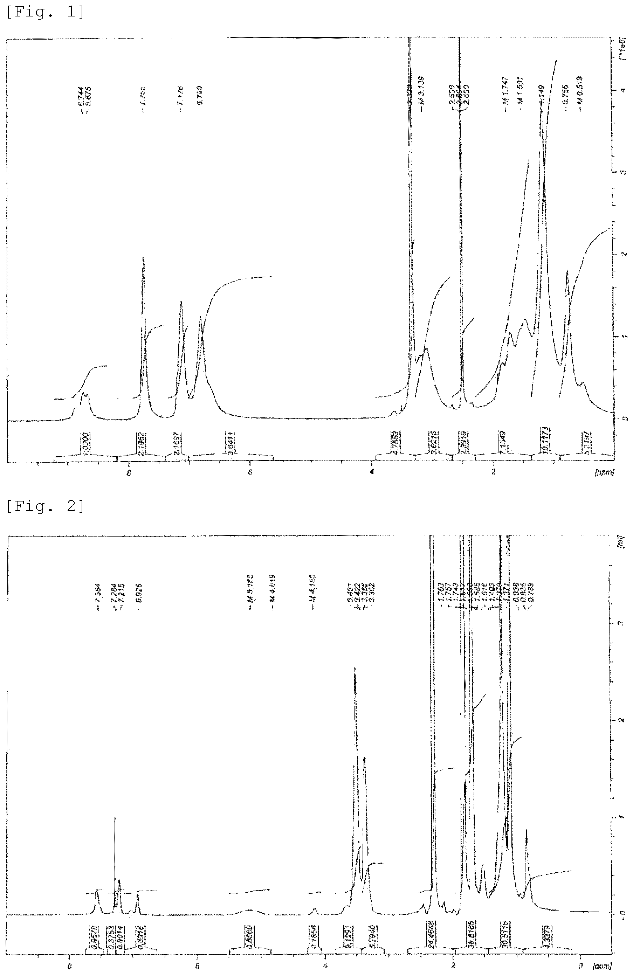

The ¹H-NMR spectrum of the obtained polymer (11) is shown in Fig. 1.

From peaks around 1.5 ppm and 0.5 ppm in the ¹H-NMR spectrum, the obtained polymer (11) was confirmed to be a polymer having a structure represented by Formula (10) set forth above.

Note that, ¹H-NMR was measured as follows. ¹H-NMR of the following polymers was also measured in the same manner.

### <¹H-NMR Measurement>

¹H-NMR measurement of the polymer was performed using a nuclear magnetic resonance apparatus ("ECX 400P" manufactured by JEOL Ltd.) and using heavy chloroform as a measurement solvent.

### (Example 3)

A solution of a desired polymer (12) represented by Formula (12) set forth below and having a solid content of 30% by mass was obtained in the same manner as in Example 1 except that the components used in Example 1 were changed as follows.

2-phenylamino-4,6-dichloro-s-triazine (17.4 g), Priamine 1075 (19.3 g), 4,4'-methylenebis(2-methylcyclohexylamine) (isomer mixture) (8.6 g), potassium carbonate (11.0 g), cyclohexanone (73.9 g), water (31.7 g)

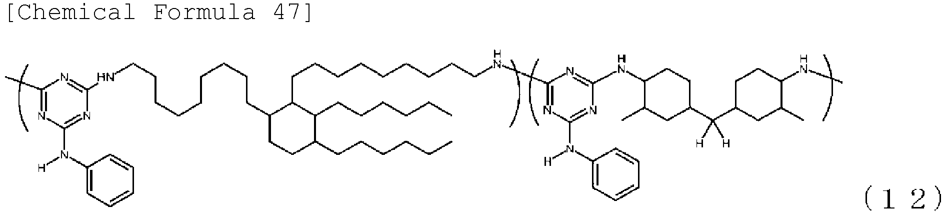

From ¹H-NMR spectrum, the obtained polymer (12) was confirmed to be a polymer having a structure represented by Formula (12) set forth above.

### (Example 4)

A solution of a desired polymer (13) represented by Formula (13) set forth below and having a solid content of 30% by mass was obtained in the same manner as in Example 1 except that the components used in Example 1 were changed as follows.

2-phenylamino-4,6-dichloro-s-triazine (15.0 g), Priamine 1075 (16.7 g), 2,2-bis[4-(4-aminophenoxy)phenyl]propane (12.8 g), potassium carbonate (17.3 g), cyclohexanone (117.6 g), water (60.6 g)

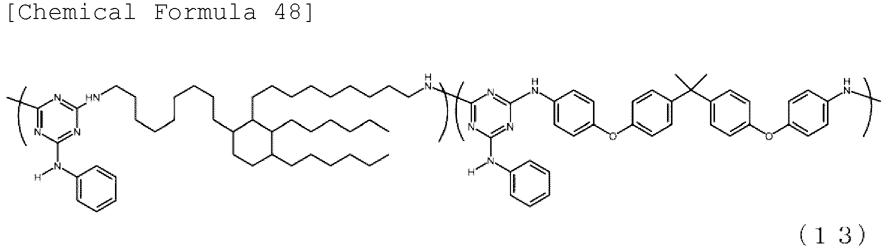

From ¹H-NMR spectrum, the obtained polymer (13) was confirmed to be a polymer having a structure represented by Formula (13) set forth above.

### (Example 5)

A solution of a desired polymer (14) represented by Formula (14) set forth below and having a solid content of 30% by mass was obtained in the same manner as in Example 1 except that the components used in Example 1 were changed as follows.

2-phenylamino-4,6-dichloro-s-triazine (8.4 g), Priamine 1075 (13.1 g), poly(propylene glycol)diamine (JEFFAMINE-D 2000 [manufactured by Huntsman Corporation]) (21.0 g), potassium carbonate (5.3 g), cyclohexanone (69.5 g), water (29.8 g)

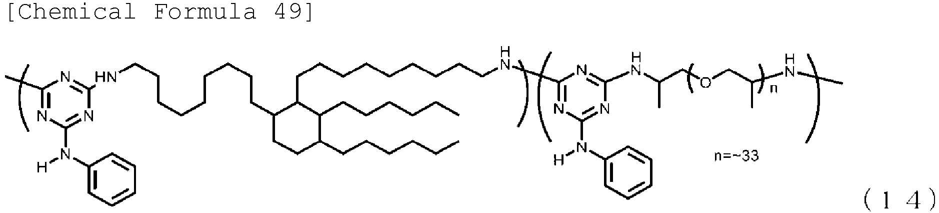

The ¹H-NMR spectrum of the obtained polymer (14) is shown in Fig. 2.

From the ¹H-NMR spectrum, the obtained polymer (14) was confirmed to be a polymer having a structure represented by Formula (14) set forth above.

### (Example 6)

A solution of a desired polymer (15) having a solid content of 30% by mass was obtained in the same manner as in Example 5 except that the components used in Example 5 were changed as follows.

2-phenylamino-4,6-dichloro-s-triazine (6.6 g), Priamine 1075 (7.5 g), poly(propylene glycol)diamine (JEFFAMINE-D 2000) (27.9 g), potassium carbonate (4.2 g), cyclohexanone (68.6 g), water (29.4 g)

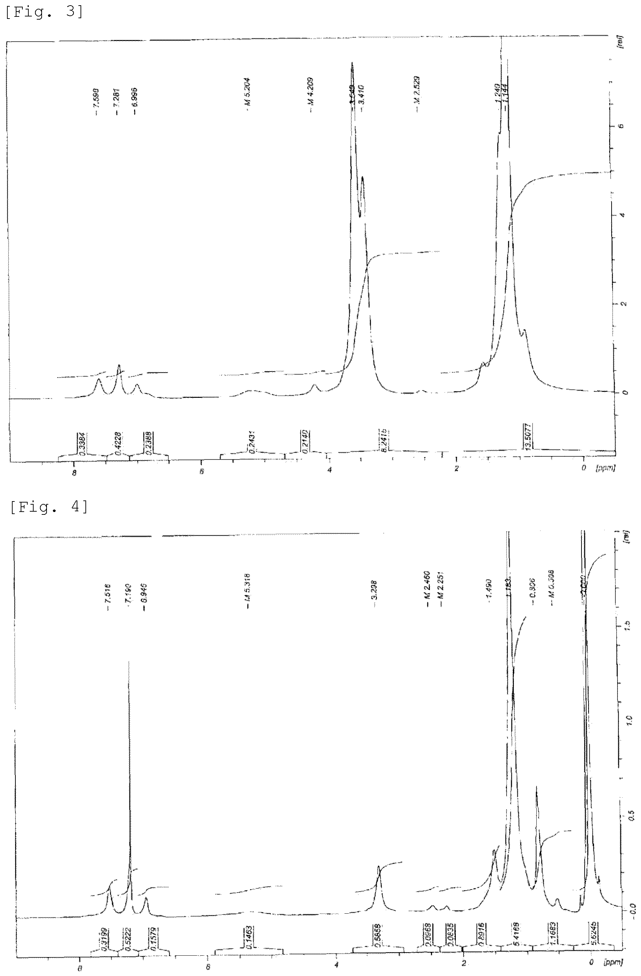

The ¹H-NMR spectrum of the obtained polymer (15) is shown in Fig. 3.

From the ¹H-NMR spectrum, the obtained polymer (15) was confirmed to be a polymer having a structure represented by Formula (14) set forth above.

### (Example 7)

A solution of a desired polymer (16) represented by Formula (16) set forth below and having a solid content of 30% by mass was obtained in the same manner as in Example 1 except that the components used in Example 1 were changed as follows.

2-phenylamino-4,6-dichloro-s-triazine (10.2 g), Priamine 1075 (20.3 g), dual-end amino-modified silicone oil (X-22-161B [manufactured by Shin-Etsu Chemical Co., Ltd.]) (12.6 g), potassium carbonate (6.4 g), cyclohexanone (70.4 g), water (30.2 g)

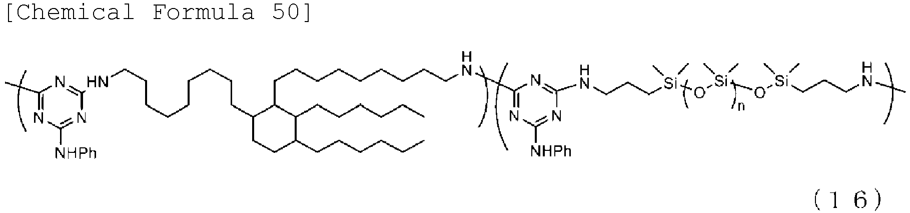

### (Example 8)

A solution of a desired polymer (17) having a solid content of 30% by mass was obtained in the same manner as in Example 7 except that the components used in Example 7 were changed as follows.

2-phenylamino-4,6-dichloro-s-triazine (8.1 g), Priamine 1075 (14.3 g), dual-end amino-modified silicone oil (X-22-161B) (20.1 g), potassium carbonate (5.1 g), cyclohexanone (69.3 g), water (29.7 g)

The ¹H-NMR spectrum of the obtained polymer (17) is shown in Fig. 4.

From a peak near 0 ppm (-Si-CH₃, 0.13 ppm, see National Institute of Advanced Industrial Science and Technology: spectrum database of organic compounds) in the ¹H-NMR spectrum, the obtained polymer (17) was confirmed to be a polymer having a structure represented by Formula (16) set forth above.

### (Example 9)

A solution of a desired polymer (18) having a solid content of 30% by mass was obtained in the same manner as in Example 7 except that the components used in Example 7 were changed as follows.

2-phenylamino-4,6-dichloro-s-triazine (10.0 g), Priamine 1075 (16.5 g), dual-end amino-modified silicone oil (X-22-161A [manufactured by Shin-Etsu Chemical Co., Ltd.]) (16.5 g), potassium carbonate (6.3 g), cyclohexanone (70.3 g), water (30.1 g)

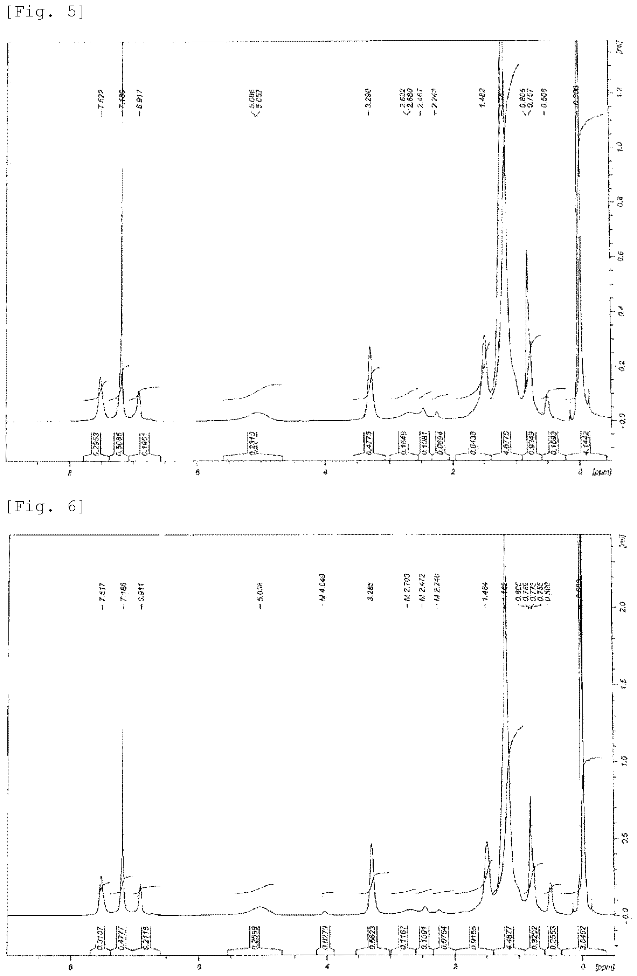

The ¹H-NMR spectrum of the obtained polymer (18) is shown in Fig. 5.

The structure of the obtained polymer (18) was confirmed from a peak near 0 ppm (-Si-CH₃, 0.13 ppm, see National Institute of Advanced Industrial Science and Technology: spectrum database of organic compounds) in the ¹H-NMR spectrum.

### (Example 10)

A solution of a desired polymer (19) having a solid content of 30% by mass was obtained in the same manner as in Example 7 except that the components used in Example 7 were changed as follows.

2-phenylamino-4,6-dichloro-s-triazine (11.6 g), Priamine 1075 (15.4 g), dual-end amino-modified silicone oil (KF-8010 [manufactured by Shin-Etsu Chemical Co., Ltd.]) (16.5 g), potassium carbonate (7.3 g), cyclohexanone (71.1 g), water (30.4 g)

The ¹H-NMR spectrum of the obtained polymer (19) is shown in Fig. 6.

The structure of the obtained polymer (19) was confirmed from a peak near 0 ppm (-Si-CH₃, 0.13 ppm, see National Institute of Advanced Industrial Science and Technology: spectrum database of organic compounds) in the ¹H-NMR spectrum.

### (Example 11)

A solution of a desired polymer (22) represented by Formula (22) set forth below and having a solid content of 30% by mass was obtained in the same manner as in Example 5 except that the components used in Example 5 were changed as follows.

4,6-dichloro-N,N-diphenyl-1,3,5-triazine-2-amine (PDCT) (10.4 g), Priamine 1075 (12.3 g), poly(propylene glycol)diamine (JEFFAMINE-D 2000) (19.7 g), potassium carbonate (5.0 g), cyclohexanone (69.2 g), water (29.7 g)

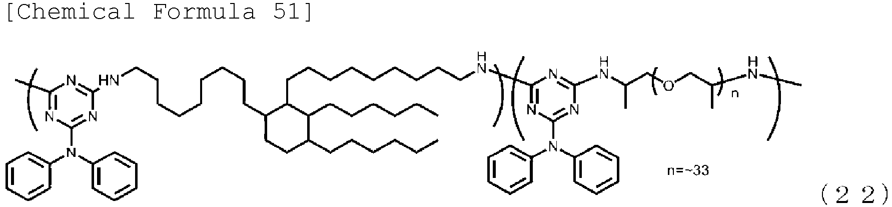

### (Example 12)

A solution of a desired polymer (23) that is represented by Formula (23) set forth below and has a solid content of 30% by mass was obtained in the same manner as in Example 5 except that the components used in Example 5 were changed as follows.

4,6-dichloro-N,N-dimethyl-1,3,5-triazine-2-amine (MDCT) (7.1 g), Priamine 1075 (13.7 g), poly(propylene glycol)diamine (JEFFAMINE-D 2000) (21.9 g), potassium carbonate (5.6 g), cyclohexanone (69.7 g), water (29.9 g)

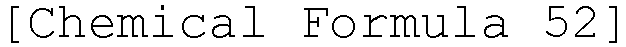

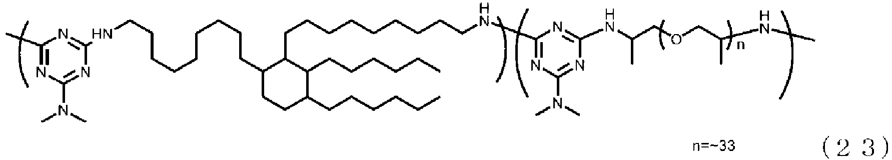

### (Example 13)

A solution of a desired polymer (24) that is represented by Formula (24) set forth below and has a solid content of 30% by mass was obtained in the same manner as in Example 5 except that the components used in Example 5 were changed as follows.

4,6-dichloro-1,3,5-triazine-2-amine (ADCT) (6.2 g), Priamine 1075 (14.0 g), poly(propylene glycol)diamine (JEFFAMINE-D 2000) (22.5 g), potassium carbonate (5.7 g), cyclohexanone (69.8 g), water (29.9 g)

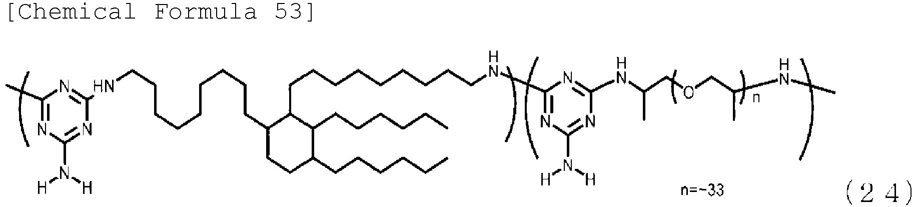

### (Example 80)

2-Phenylamino-4,6-dichloro-s-triazine (AnDCT) (17.8 g), dimer diamine (Priamine 1075) (19.8 g), 1,3-bis(4-piperidyl)propane (7.8 g), and potassium carbonate (10.4 g) were weighed and put into a four-neck separable flask equipped with a stirrer, thereto were added cyclohexanone (60.0 g) and water (25.7 g), and this mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (25) represented by Formula (25) set forth below and having a solid content of 30% by mass.

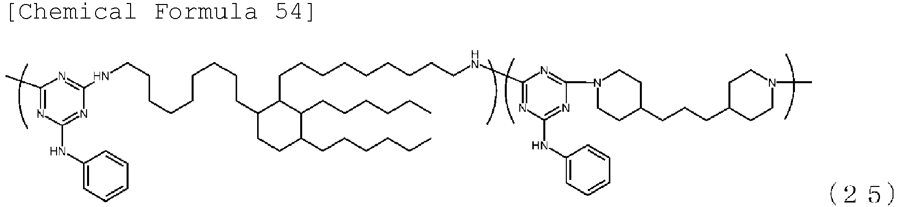

### (Example 81)

2-Phenylamino-4,6-dichloro-s-triazine (AnDCT) (20.1 g), dimer diamine (Priamine 1075) (22.4 g), piperazine (3.6 g), and potassium carbonate (11.8 g) were weighed and put into a four-neck separable flask equipped with a stirrer, cyclohexanone (60.0 g) and water (25.7 g) were added thereto, and the mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (26) represented by Formula (26) set forth below and having a solid content of 30% by mass.

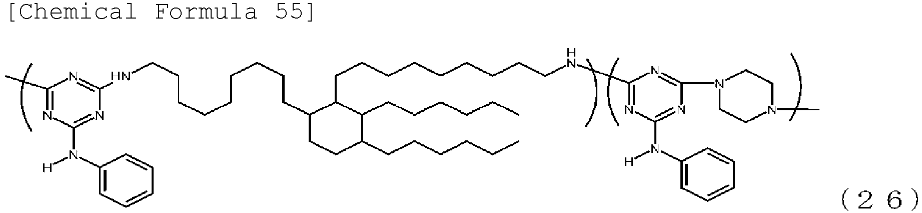

### (Example 82)

2-Phenylamino-4,6-dichloro-s-triazine (AnDCT) (19.9 g), dimer diamine (Priamine 1075) (22.0 g), homopiperazine (4.1 g), and potassium carbonate (11.6 g) were weighed and put into a four-neck separable flask equipped with a stirrer, cyclohexanone (60.0 g) and water (25.7 g) were added thereto, and the mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (27) represented by Formula (27) set forth below and having a solid content of 30% by mass.

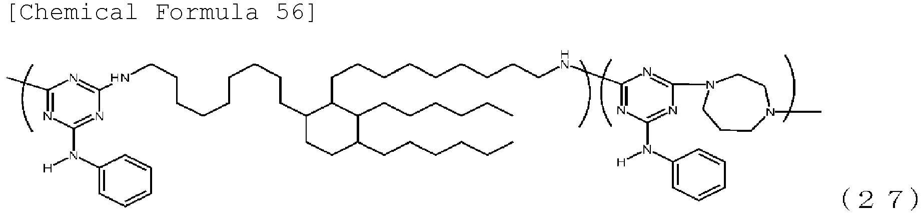

### (Example 83)

2-Phenylamino-4,6-dichloro-s-triazine (AnDCT) (19.6 g), dimer diamine (Priamine 1075) (21.7 g), 4-(aminomethyl)piperidine (4.6 g), and potassium carbonate (11.4 g) were weighed and put into a four-neck separable flask equipped with a stirrer, and cyclohexanone (60.0 g) and water (25.7 g) were added thereto, and the mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of the polymer (28) represented by Formula (28) set forth below and having a solid content of 30% by mass.

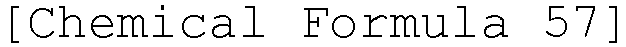

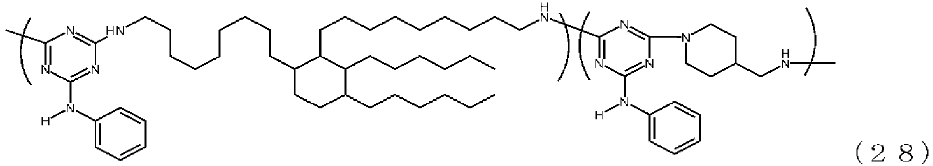

### (Example 84)

2-Phenylamino-4,6-dichloro-s-triazine (AnDCT) (18.5 g), dimer diamine (Priamine 1075) (20.5 g), N,N'-diethyl-1,6-diaminohexane (6.6 g), and potassium carbonate (10.8 g) were weighed and put into a four-neck separable flask equipped with a stirrer, cyclohexanone (60.0 g) and water (25.7 g) were added thereto, and the mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of the polymer (29) represented by Formula (29) set forth below and having a solid content of 30% by mass.

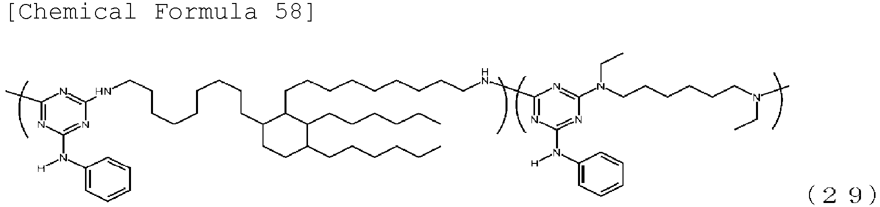

### (Example 85)

2-Methyl-2-phenylamino-4,6-dichloro-s-triazine (AMDCT) (19.0 g), dimer diamine (Priamine 1075) (20.0 g), N,N'-diethyl-1,6-diaminohexane (6.4 g), and potassium carbonate (10.5 g) were weighed and put into a four-neck separable flask equipped with a stirrer, thereto were added cyclohexanone (60.0 g) and water (25.7 g), and this mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (50) represented by Formula (50) set forth below and having a solid content of 30% by mass.

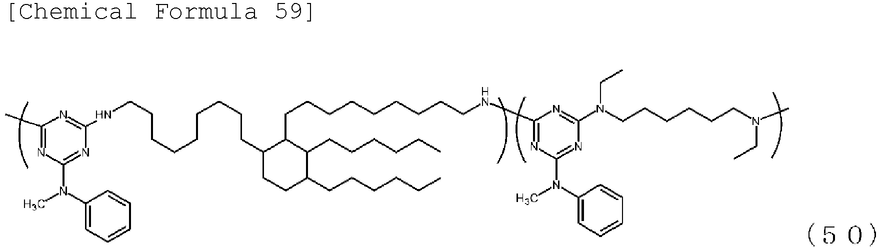

### (Example 86)

2-Phenylamino-4,6-dichloro-s-triazine (AnDCT) (19.0 g), dimer diamine (Priamine 1075) (21.1 g), N,N'-dimethyl-1,6-diaminohexane (5.9 g), and potassium carbonate (11.1 g) were weighed and put into a four-neck separable flask equipped with a stirrer, thereto were added cyclohexanone (60.0 g) and water (25.7 g), and the mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (51) represented by Formula (51) set forth below and having a solid content of 30% by mass.

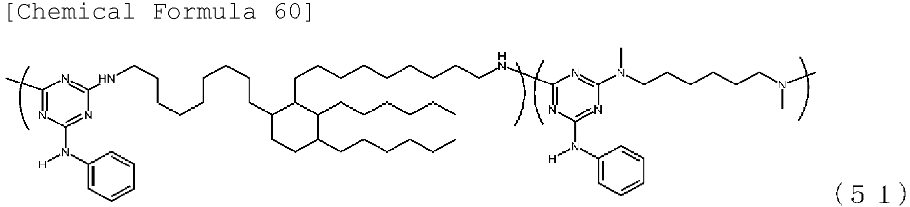

### (Example 87)

2-Phenylamino-4,6-dichloro-s-triazine (AnDCT) (8.8 g), 2-methyl-2-phenylamino-4,6-dichloro-s-triazine (AMDCT) (9.3 g), dimer diamine (Priamine 1075) (19.5 g), 1,3-bis(4-piperidyl)propane (7.7 g), and potassium carbonate (11.1 g) were weighed and put into a four-neck separable flask equipped with a stirrer, thereto were added cyclohexanone (60.0 g) and water (25.7 g), and this mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (52) having the structural units represented by Formula (52) set forth below and a solid content of 30% by mass. 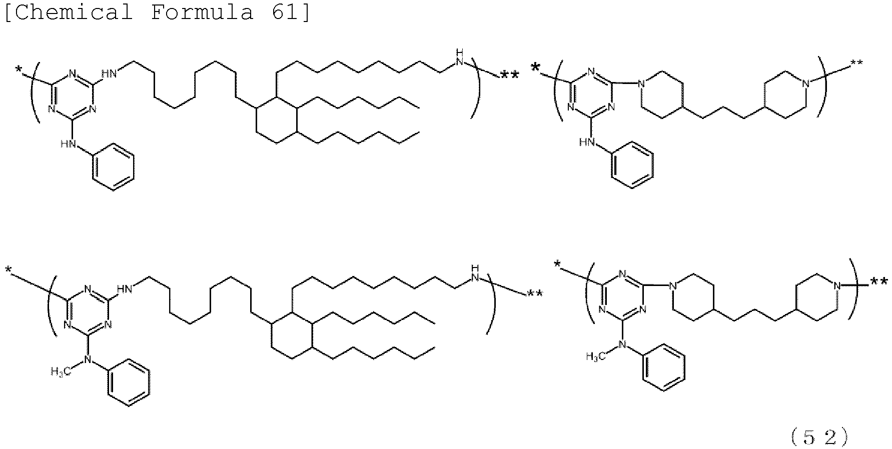 [In Formula (52), * is represented to be bonded to **.]

### (Example 88)

4,6-Dichloro-N,N-diphenyl-1,3,5-triazine-2-amine (PDCT) (11.2 g), 2-methyl-2-phenylamino-4,6-dichloro-s-triazine (AMDCT) (9.0 g), dimer diamine (Priamine 1075) (18.9 g), N,N'-diethyl-1,6-diaminohexane (6.1 g), and potassium carbonate (10.7 g) were weighed and put into a four-neck separable flask equipped with a stirrer, thereto were added cyclohexanone (60.0 g) and water (25.7 g), and this mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (53) having the structural units represented by Formula (53) set forth below and a solid content of 30% by mass. 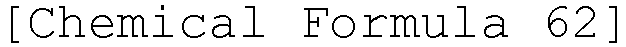 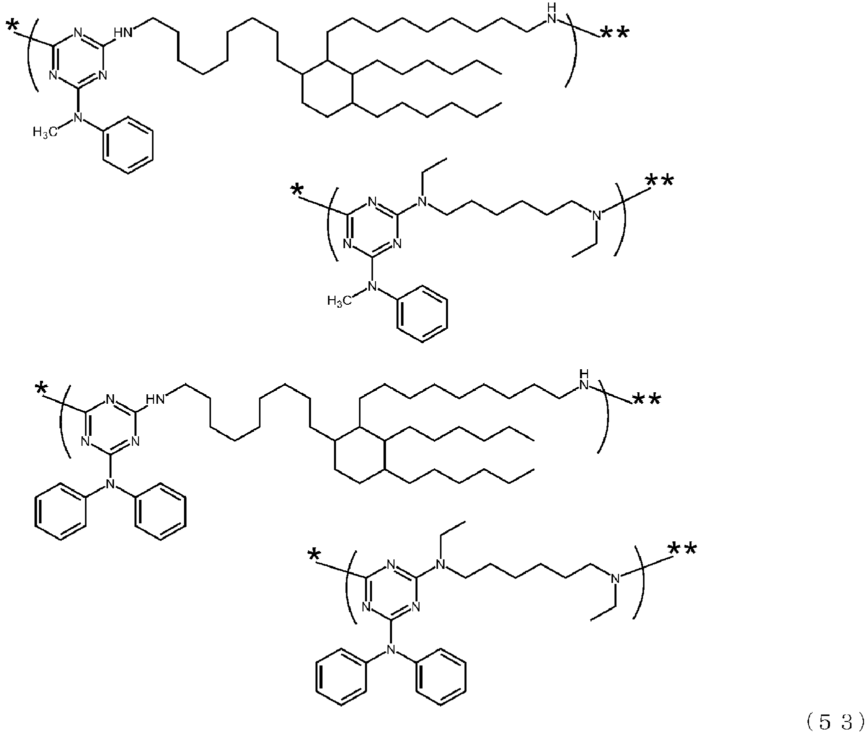 [In Formula (53), * is represented to be bonded to **.]

### (Example A1)

2-Phenylamino-4,6-dichloro-s-triazine (AnDCT) (13.6 g), dimer diamine (Priamine 1075) (30.1 g), diallylamine (0.44 g) and potassium carbonate (7.9 g) were weighed and put into a four-neck separable flask equipped with a stirrer, thereto were added cyclohexanone (60.0 g) and water (25.7 g), and this mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (39) represented by Formula (39) set forth below and having a solid content of 30% by mass.

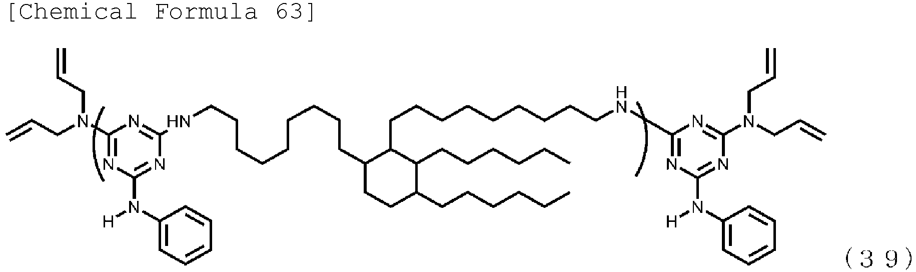

### (Example A2)

A solution of a desired polymer (40) represented by Formula (40) set forth below and having a solid content of 30% by mass was obtained in the same manner as in Example A1 except that the components used in Example A1 were changed as follows.

2-phenylamino-4,6-dichloro-s-triazine (AnDCT) (13.5 g), dimer diamine (Priamine 1075) (29.9 g), methacrylic anhydride (0.69 g), potassium carbonate (7.9 g)

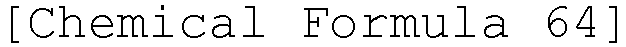

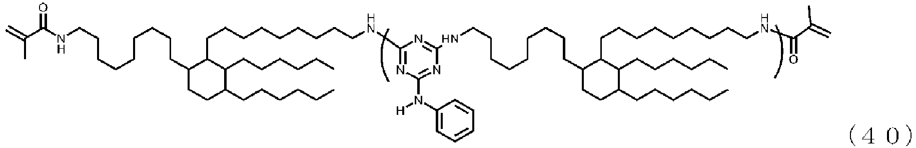

### (Example A3)

A solution of a desired polymer (41) represented by Formula (41) set forth below and having a solid content of 30% by mass was obtained in the same manner as in Example A1 except that the components used in Example A1 were changed as follows.

2-phenylamino-4,6-dichloro-s-triazine (AnDCT) (13.6 g), dimer diamine (Priamine 1075) (30.1 g), acryloyl chloride (0.41 g), potassium carbonate (7.9 g)

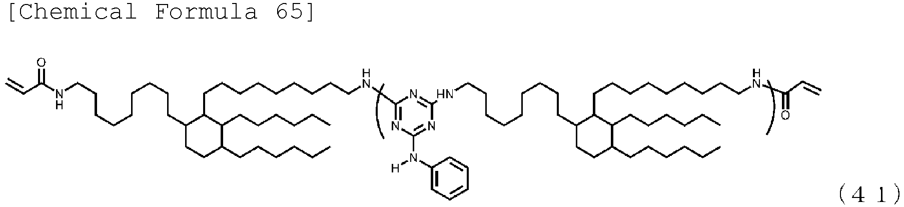

### (Example A4)

A solution of a desired polymer (42) represented by Formula (42) set forth below and having a solid content of 30% by mass was obtained in the same manner as in Example A1 except that the components used in Example A1 were changed as follows.

2-phenylamino-4,6-dichloro-s-triazine (AnDCT) (13.6 g), dimer diamine (Priamine 1075) (30.1 g), chloromethylstyrene (m-, p- mixture) (0.43 g), potassium carbonate (7.9 g)

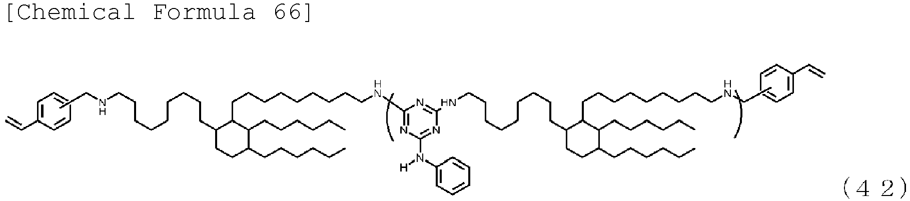

### (Example A5)

A solution of a desired polymer (43) represented by Formula (43) set forth below and having a solid content of 30% by mass was obtained in the same manner as in Example A1 except that the components used in Example A1 were changed as follows.

2-phenylamino-4,6-dichloro-s-triazine (AnDCT) (13.9 g), dimer diamine (Priamine 1075) (30.2 g), 4-(2-aminoethyl)phenol (0.16 g), potassium carbonate (8.1 g)

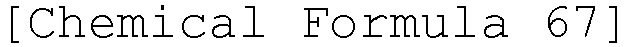

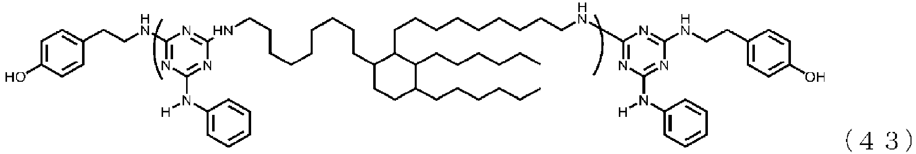

### (Example A6)

Trichlorotriazine (11.0 g), dimer diamine (Priamine 1075) (30.1 g), and potassium carbonate (7.9 g) were weighed and put into a four-neck separable flask equipped with a stirrer, thereto were added cyclohexanone (60.0 g) and water (25.7 g), and this mixture was allowed to react at 60°C for 2 hours under an atmosphere of nitrogen. After completion of the reaction, diallylamine (9.0 g) and a 1% by mass cyclohexane solution of 4-hydroxy-2,2,6,6-tetramethylpiperidine 1-oxyl (5.2 g) were added, and this mixture was allowed to further react at 100°C for 13 hours. After completion of the reaction, the aqueous phase portion was separated with a separating funnel, and the organic phase was washed with deionized water until it became neutral, and then the solvent was concentrated to give a solution of a polymer (44) represented by Formula (44) set forth below and having a solid content of 30% by mass.

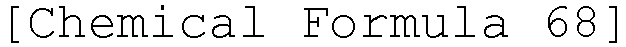

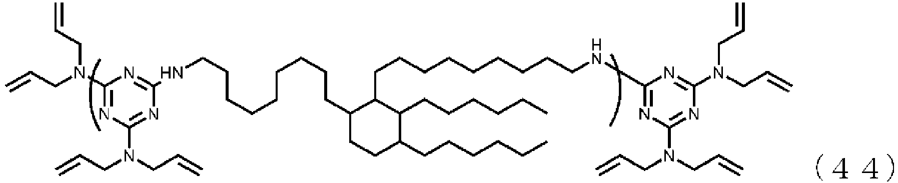

### (Example A7)

Trichlorotriazine (10.0 g), dimer diamine (Priamine 1075) (24.8 g), and potassium carbonate (11.5 g) were weighed and put into a four-neck separable flask equipped with a stirrer, thereto were added cyclohexanone (60.0 g) and water (25.7 g), and this mixture was allowed to react at 60°C for 2 hours under an atmosphere of nitrogen. After completion of the reaction, 4-(2-aminoethyl)phenol (11.7 g) and a 1% by mass cyclohexane solution of 4-hydroxy-2,2,6,6-tetramethylpiperidine 1-oxyl (5.2 g) were added, and this mixture was allowed further to react at 100°C for 13 hours. After completion of the reaction, the aqueous phase portion was separated with a separating funnel, and the organic phase was washed with deionized water until it became neutral, and then the solvent was concentrated to give a solution of a polymer (45) represented by Formula (45) set forth below and having a solid content of 30% by mass.

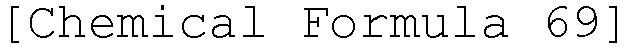

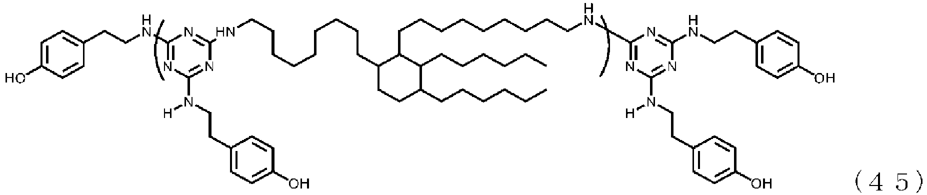

### (Example A8)

2-Phenylamino-4,6-dichloro-s-triazine (AnDCT) (13.4 g), dimer diamine (Priamine 1075) (29.8 g), 4-hydroxyphenylmaleimide (0.84 g) and potassium carbonate (8.5 g) were weighed and put into a four-neck separable flask equipped with a stirrer, thereto were added cyclohexanone (40.0 g) and water (25.7 g), and this mixture was allowed to react at 100°C for 20 hours under an atmosphere of nitrogen. After completion of the reaction, the aqueous phase portion was separated with a separating funnel, and the organic phase was washed with deionized water until it became neutral, and then the solvent was concentrated to give a solution of a polymer (46) represented by Formula (46) set forth below and having a solid content of 30% by mass.

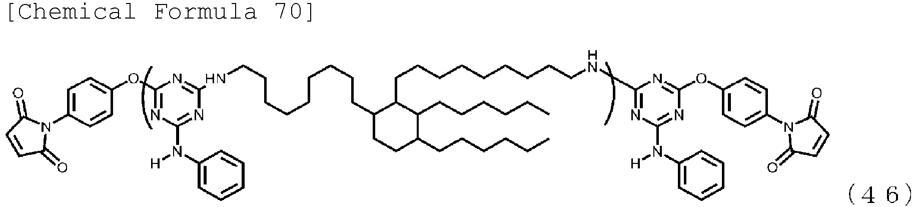

### (Comparative Example 1)

A commercially available ULTIMID 3000A (manufactured by ABC Nanotech., LTD.), which is a flexible bismaleimide oligomer, was used as Comparative Example 1 (polymer (30)).

### (Comparative Example 2)

A commercially available jER 872 (manufactured by Mitsubishi Chemical Corporation), which is a flexible bisphenol A type epoxy resin, was used as Comparative Example 2 (polymer (31)).

### (Comparative Example 3)

2,4-Dichloro-6-phenoxy-1,3,5-triazine (24.3 g), 2,2-bis(4-hydroxyphenyl)propane (23.0 g), and potassium carbonate (15.3 g) were weighed and put into a four-neck separable flask equipped with a stirrer, thereto were added N-methyl-2-pyrrolidone (77.3 g) and water (33.1 g), and this mixture was allowed to react at 100°C for 20 hours under an atmosphere of nitrogen. After completion of the reaction, methanol coagulation, filtration and methanol washing were performed to afford 31 g (yield 78%) of a target polymer (32) composed of a repeating unit represented by Formula (32) set forth below.

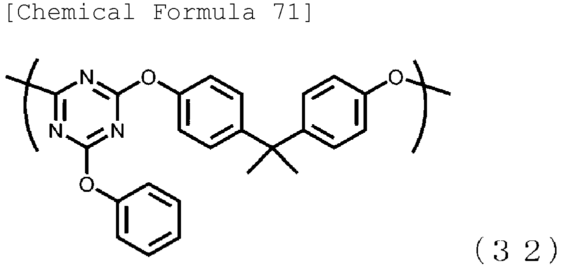

### (Comparative Example 4)

2,4-Dichloro-6-phenoxy-1,3,5-triazine (26.1 g), bis(4-hydroxyphenyl)ether (21.8 g), and potassium carbonate (16.4 g) were weighed and put into a four-neck separable flask equipped with a stirrer, thereto were added N-methyl-2-pyrrolidone (78.1 g) and water (33.5 g), and this mixture was allowed to react at 100°C for 20 hours under an atmosphere of nitrogen. After completion of the reaction, methanol coagulation, filtration and methanol washing were performed to afford 30 g (yield 75%) of a target polymer (33) composed of a repeating unit represented by Formula (33) set forth below.

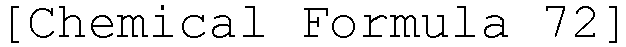

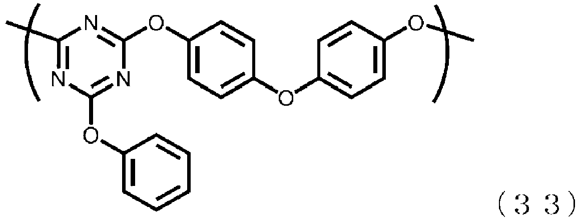

### (Comparative Example 5)

2-Phenylamino-4,6-dichloro-s-triazine (AnDCT) (24.4 g), 4,4'-diaminobenzanilide (23.0 g), and potassium carbonate (15.4 g) were weighed and put into a four-neck separable flask equipped with a stirrer, thereto were added N-methyl-2-pyrrolidone (77.4 g) and water (33.2 g), and this mixture was allowed to react at 100°C for 20 hours under an atmosphere of nitrogen. After completion of the reaction, methanol coagulation, filtration and methanol washing were performed to afford 30 g (yield 75%) of a target polymer (34) composed of a repeating unit represented by Formula (34) set forth below.

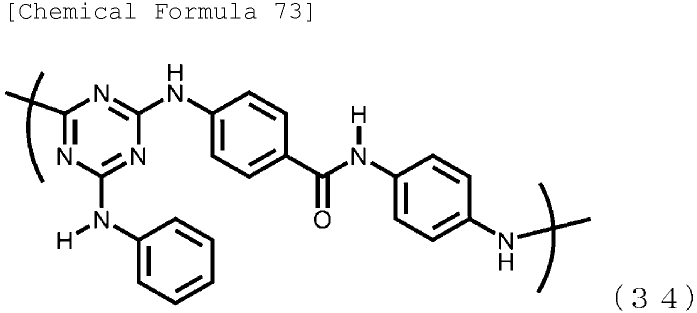

### (Comparative Example 6)

2-Phenylamino-4,6-dichloro-s-triazine (AnDCT) (29.9 g), bis(aminomethyl) norbornane (19.1 g), and potassium carbonate (18.9 g) were weighed and put into a four-neck separable flask equipped with a stirrer, thereto were added N-methyl-2-pyrrolidone (80.1 g) and water (34.3 g), and this mixture was allowed to react at 100°C for 20 hours under an atmosphere of nitrogen. After completion of the reaction, methanol coagulation, filtration and methanol washing were performed to afford 29 g (yield 73%) of a target polymer (35) composed of a repeating unit represented by Formula (35) set forth below.

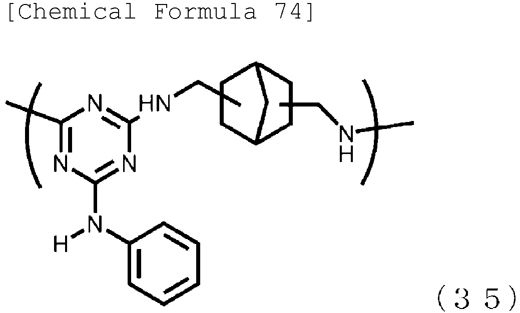

### (Comparative Example 7)

2-Phenylamino-4,6-dichloro-s-triazine (26.2 g), 1,12 diaminododecane (21.7 g), and potassium carbonate (16.5 g) were weighed and put into a four-neck separable flask equipped with a stirrer, thereto were added N-methyl-2-pyrrolidone (78.3 g) and water (33.5 g), and this mixture was allowed to react at 100°C for 20 hours under an atmosphere of nitrogen. After completion of the reaction, methanol coagulation, filtration and methanol washing were performed to afford 31 g (yield 78%) of a target polymer (36) composed of a repeating unit represented by Formula (36) set forth below.

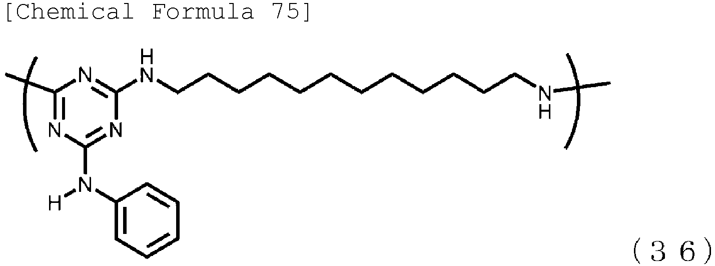

### (Comparative Example 8)

1,1-Bis(4-hydroxyphenyl)-3,3,5-trimethylcyclohexane (15.5 g), 4,4'-dichlorodiphenylsulfone (14.4 g), and potassium carbonate (9.3 g) were weighed and put into a four-neck separable flask equipped with a stirrer, thereto were added N-methylpyrrolidone (128 g) and toluene (50 g), and this mixture was stirred. Toluene was refluxed for several hours under nitrogen, followed by removing toluene by distillation, and the mixture was further allowed to react at 190°C for 6 hours. After completion of the reaction, the mixture was diluted by adding N-methylpyrrolidone (398 g), the salt was filtered with filter paper and then the filtrate was coagulated with 10.5 kg of methanol. The coagulated powder was separated by filtration, and the powder was washed again with a small amount of methanol and then separated by filtration, and the residue was dried at 120°C for 12 hours under reduced pressure using a vacuum dryer and thereby affording 23 g (yield 89%) of a target polymer (37) composed of repeating units represented by Formula (37) set forth below.

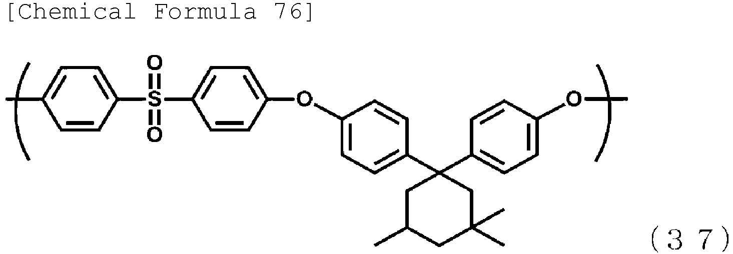

### (Comparative Example 9)

According to the method described in Macromolecules, 3, 533-535 (1970), a desired polymer (38) composed of a repeating unit represented by Formula (38) set forth below was obtained.

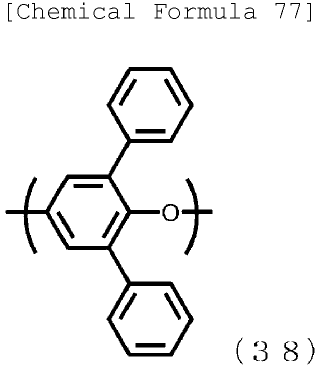

### [2] Evaluation of physical properties of polymer

Each polymer obtained as described above was used to evaluate a weight average molecular weight (Mw), a glass transition temperature (Tg) or a softening point, a 5% mass loss temperature (Td5), a dielectric loss tangent (Df), solubility in cyclohexanone, applicability, adhesion to a substrate (adhesion to copper foil and adhesion to gold substrate), and tackiness at room temperature according to the following methods. Note that, the Mw, Tg, softening point, and Td5 in a case where each polymer was obtained in a solution state (Examples 1 to 13, Examples 80 to 88, and Examples A1 to A8) were evaluated as follows after a single film was obtained according to the following method. The evaluation results are shown in Table 1.

Note that, "-" in the table means that the corresponding evaluation item was not measured.

### <Preparation of polymer single film>

A solution of each polymer was applied to a copper foil (CF-T9DA-SV [manufactured by FUKUDA METAL FOIL & POWDER CO., LTD.]), followed by preliminary drying at 70°C for 3 minutes and then at 130°C for 3 minutes, and furthermore the solvent was evaporated at 150°C for 30 minutes and then at 250°C for 3 hours under an atmosphere of nitrogen to form a coating film. The formed coating film with the copper foil was immersed in a 40% iron (III) chloride solution and thereby removing the copper foil, the film was washed with pure water, followed by drying at 80°C to prepare a polymer single film.

### <Weight average molecular weight (Mw)>

The weight average molecular weight (Mw) of each polymer was measured under the following THF conditions in a case where the obtained polymer was dissolved in tetrahydrofuran (THF) (Examples 1 to 13, Examples 80 to 88, and Examples A1 to A8), and was measured under the following N-methyl-2-pyrrolidone conditions in a case where the obtained polymer was insoluble in THF (Comparative Example 3 to 9), by using a GPC apparatus ("HLC-8320 type, 8420 type" manufactured by Tosoh Corporation). Note that, Comparative Example 7 was partially insoluble in N-methyl-2-pyrrolidone, but the Mw was measured by using its soluble part.

### · THE conditions

Column: a connected column of "TSKgel α-M" manufactured by Tosoh Corporation and "TSKgel guardcolumn α" manufactured by Tosoh Corporation
Developing solvent: THF
Column temperature: 40°C
Flow rate: 1.0 mL/min
Sample concentration: 0.75% by mass
Sample injection amount: 50 µL
Detector: differential refractometer
Standard substance: monodisperse polystyrene

### · N-methyl-2-pyrrolidone conditions

Developing solvent: N-methyl-2-pyrrolidone (added with 10 mM of LiBr)
Column temperature: 40°C
Flow rate: 1.0 mL/min
Sample concentration: 0.75% by mass
Sample injection amount: 50 µL
Detector: differential refractometer
Standard substance: monodisperse polystyrene

### <Glass transition temperature (Tg)>

The glass transition temperature (Tg) of each polymer was determined as a temperature corresponding to the intersection of the baseline and the tangent line at the inflection point in the DSC temperature rising curve of the thermogram obtained at a heating rate of 20°C/min under an atmosphere of nitrogen using a differential scanning calorimeter (DSC apparatus "Thermo Plus DSC 8230" manufactured by Rigaku Corporation). The inflection point was determined as a temperature corresponding to a peak in a DDSC curve which is a differential curve of a DSC temperature rise curve. Moreover, the DDSC curve was appropriately referred to for confirmation of the baseline of DSC.

### <Softening point: TMA inflection point>

For a polymer for which measurement by the glass transition temperature (Tg) was difficult or whose glass transition temperature was unclear, the softening point was determined based on the TMA inflection point. The softening point was determined as a temperature corresponding to the intersection of the tangent line of the baseline and the tangent line of the line (post-inflection line) indicated by the graph after the polymer was greatly deformed at a certain temperature in the thermal displacement curve of the thermogram obtained at a heating rate of 5°C/min using a thermomechanical analyzer ("TMA 7100" manufactured by Hitachi High-Tech Science Corporation).

### <5% Mass loss temperature (Td5)>

The 5% mass loss temperature (Td5) of each polymer was determined as a temperature at the time when a cumulative decrease of the mass of the polymer became 5% by mass based on a thermal mass curve obtained under an atmosphere of nitrogen at a heating rate of 10°C/min using a differential-type differential thermal balance ("G 209 F1 Libra" manufactured by NETZSCHT).

Note that Td5 is one of indices of heat resistance, and it can be evaluated that the larger the value, the better the heat resistance.

### <Dielectric loss tangent (Df)>

A test piece (width: 6 cm × length: 6 cm) was cut out from the produced polymer single film, and the dielectric loss tangent (Df) of the test piece at 10 GHz was measured using a cavity resonator method (Dielectric Measurement System TE mode Cavity Resonator manufactured by AET, Inc.)

### <Solubility>

The cyclohexanone solutions of the polymers obtained in Examples 1 to 13, Examples 80 to 88, and Examples A1 to A8 were visually observed, and the solubility was evaluated as "A" in a case where no precipitate was confirmed, and was evaluated as "B" in a case where a precipitate was visually confirmed.

The solubility of the polymer of each of Comparative Examples 1 to 9 in cyclohexanone was evaluated by adding each polymer to cyclohexanone so as to have a concentration of 1% by mass, stirring the mixture, and then a case where no precipitate was visually confirmed was evaluated as "A" and a case where a precipitate was visually confirmed was evaluated as "B".

### <Applicability>

A cyclohexanone solution of the polymer obtained in each of Examples 1 to 13, Examples 80 to 88, and Examples A1 to A8 was applied to a copper foil (CF-T9DA-SV [manufactured by FUKUDA METAL FOIL & POWDER CO., LTD.]) with an applicator such that a resulting coating film had a thickness in the range from 20 to 30 um followed by preliminary drying at 70°C for 3 minutes and then at 130°C for 3 minutes, and coating unevenness was visually checked to evaluate the applicability.

For the polymer of each of Comparative Examples 1 to 9, a solution thereof dissolved in N-methylpyrrolidone so that the concentration became the concentration shown in "Concentration of polymer solution" in Table 1 was applied to a copper foil (CF-T9DA-SV [manufactured by FUKUDA METAL FOIL & POWDER CO., LTD.]) with an applicator such that a resulting coating film had a thickness in the range from 20 to 30 µm, preliminary drying at 70°C for 3 minutes and then at 130°C for 3 minutes were performed and at this time coating unevenness was visually checked and evaluated according to the following criteria.

"A": There is no repel on the copper foil, a uniform film is formed without uneven thickness, and a coating film is formed without peeling from the copper foil.

"B": Repelling occurs on the copper foil, the coating film is peeled off from the copper foil, and/or a non-uniform coating film, for example, having unevenness in thickness is formed.

### <Adhesion to copper foil>

A cyclohexanone solution of the polymer obtained in each of Examples 1 to 13, Examples 80 to 88, and Examples A1 to A8 was applied to a copper foil (CF-T9DA-SV [manufactured by FUKUDA METAL FOIL & POWDER CO., LTD.]) so a resultant polymer layer as to have a thickness in the range of from 20 to 30 µm, followed by preliminary drying at 70°C for 3 minutes and then at 130°C for 3 minutes, additionally the solvent was allowed to evaporate at 150°C for 30 minutes and then at 250°C for 3 hours under an atmosphere of nitrogen to afford a laminated body including a polymer layer and a copper foil.

A solution containing 2 g of the polymer of each of Comparative Examples 1 to 9 dissolved in 8 g of N-methylpyrrolidone was applied to a copper foil (CF-T9DA-SV [manufactured by FUKUDA METAL FOIL & POWDER CO., LTD.]) so a resultant polymer layer as to have a thickness in the range of from 20 to 30 µm, followed by preliminary drying at 70°C for 3 minutes and then at 130°C for 3 minutes, additionally the solvent was allowed to evaporate at 150°C for 30 minutes and then at 250°C for 3 hours under an atmosphere of nitrogen to afford a laminated body including a polymer layer and a copper foil.

The resultant laminated body was cut into a size of 5 mm in width × 10 cm in length, and this was subjected to a tension in a 90 degree direction at a speed of 500 mm/min using "Instron 5567" manufactured by Instron, and the adhesion strength between the polymer layer and the copper foil was evaluated in accordance with "IPC-TM-650 2.4.9". The adhesion strength was evaluated as "A" in a case of being 0.2 N/mm or more, and was evaluated as "B" in a case of being less than 0.2 N/mm.

### <Adhesion to gold substrate>

A cyclohexanone solution of the polymer obtained in each of Examples 1 to 13, Examples 80 to 88, and Examples A1 to A8 was spin-coated onto a gold sputtering wafer so a resulting coating film as to have a thickness in the range from 10 to 20 µm, followed by preliminary drying at 70°C for 5 minutes and then at 150°C for 5 minutes, and additionally the solvent was allowed to evaporate at 250°C for 1 hour under an atmosphere of nitrogen to form a coating film.

A solution containing 2 g of the polymer of each of Comparative Examples 1 to 9 dissolved in 8 g of N-methyl-2-pyrrolidone was spin-coated onto a gold sputtering wafer so a resulting coating film as to have a thickness in the range from 10 to 20 µm, followed by preliminary drying at 70°C for 5 minutes and at 150°C for 5 minutes, and additionally the solvent was allowed to evaporate at 250°C for 1 hour under an atmosphere of nitrogen to form a coating film.

A stud pin having an epoxy resin attached was fixed to the surface of the coating film so the formed coating film and the epoxy resin as to come in contact with each other, followed by curing at 160°C for 1 hour, and adhesion between the gold sputtering wafer and the formed coating film was evaluated under a measurement condition of 20 N/s using a thin film adhesion strength measuring machine (manufactured by Quad Group Inc.) The adhesion was evaluated as "A" in a case where the epoxy resin of the stud pin was broken, and was evaluated as "B" in a case where the coating film was peeled off at the interface with the gold sputtering wafer.

### <Tackiness at room temperature>

A cyclohexanone solution of the polymer obtained in each of Examples 5, 6, 11, 12, A6, and A7 was applied to a polyimide film so a resulting coating film as to have a thickness in the range from 10 to 20 µm, followed by preliminary drying at 70°C for 5 minutes and then at 150°C for 5 minutes, and additionally the solvent was allowed to evaporate at 250°C for 1 hour under an atmosphere of nitrogen to form a polyimide film laminated body with a coating film.

A solution containing 2 g of the polymer of each of Comparative Examples 1 to 9 dissolved in 8 g of N-methyl-2-pyrrolidone was applied onto a polyimide film with an applicator so a resulting coating film as to have a thickness in the range from 10 to 20 um, followed by preliminary drying at 70°C for 5 minutes and then at 150°C for 5 minutes, and additionally the solvent was allowed to evaporate at 250°C for 1 hour under an atmosphere of nitrogen to form a polyimide film laminated body with a coating film.

A laminated body having a SUS plate and the polyimide film with a coating film disposed so the coating film surface of each of the polyimide film laminated body with a coating film as to come in contact with the SUS plate was pressure-bonded using a manual roller to prepare a sample. Whether the polyimide film with a coating film tackily adhered to the SUS plate was visually checked, and the tackiness was evaluated as "A" in a case where the polyimide film with a coating film tackily adhered to the SUS plate, and was evaluated as "B" in a case where the polyimide film with a coating film did not tackily adhere to the SUS plate.

### [Table 1]

**Table 1**

| | Type of polymer | Concentration of polymer solution [wt %] | Mw | Tg [°C] | Softening point [°C] | Td5 [°C] |
|---|---|---|---|---|---|---|
| Example 1 | (10) | 30 | 47,000 | - | 60 | 430 |
| Example 2 | (11) | 30 | 20,000 | - | 110 | - |
| Example 3 | (12) | 30 | 27,000 | - | 90 | 410 |
| Example 4 | (13) | 30 | 20,000 | - | 85 | - |
| Example 5 | (14) | 30 | 23,000 | -36 | - | 340 |
| Example 6 | (15) | 30 | 19,000 | -48 | - | 370 |
| Example 7 | (16) | 30 | 14,000 | 14 | - | 420 |
| Example 8 | (17) | 30 | 23,000 | 30, -50 | - | 405 |
| Example 9 | (18) | 30 | 6,100 | 12, -35 | - | 380 |
| Example 10 | (19) | 30 | 5,200 | 11, -37 | - | 410 |
| Example 11 | (22) | 30 | 18,000 | -34 | - | 430 |
| Example 12 | (23) | 30 | 16,000 | -18 | - | 425 |
| Example 13 | (24) | 30 | 10,000 | -1 | - | 440 |
| Example 80 | (25) | 30 | 28,000 | 83 | - | 451 |
| Example 81 | (26) | 30 | 26,000 | 54 | - | 420 |
| Example 82 | (27) | 30 | 21,000 | 62 | - | 425 |
| Example 83 | (28) | 30 | 24,000 | 59 | - | 430 |
| Example 84 | (29) | 30 | 19,000 | 62 | - | 440 |
| Example 85 | (50) | 30 | 20,000 | 50 | - | 430 |
| Example 86 | (51) | 30 | 21,000 | 55 | - | 425 |
| Example 87 | (52) | 30 | 18,000 | 73 | - | 423 |
| Example 88 | (53) | 30 | 15,000 | 62 | - | 431 |
| Example A1 | (39) | 30 | 26,000 | 18 | - | 420 |
| Example A2 | (40) | 30 | 10,000 | 21 | - | 421 |
| Example A3 | (41) | 30 | 17,000 | 25 | - | 414 |
| Example A4 | (42) | 30 | 13,000 | 23 | - | 410 |
| Example A5 | (43) | 30 | 16,000 | 22 | - | 413 |
| Example A6 | (44) | 30 | 11,000 | -15 | - | 430 |
| Example A7 | (45) | 30 | 12,000 | -10 | - | 423 |
| Example A8 | (46) | 30 | 21,000 | 29 | - | 421 |
| Comparative Example 1 | (30) | 30 | Unmeasurable due to crosslinking | - | 38 | 410 |
| Comparative Example 2 | (31) | 30 | Unmeasurable due to crosslinking | - | 35 | 370 |
| Comparative Example 3 | (32) | 15 | 57,000 | 198 | - | 367 |
| Comparative Example 4 | (33) | 15 | 38,000 | 181 | - | - |
| Comparative Example 5 | (34) | 15 | 63000 | 241 | - | 426 |
| Comparative Example 6 | (35) | 15 | 17,000 | 185 | - | 411 |
| Comparative Example 7 | (36) | 15 | 26000 (Soluble part) | - | - | - |
| Comparative Example 8 | (37) | 30 | 43,000 | 233 | - | 475 |
| Comparative Example 9 | (38) | 10 | 157,000 | 240 | - | 519 |

**Table 1 (continued)**

| | Df[10 GHz] | Solubility | Applicability | Adhesion to copper foil | Adhesion to gold substrate | Tackiness at room temperature |
|---|---|---|---|---|---|---|
| Example 1 | 0.0025 | A | A | A | A | - |
| Example 2 | 0.0031 | A | A | A | B | - |
| Example 3 | 0.0027 | A | A | A | A | - |
| Example 4 | 0.0045 | A | A | A | A | - |
| Example 5 | 0.0121 | A | A | A | A | A |
| Example 6 | 0.0132 | A | A | A | A | A |
| Example 7 | 0.0141 | A | A | A | A | - |
| Example 8 | 0.0136 | A | A | A | A | - |
| Example 9 | 0.0152 | A | A | A | A | - |
| Example 10 | 0.0123 | A | A | A | A | - |
| Example 11 | 0.0119 | A | A | A | A | A |
| Example 12 | 0.0105 | A | A | A | A | A |
| Example 13 | 0.0184 | A | A | A | A | - |
| Example 80 | 0.0026 | A | A | A | A | - |
| Example 81 | 0.0032 | A | A | A | A | - |
| Example 82 | 0.0035 | A | A | A | A | - |
| Example 83 | 0.0042 | A | A | A | A | - |
| Example 84 | 0.0025 | A | A | A | A | - |
| Example 85 | 0.0021 | A | A | A | A | - |
| Example 86 | 0.0027 | A | A | A | A | - |
| Example 87 | 0.0029 | A | A | A | A | - |
| Example 88 | 0.0024 | A | A | A | A | - |
| Example A1 | 0.0036 | A | A | A | A | - |
| Example A2 | 0.0029 | A | A | A | A | - |
| Example A3 | 0.0032 | A | A | A | A | - |
| Example A4 | 0.0027 | A | A | A | A | - |
| Example A5 | 0.0032 | A | A | A | A | - |
| Example A6 | 0.0041 | A | A | A | A | A |
| Example A7 | 0.0039 | A | A | A | A | A |
| Example A8 | 0.0029 | A | A | A | A | - |
| Comparative Example 1 | 0.0023 | A | B | B | B | B |
| Comparative Example 2 | 0.0170 | A | B | B | A | B |
| Comparative Example 3 | 0.0061 | B | B | - | - | B |
| Comparative Example 4 | 0.0073 | B | B | - | - | B |
| Comparative Example 5 | 0.0125 | B | A | - | A | B |
| Comparative Example 6 | - | B | B | - | - | B |
| Comparative Example 7 | - | B | B | - | - | B |
| Comparative Example 8 | - | B | A | B | B | B |
| Comparative Example 9 | - | B | B | B | B | B |

### (Synthesis Example 1)

2-Phenylamino-4,6-dichloro-s-triazine (AnDCT) (13.2 g), dimer diamine (Priamine 1075) (30.8 g), and potassium carbonate (8.7 g) were weighed and put into a four-neck separable flask equipped with a stirrer, thereto were added N-methyl-2-pyrrolidone (71.9 g) and water (30.8 g), and this mixture was allowed to react at 100°C for 20 hours under an atmosphere of nitrogen. After completion of the reaction, methanol coagulation, filtration and methanol washing were performed to give 31 g (yield 76%) of a target polymer (21) composed of a repeating unit represented by Formula (21) set forth below.

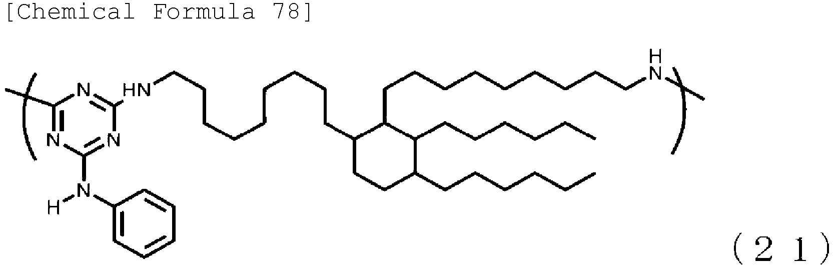

### [2] Composition (I)

### (Example 20)

The polymer (21) and cyclohexanone were placed in a glass bottle so a solid content concentration as to be 30% by mass, and the polymer (21) was dissolved. A mixture of 16.7 g of the resultant polymer solution (amount of polymer (21): 5 g), 5 g of 2,2-bis(4-cyanatophenyl)propane (manufactured by Tokyo Chemical Industry Co., Ltd.) as a curable compound, 0.5 g of zinc octylate (manufactured by FUJIFILM Wako Pure Chemical Corporation) as a curing aid, and cyclohexanone as an additional solvent added so a solid content concentration as to be 35% by mass was sufficiently stirred with a mix rotor to prepare a uniformly mixed composition without phase separation.

The prepared composition was applied onto a copper foil (CF-T9DA-SV [manufactured by Fukuda Metal Foil & Powder Co., Ltd.]) with a bar coater, and heated at 250°C for 3 hours under nitrogen using an oven to give a copper foil with cured product. The resultant copper foil with cured product was immersed into a 40% aqueous solution of iron (III) chloride and thereby removing the copper foil, and the resultant cured product was washed 4 times with ion-exchanged water to prepare an evaluation film sample having a thickness of 30 ± 5 µm.

### (Examples 21 to 33 and 40 to 43 and Comparative Examples 20 to 23)

A composition was prepared in the same manner as in Example 20 except that the components shown in Table 2 were used in the mass ratios shown in Table 2 (mass ratio of polymer and curable compound) to prepare an evaluation film sample.

Note that, as the curable compounds in Example 25 and Comparative Example 23, cyanate compound A and epoxy compound D were used at a mass ratio of 50:50.

### (Example 34)

Into a glass bottle were placed 16.7 g of the polymer solution of the polymer (10) obtained in Example 1 (amount of polymer (10): 5 g), 5 g of 2,2-bis(4-cyanatophenyl)propane (manufactured by Tokyo Chemical Industry Co., Ltd.) as a curable compound, 0.5 g of zinc octylate (manufactured by FUJIFILM Wako Pure Chemical Corporation) as a curing aid, and cyclohexanone as an additional solvent added so a solid content concentration as to be 35% by mass, and this mixture was sufficiently stirred with a mix rotor to prepare a uniformly mixed composition without phase separation.

The prepared composition was applied onto a copper foil (CF-T9DA-SV [manufactured by Fukuda Metal Foil & Powder Co., Ltd.]) with a bar coater, and heated at 250°C for 3 hours under nitrogen using an oven to give a copper foil with cured product. The resultant copper foil with cured product was immersed into a 40% aqueous solution of iron (III) chloride and thereby removing the copper foil, and the resultant cured product was washed 4 times with ion-exchanged water to prepare an evaluation film sample having a thickness of 30 ± 5 µm.

### (Examples 35 to 39, Examples 44 to 49, and Examples 90 to 109)

A composition was prepared in the same manner as in Example 34 except that the components shown in Table 2 were used in the mass ratios shown in Table 2 (mass ratio of polymer and curable compound) to prepare an evaluation film sample.

### [3] Composition (II)

### (Example 50)

The polymer (21) and cyclohexanone were placed in a glass bottle so a solid content concentration as to be 30% by mass, and the polymer (21) was dissolved. A mixture of 9.3 g of the resultant polymer solution (amount of polymer (21): 2.79 g), 1.2 g of ADMAFINE SC2500-SQ (manufactured by ADMATECHS COMPANY LIMITED Co., Ltd.) as a filler, and cyclohexanone as an additional solvent added so a solid content concentration as to be 35% by mass was sufficiently stirred with a mix rotor to prepare a uniformly mixed composition without phase separation.

The prepared composition was applied onto a copper foil (CF-T9DA-SV [manufactured by Fukuda Metal Foil & Powder Co., Ltd.]) with a bar coater, and heated at 250°C for 3 hours under nitrogen using an oven to give a copper foil with cured product. The resultant copper foil with cured product was immersed into a 40% aqueous solution of iron (III) chloride and thereby removing the copper foil, and the resultant cured product was washed 4 times with ion-exchanged water to prepare an evaluation film sample having a thickness of 30 ± 5 µm.

### (Examples 51 to 59 and Comparative Examples 30 to 34)

A composition was prepared in the same manner as in Example 50 except that the components shown in Table 4 were used at the mass ratios shown in Table 4 to prepare an evaluation film sample.

### (Example 60)

Into a glass bottle were placed 9.3 g of the solution of the polymer (14) obtained in Example 5 (amount of the polymer (14): 2.79 g), 1.2 g of ADMAFINE SC2500-SQ (manufactured by ADMATECHS COMPANY LIMITED Co., Ltd.) as a filler, and cyclohexanone as an additional solvent added so a solid content concentration as to be 35% by mass, and this mixture was sufficiently stirred with a mix rotor to prepare a uniformly mixed composition without phase separation.

The prepared composition was applied onto a copper foil (CF-T9DA-SV [manufactured by Fukuda Metal Foil & Powder Co., Ltd.]) with a bar coater, and heated at 250°C for 3 hours under nitrogen using an oven to give a copper foil with cured product. The resultant copper foil with cured product was immersed into a 40% aqueous solution of iron (III) chloride and thereby removing the copper foil, and the resultant cured product was washed 4 times with ion-exchanged water to prepare an evaluation film sample having a thickness of 30 ± 5 µm.

### (Examples 61 to 72)

A composition was prepared in the same manner as in Example 60 except that the components shown in Table 4 were used at the mass ratios (mass ratios of polymer and filler) shown in Table 4 to prepare an evaluation film sample.

### [4] Composition (III)

### (Example B1)

The polymer (21) and cyclohexanone were placed in a glass bottle so a solid content concentration as to be 30% by mass, and the polymer (21) was dissolved to give a solution of the polymer (21). A solution of the polymer (21) (0.63 g, polymer (21) 0.19 g) and 2,2-bis(4-glycidyloxyphenyl)propane (manufactured by Tokyo Chemical Industry Co., Ltd.) (10.1 g) as a curable compound were sufficiently stirred in the glass bottle using a mix rotor to give a solution X.

Moreover, 4-methylcyclohexane-1,2-dicarboxylic anhydride (cis-, tarns-mixture) (8.9 g) as a reactive diluent and 1-benzyl-2-methylimidazole (manufactured by Tokyo Chemical Industry Co., Ltd.) (0.10 g) as a curing aid were sufficiently stirred in a glass bottle using a mix rotor to give a solution Y.

The resultant solution X and solution Y were mixed with a mix rotor to prepare composition Z.

The prepared composition Z was applied onto a copper foil (CF-T9DA-SV [manufactured by Fukuda Metal Foil & Powder Co., Ltd.]) with a bar coater, and heated at 200°C for 3 hours under nitrogen using an oven to give a copper foil with cured film. The resultant copper foil with cured film was immersed in a 40% aqueous solution of iron (III) chloride and thereby removing the copper foil, and the resultant cured film was washed 4 times with ion-exchanged water to prepare an evaluation film sample having a thickness of 30 ± 5 µm.

### (Examples B2 to B3)

A composition was prepared in the same manner as in Example B1 except that the components were used by the types and at mass ratios (mass ratio of polymer/curable compound/reactive diluent/curing aid) shown in Table 5 to prepare an evaluation film sample.

### (Example B4)

A solution (0.63 g) of the polymer (39) and 2,2-bis(4-glycidyloxyphenyl)propane (manufactured by Tokyo Chemical Industry Co., Ltd.) (10.1 g) as a curable compound were sufficiently stirred in a glass bottle using a mix rotor to give a solution X.

Moreover, 4-methylcyclohexane-1,2-dicarboxylic anhydride (cis-, tarns-mixture) (8.9 g) as a reactive diluent and 1-benzyl-2-methylimidazole (manufactured by Tokyo Chemical Industry Co., Ltd.) (0.10 g) as a curing aid were sufficiently stirred in a glass bottle using a mix rotor to give a solution Y.

The resultant solution X and solution Y were mixed with a mix rotor to prepare composition Z.

The prepared composition Z was applied onto a copper foil (CF-T9DA-SV [manufactured by Fukuda Metal Foil & Powder Co., Ltd.]) with a bar coater, and heated at 200°C for 3 hours under nitrogen using an oven to give a copper foil with cured film. The resultant copper foil with cured film was immersed in a 40% aqueous solution of iron (III) chloride and thereby removing the copper foil, and the resultant cured film was washed 4 times with ion-exchanged water to prepare an evaluation film sample having a thickness of 30 ± 5 µm.

### (Examples B5 to B8)

A composition was prepared in the same manner as in Example B4 except that the components were used by the types and at mass ratios (mass ratio of polymer/curable compound/reactive diluent/curing aid) shown in Table 5 to prepare an evaluation film sample.

### (Example B9)

The polymer (43) (0.26 g), 2,2-bis(4-glycidyloxyphenyl)propane (manufactured by Tokyo Chemical Industry Co., Ltd.) (4.18 g) as a curable compound, and DAW-01DC (manufactured by Denka Company Limited) (12.0 g) were sufficiently stirred in a glass bottle using a mix rotor to give a solution X.

Moreover, 4-methylcyclohexane-1,2-dicarboxylic anhydride (cis-, tarns-mixture) (3.7 g) as a reactive diluent and 1-benzyl-2-methylimidazole (manufactured by Tokyo Chemical Industry Co., Ltd.) (0.042 g) as a curing aid were sufficiently stirred in a glass bottle using a mix rotor to give a solution Y.

The resultant solution X and solution Y were mixed with a mix rotor to prepare composition Z.

The prepared composition Z was applied onto a copper foil (CF-T9DA-SV [manufactured by Fukuda Metal Foil & Powder Co., Ltd.]) with a bar coater, and heated at 200°C for 3 hours under nitrogen using an oven to give a copper foil with cured film. The resultant copper foil with cured film was immersed in a 40% aqueous solution of iron (III) chloride and thereby removing the copper foil, and the resultant cured film was washed 4 times with ion-exchanged water to prepare an evaluation film sample having a thickness of 30 ± 5 µm.

### (Example B10)

A composition was prepared in the same manner as in Example B9 except that the components were used by the types and at mass ratios (mass ratio of polymer/curable compound/reactive diluent/curing aid/filler) shown in Table 5 to prepare an evaluation film sample.

### [5] Composition (IV)

### (Example D1)

A polymer (21), a curable compound, a filler, a curing aid, and other polymers were put into a glass bottle so their mass ratios as to be the mass ratios shown in Table 5, toluene/methyl ethyl ketone = 1/1 (mass ratio) was added as an additional solvent so a solid content concentration as to be 65% by mass, and this mixture was sufficiently mixed and stirred with a mix rotor to prepare a composition.

The prepared composition was applied onto a copper foil (CF-T9DA-SV [manufactured by Fukuda Metal Foil & Powder Co., Ltd.]) with a bar coater, and heated at 200°C for 3 hours under nitrogen using an oven and thereby giving a copper foil with cured film. The resultant copper foil with cured film was immersed in a 40% aqueous solution of iron (III) chloride and thereby removing the copper foil, and the resultant cured film was washed 4 times with ion-exchanged water to prepare an evaluation film sample having a thickness of 30 ± 5 µm.

### (Examples D2 to D 20 and Comparative Examples 35 to 36)

A composition was prepared in the same manner as in Example D1 except that the components shown in Table 5 were used at the mass ratios (mass ratio of polymer, curable compound, curing aid, filler, and other polymer) shown in Table 5 to prepare an evaluation film sample.

### <Appearance of composition>

The appearance of the composition prepared with the composition (I) was visually observed. The appearance of the composition was evaluated as "A" in a case where the components used for preparing the composition were compatible and no precipitation or phase separation was observed, and was evaluated as "B" in a case where precipitation or phase separation was observed. The results are shown in Table 2.

### <Reactivity>

A composition prepared with the composition (I) and the composition (III) was applied onto a copper foil (CF-T9DA-SV [manufactured by Fukuda Metal Foil & Powder Co., Ltd.]) with a Baker type applicator (gap: 125 um) so a resulting cured film as to have a thickness in the range from 20 to 30 um, followed by preliminary drying at 70°C for 3 minutes and then at 130°C for 3 minutes, and additionally the solvent was allowed to evaporate at 150°C for 30 minutes and then at 250°C for 3 hours under an atmosphere of nitrogen to give a cured film with copper foil. The resultant cured film with copper foil was immersed in 1.5 L of methyl ethyl ketone (MEK) at room temperature for 10 minutes, followed by vacuum drying at 120°C for 3 hours. The mass change ratio was calculated by the following equation, and the reactivity was determined as "A" in a case where the mass change ratio was 80% or more, and was defined as "B" in a case where the mass change rate was less than 80%. The more the reaction between the polymer and the curable compound proceeds, the larger value the mass change rate shows. The results are shown in Tables 2 and 6. Mass change ratio (%) = mass of cured film with copper foil after vacuum drying/mass of cured film with copper foil before immersion in MEK × 100

### <5% Mass loss temperature (Td5)>

The 5% mass loss temperature (Td5) of each evaluation film sample prepared with the composition (I) and the composition (III) was determined as a temperature at which the mass of the evaluation film sample was reduced by 5% by mass in total based on a thermal mass curve obtained at a heating rate of 10°C/min under an atmosphere of nitrogen using a differential-type differential thermal balance ("G209 F1 Libra" manufactured by NETZSCHT). The results are shown in Tables 2 and 4.

### <Tensile elongation>

The tensile elongation was measured by performing a tensile test under the condition of 5.0 mm/min at room temperature using a small desktop tester ("EZ-LX" manufactured by Shimadzu Corporation) for an evaluation film sample prepared with the composition (I) and the composition (II) cut into a dumbbell-shaped No. 7 test piece described in JIS K 6251:2017. The results are shown in Tables 2 and 4.

It should be noted that, in a case where evaluation film samples obtained in Comparative Examples 30 and 31 were used, the films were collapsed (film collapse) during the measurement of the tensile elongation, and the tensile elongation was not able to be measured.

### <Adhesion to gold substrate>

The composition prepared with the composition (I) was formed into a film on a gold sputtering wafer by spin coating so a resulting coating film as to have a thickness in the range from 10 to 20 um, followed by preliminary drying at 70°C for 5 minutes and then at 150°C for 5 minutes, and additionally the solvent was allowed to evaporate at 250°C for 1 hour under an atmosphere of nitrogen to form a coating film. A stud pin having an epoxy resin attached was fixed to the surface of the coating film so the formed coating film and the epoxy resin as to come in contact with each other, followed by curing at 160°C for 1 hour, and adhesion between the gold sputtering wafer and the formed coating film was evaluated under a measurement condition of 20 N/s using a thin film adhesion strength measuring machine (manufactured by Quad Group Inc.). The adhesion was evaluated as "A" in a case where the epoxy resin of the stud pin was broken, and was evaluated as "B" in a case where the coating film was peeled off at the interface with the gold sputtering wafer. The results are shown in Table 2.

### <Adhesiveness>

Among the compositions prepared with the composition (I), the composition obtained in each of Examples 38 to 39, 44 to 45, 104 to 106 and Comparative Examples 21 to 22 was applied onto a copper foil (CF-T9DA-SV [manufactured by FUKUDA METAL FOIL & POWDER CO., LTD.]) using an applicator so a resulting coating film as to have a thickness in the range from 20 to 30 um, followed by preliminary drying at 70°C for 5 minutes and then at 150°C for 5 minutes, and additionally the solvent was allowed to evaporate at 220°C for 1 hour under an atmosphere of nitrogen to form a coating film. A polyimide film ("Kapton 200H" manufactured by DU PONT-TORAY CO., LTD.) having a thickness of 50 um was laminated onto the coating film side of the copper foil with a coating film with a resin-made manual roller at room temperature (Examples 38 to 39, Examples 44 to 45, Examples 104 to 105) or at 80°C (Example 106, Comparative Examples 21 and 22) to prepare a sample. Thereafter, the polyimide film was peeled off from the prepared sample and thereby evaluating the adhesiveness. The adhesiveness was evaluated as "A" in a case where the film had adhesiveness by lamination, that is, the film had tacky adhesion and was able to be temporarily adhered like a sticky tape, and was evaluated as "B" in a case where the film had no tacky adhesion and was not able to be temporarily adhered and was peeled off. The results are shown in Table 3.

### <Dispersibility>

The compositions (II) to (IV) were allowed to stand for 3 hours after preparation of these compositions, and the dispersibility was evaluated as "A" in a case where no precipitation of a filler was visually observed, and was evaluated as "B" in a case where precipitation of a filler was observed. The results are shown in Tables 4 and 6.

Note that the polymer was not dissolved in cyclohexanone during preparing a composition and was insoluble (Polymer insoluble) in Comparative Examples 33 and 34.

### <Self-standing film>

At the time when an evaluation film sample was prepared from a copper foil with cured product obtained using the composition (II), the evaluation film sample obtained by removing the copper foil from the copper foil with cured product was evaluated as "A" in a case where it was able to be handled, was evaluated as "B" in a case where the evaluation film sample was a brittle and fragile film, and was evaluated as "Film collapse" in a case where the evaluation film sample collapsed and no film was obtained. The results are shown in Table 4.

Note that in a case where the compositions prepared in Comparative Examples 33 and 34 were used, no film was able to be formed (Film cannot be formed), and a copper foil with cured product itself was not able to be obtained.

### <Adhesion to copper foil>

The prepared composition (II) was applied to a copper foil (CF-T9DA-SV [manufactured by FUKUDA METAL FOIL & POWDER CO., LTD.]), followed by preliminary drying at 70°C for 3 minutes and then at 130°C for 3 minutes, and additionally the solvent was allowed to evaporate under an atmosphere of nitrogen at 150°C for 30 minutes and then at 250°C for 3 hours to give a laminated body including a polymer layer (thickness: 30 ± 5 um) and a copper foil. The resultant laminated body was cut into a size of 5 mm in width × 10 cm in length, and this was subjected to a tension in a 90 degree direction at a speed of 500 mm/min using "Instron 5567" manufactured by Instron, and the adhesion strength between the polymer layer and the copper foil was evaluated in accordance with "IPC-TM-650 2.4.9". The adhesion strength was evaluated as "A" in a case of being 0.2 N/mm or more, and was evaluated as "B" in a case of being less than 0.2 N/mm.

### <Dispersion stability>

The compositions prepared in Examples B9 and B10 and the composition (IV) were allowed to stand for 3 days, and the dispersion stability was evaluated as "A" in a case of where no precipitation of the filler was visually observed and the solution had fluidity, and was evaluated as "B" in a case of where the precipitation of the filler was observed and the solution had no fluidity.

**[Table 2]**

| | Type of polymer | Curable compound | Curing aid | Mass ratio of polymer and curable compound | Composition appearance | Reactivity | Td5 [°C] | Tensile elongation [%] | Adhesion to gold substrate |
|---|---|---|---|---|---|---|---|---|---|
| Example 20 | (21) | Cyanate compound A | Zinc octylate | 50/50 | A | A | 343 | 24 | A |
| Example 21 | (21) | Cyanate compound B | Zinc octylate | 50/50 | A | A | 351 | 30 | A |
| Example 22 | (21) | Epoxy compound A | Imidazole | 50/50 | A | A | 343 | 11 | A |
| Example 23 | (21) | Epoxy compound B | Imidazole | 50/50 | A | A | 347 | 16 | A |
| Example 24 | (21) | Epoxy compound C | Imidazole | 50/50 | A | A | 370 | 8 | A |
| Example 25 | (21) | Cyanate compound A/Epoxy compound D (Mass ratio = 50/50) | Imidazole | 50/50 | A | A | 347 | 100 | A |
| Example 26 | (21) | Maleimide compound | Organic peroxide | 50/50 | A | A | 352 | 9 | A |
| Example 27 | (21) | Acrylic compound | Organic peroxide | 50/50 | A | A | 340 | 12 | A |
| Example 28 | (21) | Allyl compound | Organic peroxide | 50/50 | A | A | 346 | 9 | A |
| Example 29 | (21) | Vinyl compound | Organic peroxide | 50/50 | A | A | 360 | 5 | A |
| Example 30 | (21) | Methylol compound | Borate salt | 50/50 | A | A | 371 | 7 | A |
| Example 31 | (21) | Oxazoline compound | - | 50/50 | A | A | 353 | 8 | A |
| Example 32 | (21) | Oxazine compound | - | 50/50 | A | A | 358 | 7 | A |
| Example 33 | (21) | Oxetane compound | Borate salt | 50/50 | A | A | 370 | 6 | A |
| Example 34 | (10) | Cyanate compound A | Zinc octylate | 50/50 | A | A | 342 | 31 | A |
| Example 35 | (11) | Cyanate compound A | Zinc octylate | 50/50 | A | A | 354 | 28 | A |
| Example 36 | (12) | Cyanate compound A | Zinc octylate | 50/50 | A | A | 348 | 5 | A |
| Example 37 | (14) | Cyanate compound A | Zinc octylate | 50/50 | A | A | 352 | 13 | A |
| Example 38 | (14) | Epoxy compound A | Imidazole | 50/50 | A | A | 361 | 15 | A |
| Example 39 | (14) | Maleimide compound A | Organic peroxide | 50/50 | A | A | 352 | 27 | A |
| Example 40 | (21) | Epoxy compound A | Imidazole | 90/10 | A | A | 353 | 21 | A |
| Example 41 | (21) | Epoxy compound A | Imidazole | 70/30 | A | A | 343 | 16 | A |
| Example 42 | (21) | Epoxy compound A | Imidazole | 30/70 | A | A | 332 | 9 | A |
| Example 43 | (21) | Epoxy compound A | Imidazole | 10/90 | A | A | 337 | 8 | A |
| Example 44 | (14) | Epoxy compound A | Imidazole | 90/10 | A | A | 351 | 27 | A |
| Example 45 | (14) | Epoxy compound A | Imidazole | 10/90 | A | A | 361 | 7 | A |
| Example 46 | (13) | Epoxy compound B | Imidazole | 80/20 | A | A | 356 | 10 | A |
| Example 47 | (13) | Cyanate compound A | Zinc octylate | 90/10 | A | A | 373 | 5 | A |
| Example 48 | (16) | Epoxy compound B | Imidazole | 80/20 | A | A | 355 | 23 | A |
| Example 49 | (16) | Cyanate compound A | Zinc octylate | 90/10 | A | A | 381 | 11 | A |
| Example 90 | (39) | Epoxy compound A | Imidazole | 80/20 | A | A | 361 | 15 | - |
| Example 91 | (39) | Maleimide compound A | - | 80/20 | A | A | 385 | 14 | - |
| Example 92 | (40) | Epoxy compound A | Imidazole | 80/20 | A | A | 356 | 15 | - |
| Example 93 | (40) | Maleimide compound A | - | 80/20 | A | A | 369 | 8 | - |
| Example 94 | (40) | Acrylic compound | - | 80/20 | A | A | 370 | 15 | - |
| Example 95 | (41) | Epoxy compound A | Imidazole | 80/20 | A | A | 386 | 7 | - |
| Example 96 | (41) | Maleimide compound A | - | 80/20 | A | A | 356 | 13 | - |
| Example 97 | (41) | Acrylic compound | - | 80/20 | A | A | 361 | 13 | - |
| Example 98 | (42) | Maleimide compound A | Organic peroxide | 80/20 | A | A | 378 | 12 | - |
| Example 99 | (42) | Acrylic compound | Organic peroxide | 80/20 | A | A | 360 | 13 | - |
| Example 100 | (42) | Allyl compound | Organic peroxide | 80/20 | A | A | 363 | 13 | - |
| Example 101 | (42) | Vinyl compound A | Organic peroxide | 80/20 | A | A | 365 | 14 | - |
| Example 102 | (43) | Epoxy compound A | Imidazole | 80/20 | A | A | 358 | 15 | - |
| Example 103 | (43) | Methylol compound | Borate salt | 80/20 | A | A | 354 | 9 | - |
| Example 104 | (44) | Epoxy compound A | Imidazole | 80/20 | A | A | 375 | 14 | - |
| Example 105 | (44) | Maleimide compound A | - | 80/20 | A | A | 375 | 8 | - |
| Example 106 | (45) | Epoxy compound A | Imidazole | 80/20 | A | A | 358 | 14 | - |
| Example 107 | (45) | Methylol compound | Borate salt | 80/20 | A | A | 388 | 11 | - |
| Example 108 | (46) | Epoxy compound A | Imidazole | 80/20 | A | A | 382 | 11 | - |
| Example 109 | (46) | Maleimide compound A | - | 80/20 | A | A | 386 | 9 | - |
| Comparative Example 20 | - | Cyanate compound A | Zinc octylate | 0/100 | A | A | 360 | 4 | B |
| Comparative Example 21 | - | Epoxy compound A | Imidazole | 0/100 | A | A | 332 | 3 | B |
| Comparative Example 22 | - | Maleimide compound A | Organic peroxide | 0/100 | A | A | 341 | 6 | B |
| Comparative Example 23 | - | Cyanate compound A/Epoxy compound D (Mass ratio = 50/50) | Imidazole | 0/100 | A | A | 337 | 5 | B |

**[Table 3]**

| | Type of polymer | Curable compound | Curing aid | Mass ratio of polymer and curable compound | Adhesiveness |
|---|---|---|---|---|---|
| Example 38 | (14) | Epoxy compound A | Imidazole | 50/50 | A |
| Example 39 | (14) | Maleimide compound A | Organic peroxide | 50/50 | A |
| Example 44 | (14) | Epoxy compound A | Imidazole | 90/10 | A |
| Example 45 | (14) | Epoxy compound A | Imidazole | 10/90 | A |
| Example 104 | (44) | Epoxy compound A | Imidazole | 80/20 | A |
| Example 105 | (44) | Maleimide compound A | - | 80/20 | A |
| Example 106 | (45) | Epoxy compound A | Imidazole | 80/20 | A |
| Comparative Example 21 | - | Epoxy compound A | Imidazole | 0/100 | B |
| Comparative Example 22 | - | Maleimide compound A | Organic peroxide | 0/100 | B |

### [Table 4]

**Table 4**

| | Type of polymer | Mass ratio | Filler | Mass ratio | Curable compound | Mass ratio |
|---|---|---|---|---|---|---|
| Example 50 | (21) | 70 | Silica A | 30 | - | - |
| Example 51 | (21) | 30 | Silica A | 70 | - | - |
| Example 52 | (21) | 70 | Silica B | 30 | - | - |
| Example 53 | (21) | 30 | Silica B | 70 | - | - |
| Example 54 | (21) | 70 | Silica C | 30 | - | - |
| Example 55 | (21) | 30 | Silica C | 70 | - | - |
| Example 56 | (21) | 15 | Silica A | 70 | Cyanate compound A | 15 |
| Example 57 | (21) | 15 | Silica A | 70 | Epoxy compound E | 15 |
| Example 58 | (21) | 70 | Boron nitride | 30 | - | - |
| Example 59 | (21) | 50 | Boron nitride | 50 | - | - |
| Example 60 | (14) | 70 | Silica A | 30 | - | - |
| Example 61 | (14) | 30 | Silica A | 70 | - | - |
| Example 62 | (14) | 10 | Silica A | 90 | - | - |
| Example 63 | (14) | 70 | Silica B | 30 | - | - |
| Example 64 | (14) | 30 | Silica B | 70 | - | - |
| Example 65 | (14) | 10 | Silica B | 90 | - | - |
| Example 66 | (14) | 70 | Silica C | 30 | - | - |
| Example 67 | (14) | 30 | Silica C | 70 | - | - |
| Example 68 | (14) | 10 | Silica C | 90 | - | - |
| Example 69 | (10) | 70 | Silica A | 30 | - | - |
| Example 70 | (12) | 70 | Silica A | 30 | - | - |
| Example 71 | (13) | 70 | Silica A | 30 | - | - |
| Example 72 | (16) | 70 | Silica A | 30 | - | - |
| Comparative Example 30 | - | - | Silica A | 30 | Epoxy compound E | 70 |
| Comparative Example 31 | - | - | Silica B | 30 | Epoxy compound E | 70 |
| Comparative Example 32 | - | - | Silica B | 30 | Maleimide compound B | 70 |
| Comparative Example 33 | (32) | 70 | Silica B | 30 | - | - |
| Comparative Example 34 | (34) | 70 | Silica B | 30 | - | - |

**Table 4 (continued)**

| | Curing aid | Mass ratio | Dispersibility | Self-standing film | Td5 [°C] | Tensile elongation [%] | Adhesion to copper foil |
|---|---|---|---|---|---|---|---|
| Example 50 | - | - | A | A | 421 | 205 | A |
| Example 51 | - | - | A | A | 424 | 45 | A |
| Example 52 | - | - | A | A | 417 | 198 | A |
| Example 53 | - | - | A | A | 441 | 47 | A |
| Example 54 | - | - | A | A | 413 | 187 | A |
| Example 55 | - | - | A | A | 413 | 39 | A |
| Example 56 | Zinc octylate | 2.5 | A | A | 386 | 21 | A |
| Example 57 | Imidazole | 2.0 | A | A | 362 | 16 | A |
| Example 58 | - | - | A | A | 425 | 186 | A |
| Example 59 | - | - | A | A | 433 | 4 | A |
| Example 60 | - | - | A | A | 353 | 203 | A |
| Example 61 | - | - | A | A | 308 | 8 | A |
| Example 62 | - | - | A | A | 312 | 3 | A |
| Example 63 | - | - | A | A | 321 | 210 | A |
| Example 64 | - | - | A | A | 332 | 51 | A |
| Example 65 | - | - | A | A | 341 | 11 | A |
| Example 66 | - | - | A | A | 305 | 202 | A |
| Example 67 | - | - | A | A | 344 | 35 | A |
| Example 68 | - | - | A | A | 329 | 19 | A |
| Example 69 | - | - | A | A | 401 | 11 | A |
| Example 70 | - | - | A | A | 402 | 14 | A |
| Example 71 | - | - | A | A | 398 | 10 | A |
| Example 72 | - | - | A | A | 397 | 176 | A |
| Comparative Example 30 | Imidazole | 2.0 | B | Film collapse | 343 | Film collapse | B |
| Comparative Example 31 | Imidazole | 2.0 | B | Film collapse | 351 | Film collapse | B |
| Comparative Example 32 | Organic peroxide | 2.0 | B | B | 344 | 3 | B |
| Comparative Example 33 | - | - | Polymer insoluble | Film cannot be formed. | - | - | - |
| Comparative Example 34 | - | - | Polymer insoluble | Film cannot be formed. | - | - | - |

**[Table 5]**

| | | | Polymer | Curable compound | Reactive diluent | Curing aid | Filler | Another polymer | Solvent |
|---|---|---|---|---|---|---|---|---|---|
| Examples | B1 | Type | (21) | Epoxy compound A | Reactive diluent A | Imidazole | - | - | - |
| | | Mass ratio | 0.98 | 52.25 | 46.25 | 0.52 | - | - | - |
| | B2 | Type | (21) | Epoxy compound A | Reactive diluent A | Imidazole | - | - | - |
| | | Mass ratio | 0.10 | 52.71 | 46.66 | 0.53 | - | - | - |
| | B3 | Type | (21) | Epoxy compound A | Reactive diluent B | Imidazole | - | - | - |
| | | Mass ratio | 0.98 | 52.84 | 45.66 | 0.52 | - | - | - |
| | B4 | Type | (39) | Epoxy compound A | Reactive diluent A | Imidazole | - | - | - |
| | | Mass ratio | 0.98 | 52.36 | 46.14 | 0.52 | - | - | - |
| | B5 | Type | (43) | Epoxy compound A | Reactive diluent A | Imidazole | - | - | - |
| | | Mass ratio | 0.98 | 52.50 | 46.25 | 0.52 | - | - | - |
| | B6 | Type | (44) | Epoxy compound A | Reactive diluent A | Imidazole | - | - | - |
| | | Mass ratio | 0.98 | 52.50 | 46.25 | 0.52 | - | - | - |
| | B7 | Type | (45) | Epoxy compound A | Reactive diluent A | Imidazole | - | - | - |
| | | Mass ratio | 0.98 | 52.50 | 46.25 | 0.52 | - | - | - |
| | B8 | Type | (45) | Epoxy compound A | Reactive diluent B | Imidazole | - | - | - |
| | | Mass ratio | 0.98 | 52.84 | 45.66 | 0.52 | - | - | - |
| | B9 | Type | (43) | Epoxy compound A | Reactive diluent A | Imidazole | Alumina A | - | - |
| | | Mass ratio | 0.39 | 20.90 | 18.50 | 0.21 | 60.00 | - | - |
| | B10 | Type | (45) | Epoxy compound A | Reactive diluent B | Imidazole | Alumina A | - | - |
| | | Mass ratio | 0.39 | 20.90 | 18.50 | 0.21 | 60.00 | - | - |
| | D1 | Type | (21) | Epoxy compound A | - | DMAP | Alumina A | Ester resin | S1 |
| | | Mass ratio | 1.00 | 8.81 | - | 0.01 | 90.00 | 0.18 | * |
| | D2 | Type | (21) | Epoxy compound A | - | DMAP | Alumina B | Ester resin | S1 |
| | | Mass ratio | 1.05 | 9.27 | - | 0.02 | 89.47 | 0.19 | * |
| | D3 | Type | (21) | Epoxy compound A | - | DMAP | Silica A/Alumina A (Mass ratio 1/9) | Ester resin | S1 |
| | | Mass ratio | 1.00 | 8.81 | - | 0.01 | 90.00 | 0.18 | * |
| | D4 | Type | (21) | Epoxy compound A | - | DMAP | Silica A/Boron nitride (Mass ratio 1/9) | Ester resin | S1 |
| | | Mass ratio | 1.00 | 8.81 | - | 0.01 | 90.00 | 0.18 | * |
| | D5 | Type | (21) | Epoxy compound A | - | DMAP | Alumina A/Boron nitride (Mass ratio 1/9) | Ester resin | S1 |
| | | Mass ratio | 1.00 | 8.81 | - | 0.01 | 90.00 | 0.18 | * |
| | D6 | Type | (21) | Epoxy compound A | - | Imidazole | Alumina A | Phenol resin | S1 |
| | | Mass ratio | 1.00 | 8.81 | - | 0.01 | 90.00 | 0.18 | * |
| | D7 | Type | (21) | Epoxy compound A | - | Imidazole | Alumina B | Phenol resin | S1 |
| | | Mass ratio | 1.00 | 9.27 | - | 0.02 | 89.47 | 0.19 | * |
| | D8 | Type | (39) | Epoxy compound A | - | DMAP | Silica A/Boron nitride (Mass ratio 1/9) | Ester resin | S1 |
| | | Mass ratio | 1.00 | 8.81 | - | 0.01 | 90.00 | 0.18 | * |
| | D9 | Type | (43) | Epoxy compound A | - | DMAP | Silica A/Boron nitride (Mass ratio 1/9) | Ester resin | S1 |
| | | Mass ratio | 1.00 | 8.81 | - | 0.01 | 90.00 | 0.18 | * |
| | D10 | Type | (44) | Epoxy compound A | - | DMAP | Silica A/Boron nitride (Mass ratio 1/9) | Ester resin | S1 |
| | | Mass ratio | 1.00 | 8.81 | - | 0.01 | 90.00 | 0.18 | * |
| | D11 | Type | (45) | Epoxy compound A | - | DMAP | Silica A/Boron nitride (Mass ratio 1/9) | Ester resin | S1 |
| | | Mass ratio | 1.00 | 8.81 | - | 0.01 | 90.00 | 0.18 | * |
| | D12 | Type | (39) | Epoxy compound F | - | Imidazole | Alumina A | Phenol resin | S1 |
| | | Mass ratio | 1.00 | 8.81 | - | 0.01 | 89.99 | 0.19 | * |
| | D13 | Type | (39) | Epoxy compound G | - | Imidazole | Alumina A | Phenol resin | S1 |
| | | Mass ratio | 1.00 | 8.81 | - | 0.01 | 89.99 | 0.19 | * |
| | D14 | Type | (39) | Epoxy compound A | - | Imidazole | Alumina A | Phenol resin | S1 |
| | | Mass ratio | 1.00 | 7.16 | - | 0.50 | 89.56 | 1.79 | * |
| | D15 | Type | (39) | Epoxy compound E | - | Imidazole | Alumina A | Phenol resin | S1 |
| | | Mass ratio | 1.00 | 7.16 | - | 0.50 | 89.56 | 1.79 | * |
| | D16 | Type | (39) | Epoxy compound A | - | Imidazole | Alumina A | Rubber A | S1 |
| | | Mass ratio | 1.00 | 7.16 | - | 0.50 | 89.56 | 1.79 | * |
| | D17 | Type | (39) | Epoxy compound A | - | Imidazole | Alumina A | Rubber B | S1 |
| | | Mass ratio | 1.00 | 7.16 | - | 0.50 | 89.56 | 1.79 | * |
| | D18 | Type | (39) | Epoxy compound A/Vinyl compound B | - | Imidazole | Alumina A | - | S1 |
| | | Mass ratio | 1.00 | 7.16/1.79 | - | 0.50 | 89.56 | - | * |
| | D19 | Type | (43) | Epoxy compound A | - | Imidazole | Alumina A | - | S1 |
| | | Mass ratio | 1.00 | 8.99 | - | 0.10 | 89.91 | - | * |
| | D20 | Type | (43) | Epoxy compound A | - | Imidazole | Silica A/Boron nitride (Mass ratio 1/9) | - | S1 |
| | | Mass ratio | 1.00 | 8.99 | - | 0.10 | 89.91 | - | * |
| Comparative Examples | 35 | Type | - | Epoxy compound A | | Imidazole | Alumina A | Phenol resin | S1 |
| | | Mass ratio | - | 9.37 | | 0.02 | 90.42 | 0.20 | * |
| | 36 | Type | - | Epoxy compound A | | DMAP | Silica A/Boron nitride (Mass ratio 1/9) | Ester resin | S1 |
| | | Mass ratio | - | 9.37 | | 0.02 | 90.42 | 0.20 | * |

| | | | | | | | | | |
|---|---|---|---|---|---|---|---|---|---|
| * An adjustment was made so solid content concentration as to be 65% by mass. | | | | | | | | | |

**[Table 6]**

| | | Dispersibility | Dispersion stability | Reactivity |
|---|---|---|---|---|
| | B1 | - | - | A |
| | B2 | - | - | A |
| | B3 | - | - | A |
| | B4 | - | - | A |
| | B5 | - | - | A |
| | B6 | - | - | A |
| | B7 | - | - | A |
| | B8 | - | - | A |
| | B9 | A | A | A |
| | B10 | A | A | A |
| | D1 | A | A | - |
| | D2 | A | A | - |
| | D3 | A | A | - |
| | D4 | A | A | - |
| | D5 | A | A | - |
| Examples | D6 | A | A | - |
| | D7 | A | A | - |
| | D8 | A | A | - |
| | D9 | A | A | - |
| | D10 | A | A | - |
| | D11 | A | A | - |
| | D12 | A | A | - |
| | D13 | A | A | - |
| | D14 | A | A | - |
| | D15 | A | A | - |
| | D16 | A | A | - |
| | D17 | A | A | - |
| | D18 | A | A | - |
| | D19 | A | A | - |
| | D20 | A | A | - |
| Comparative Examples | 35 | B | B | - |
| | 36 | B | B | - |

It should be noted that abbreviations of the curable compounds, the curing aids, the reaction diluents, the fillers, other polymers, and the solvents in Tables 2 to 5 are as follows.

### <Curable compound>

· Cyanate compound A: 2,2-bis(4-cyanatophenyl)propane (manufactured by Tokyo Chemical Industry Co., Ltd.)
· Cyanate compound B: 1,3-bis[2-(4-cyanatophenyl)propan-2-yl] benzene
· Epoxy compound A: 2,2-bis(4-glycidyloxyphenyl)propane (manufactured by Tokyo Chemical Industry Co., Ltd.)
· Epoxy compound B: jER 872 (manufactured by Mitsubishi Chemical Corporation)
· Epoxy compound C: XD-1000 (manufactured by Nippon Kayaku Co., Ltd.)
· Epoxy compound D: Denacol EX-991L (manufactured by Nagase ChemteX Corporation)
· Epoxy compound E: jER 604 (manufactured by Mitsubishi Chemical Corporation)
· Epoxy compound F: Teisan Resin SG-P3 (manufactured by Nagase ChemteX Corporation)
· Epoxy compound G: Teisan Resin SG-80H (manufactured by Nagase ChemteX Corporation)
· Maleimide compound A: bis(3-ethyl-5-methyl-4-maleimidophenyl)methane (manufactured by Tokyo Chemical Industry Co., Ltd.)
· Maleimide compound B: ULTIMID 3000A (manufactured by ABC NANOTECH., LTD.)
· Acrylic compound: 1,9-bis(acryloyloxy)nonane (manufactured by Tokyo Chemical Industry Co., Ltd.)
· Allyl compound: triallyl isocyanurate (manufactured by Tokyo Chemical Industry Co., Ltd.)
· Vinyl compound A: divinylbenzene (m-, p-mixture manufactured by Tokyo Chemical Industry Co., Ltd.)
· Vinyl compound B: Ricon 100 (manufactured by Cray Valley)
· Methylol compound: 2,4,6-tris[bis(methoxymethyl)amino]-1,3,5-triazine (manufactured by Tokyo Chemical Industry Co., Ltd.)
· Oxazoline compound: 1,3-bis(4,5-dihydro-2-oxazolyl)benzene (manufactured by Tokyo Chemical Industry Co., Ltd.)
· Oxazine compound: 2,2-bis(3,4-dihydro-3-methyl-2H-1,3-benzoxazine)propane (a compound synthesized with reference to Macromolecules 2003, 36, 8320-8329)
· Oxetane compound: (3-ethyloxetane-3-yl)methyl methacrylate (manufactured by Tokyo Chemical Industry Co., Ltd. )

### <Curing aid>

· Zinc octylate: zinc octylate (manufactured by NIHON KAGAKU SANGYO CO., LTD.)
· Imidazole: 1-benzyl-2-methylimidazole (manufactured by Tokyo Chemical Industry Co., Ltd.)
· Organic peroxide: dicumyl peroxide (manufactured by NOF CORPORATION)
· Borate salt: 4-acetoxyphenyl(dimethyl)sulfonium=tetrakis(pentafluorophenyl)b orate (manufactured by Sanshin Chemical Industry Co., Ltd.)
· DMAP: 4-dimethylaminopyridine (manufactured by Tokyo Chemical Industry Co., Ltd.)

### <Reaction diluent>

· Reactive diluent A: 4-methylcyclohexane-1,2-dicarboxylic anhydride (cis-, tarns-mixture) (manufactured by Tokyo Chemical Industry Co., Ltd.)
· Reactive diluent B: o-cresyl glycidyl ether (manufactured by Yokkaichi Chemical Company Limited)

### <Filler>

· Silica A: ADMAFINE SC2500-SQ (manufactured by ADMATECHS COMPANY LIMITED)
· Silica B: ADMAFINE SC2500-SXJ (manufactured by ADMATECHS COMPANY LIMITED)
· Silica C: ADMAFINE SC2500-SQ-SPJ (manufactured by ADMATECHS COMPANY LIMITED)
· Boron nitride: boron nitride UHP-1K (manufactured by Showa Denko K.K.)
· Alumina A: DAW-01DC (manufactured by Denka Company Limited)
· Alumina B: CB-P02 (manufactured by Showa Denko K.K.)

### <Other Polymers>

· Ester resin: HPC-8000-65T (manufactured by DIC Corporation)
· Phenol resin: PHENOLITE TD-2090 (manufactured by DIC Corporation)
· Rubber A: Tuftec M1913 (manufactured by Asahi Kasei Corporation)
· Rubber B: Tuftec MP10 (manufactured by Asahi Kasei Corporation)

### <Solvent>

### S1: toluene/methyl ethyl ketone = 1/1 (mass ratio)

The present polymer is excellent in heat resistance, is soluble in a general-purpose solvent, and is excellent in applicability and adhesion to a substrate such as a copper substrate and/or a gold substrate. Moreover, a cured product (cured product layer) excellent in heat resistance and excellent in applicability and adhesion to a substrate such as a copper substrate and/or a gold substrate can be formed according to the present composition obtained by appropriately combining the present polymer with, for example, various curable compounds or fillers.

For this reason, the present polymer and the present composition can be suitably used in a wide range of fields such as structural materials used in transport machine industries such as aircraft industry and automobile industry, and electrical and electronic materials used in electrical and electronic industry.

## Claims

1. A composition comprising a polymer comprising a repeating unit represented by Formula (1) set forth below: 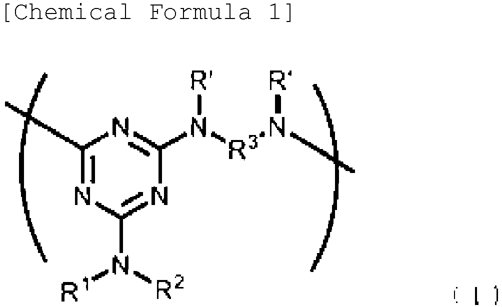 In Formula (1), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, and -NR¹R² may be a nitrogen-containing heterocyclic group which has 5 to 20 ring-constituting atoms and in which R¹ and R² are bonded to each other.

2. The composition according to claim 1, wherein the polymer further comprises a repeating unit represented by Formula (2) set forth below: 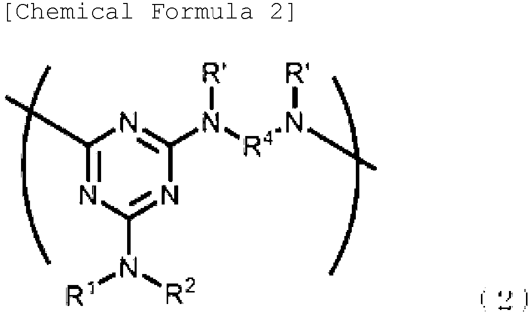 In Formula (2), R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, R⁴ is a divalent aromatic hydrocarbon group having 6 to 30 carbon atoms, a divalent alicyclic hydrocarbon group having 5 to 20 carbon atoms, a divalent chain hydrocarbon group having 1 to 20 carbon atoms, a divalent group represented by -(R⁴¹-O)ₘ-, a divalent silicon-containing group, a group in which two or more groups selected from these groups are combined, a group in which at least a part of these groups is substituted with at least one selected from an oxygen atom, a nitrogen atom and a sulfur atom, or a group in which a part of these groups is substituted with a substituent, R⁴¹ is independently an alkylene having 2 to 4 carbon atoms, m is an integer in the range from 1 to 70, - NR¹R² may be a nitrogen-containing heterocyclic group which has 5 to 20 ring-constituting atoms and in which R¹ and R² are bonded to each other, -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.

3. The composition according to claim 1 or 2, further comprising a curable compound (C).

4. The composition according to claim 1 or 2, further comprising a curing aid (D).

5. The composition according to claim 1 or 2, further comprising a solvent.

6. The composition according to claim 3, wherein the curable compound (C) is at least one selected from the group consisting of epoxy compounds, cyanate ester compounds, vinyl compounds, silicone compounds, oxazine compounds, maleimide compounds, allyl compounds, oxetane compounds, methylol compounds, (meth)acrylic compounds, oxazoline compounds, and propargyl compounds.

7. A cured product obtained by curing the composition according to claim 1 or 2.

8. A laminated body comprising a substrate and a cured product layer formed by using the composition according to claim 1 or 2.

9. An electronic component comprising the laminated body according to claim 8.

10. A polymer comprising a repeating unit represented by Formula (1) set forth below and a repeating unit represented by Formula (2) set forth below: 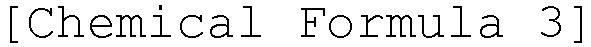 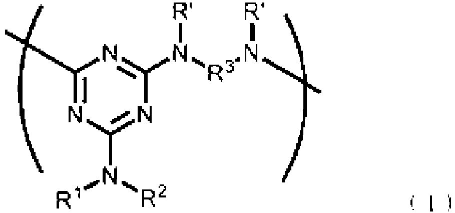 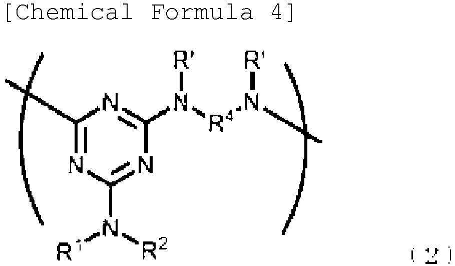 In Formulae (1) and (2), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, R⁴ is a divalent aromatic hydrocarbon group having 6 to 30 carbon atoms, a divalent alicyclic hydrocarbon group having 5 to 20 carbon atoms, a divalent chain hydrocarbon group having 1 to 20 carbon atoms, a divalent group represented by -(R⁴¹-O)ₘ-, a divalent silicon-containing group, a group in which two or more groups selected from these groups are combined, a group in which at least a part of these groups is substituted with at least one selected from an oxygen atom, a nitrogen atom and a sulfur atom, or a group in which a part of these groups is substituted with a substituent, R⁴¹ is independently an alkylene having 2 to 4 carbon atoms, m is an integer in the range from 1 to 70, - NR¹R² may be a nitrogen-containing heterocyclic group which has 5 to 20 ring-constituting atoms and in which R¹ and R² are bonded to each other, -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.

11. A molded body obtained by molding the polymer according to claim 10.

12. A laminated body comprising a substrate and a layer formed by using the polymer according to claim 10.

13. An electronic component comprising the laminated body according to claim 12.

14. A polymer comprising a repeating unit represented by Formula (1) set forth below, or a polymer that comprises a repeating unit represented by Formula (1) set forth below and a repeating unit represented by Formula (2) set forth below, and
comprises, at a terminal, at least one group selected from a phenolic hydroxyl group, an allyl group, a vinyl group, a (meth)acryloyl group, a maleimide group, a propargyl group, an ethynyl group, an aromatic hydrocarbon group, an aliphatic hydrocarbon group, or a heterocyclic group: 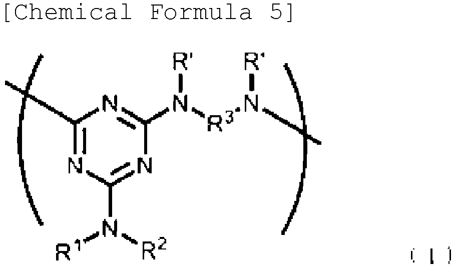 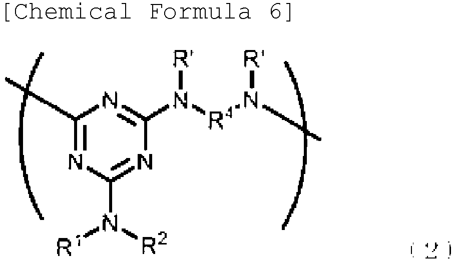 In Formulae (1) and (2), -N(R')-R³-N(R')- is a structure derived from a dimer diamine that is unsubstituted or substituted by a substituent, R', R¹, and R² each are independently a hydrogen atom, a halogen atom, a hydrocarbon group that is unsubstituted or substituted by a substituent and has 1 to 20 carbon atoms, a heterocyclic aliphatic group that is unsubstituted or substituted by a substituent and has 3 to 20 carbon atoms, or a heterocyclic aromatic group that is unsubstituted or substituted by a substituent and has 3 to 20 carbon atoms, R⁴ is a divalent aromatic hydrocarbon group having 6 to 30 carbon atoms, a divalent alicyclic hydrocarbon group having 5 to 20 carbon atoms, a divalent chain hydrocarbon group having 1 to 20 carbon atoms, a divalent group represented by -(R⁴¹-O)ₘ-, a divalent silicon-containing group, a group in which two or more groups selected from these groups are combined, a group in which at least a part of these groups is substituted with at least one selected from an oxygen atom, a nitrogen atom and a sulfur atom, or a group in which a part of these groups is substituted with a substituent, R⁴¹ is independently an alkylene having 2 to 4 carbon atoms, m is an integer in the range from 1 to 70, - NR¹R² may be a nitrogen-containing heterocyclic group which has 5 to 20 ring-constituting atoms and in which R¹ and R² are bonded to each other, -N(R')-R⁴- may be a divalent monocyclic nitrogen-containing heterocyclic group which has 5 to 20 ring-constituting atoms and in which R' and R⁴ are bonded to each other, and -N(R')-R⁴-N(R')- may be a divalent monocyclic nitrogen-containing heterocyclic group which has 5 to 20 ring-constituting atoms and in which two R' are bonded to each other.
